(19) Europäisches Patentamt / European Patent Office / Office européen des brevets

(11) **EP 4 294 047 A1**

(12) **EUROPEAN PATENT APPLICATION**
published in accordance with Art. 153(4) EPC

(43) Date of publication:
**20.12.2023 Bulletin 2023/51**

(21) Application number: **22762559.7**

(22) Date of filing: **02.03.2022**

(51) International Patent Classification (IPC):
**H04R 5/02** (2006.01)

(52) Cooperative Patent Classification (CPC):
**H04R 5/02; H04S 5/00; Y02T 90/00**

(86) International application number:
**PCT/CN2022/078823**

(87) International publication number:
**WO 2022/184096 (09.09.2022 Gazette 2022/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.03.2021 CN 202110246382**

(71) Applicant: **Huawei Technologies Co., Ltd.**
**Shenzhen, Guangdong 518129 (CN)**

(72) Inventors:
• **GAO, Yuan**
  **Shenzhen, Guangdong 518129 (CN)**
• **LIU, Shuai**
  **Shenzhen, Guangdong 518129 (CN)**
• **WANG, Bin**
  **Shenzhen, Guangdong 518129 (CN)**
• **WANG, Zhe**
  **Shenzhen, Guangdong 518129 (CN)**
• **QU, Tianshu**
  **Beijing 100871 (CN)**
• **XU, Jiahao**
  **Beijing 100871 (CN)**

(74) Representative: **Gill Jennings & Every LLP**
**The Broadgate Tower**
**20 Primrose Street**
**London EC2A 2ES (GB)**

(54) **HOA COEFFICIENT ACQUISITION METHOD AND APPARATUS**

(57) This application provides a method and an apparatus for obtaining an HOA coefficient. The method for obtaining an HOA coefficient includes: obtaining location information of a virtual speaker on a preset spherical surface, where the preset spherical surface includes M circles of longitude and N circles of latitude; obtaining, based on the location information and a preset reference trigonometric function table, a trigonometric function value corresponding to the location information, where the reference trigonometric function table includes an elevation trigonometric function table and/or an azimuth trigonometric function table, the elevation trigonometric function table includes a plurality of trigonometric function values corresponding to elevation indexes of a plurality of first reference points on a first circle of longitude, the first circle of longitude is one of the M circles of longitude, the azimuth trigonometric function table includes a plurality of trigonometric function values corresponding to azimuth indexes of a plurality of second reference points on a first circle of latitude, and the first circle of latitude is one of the N circles of latitude; and obtaining an HOA coefficient for the virtual speaker based on the trigonometric function value corresponding to the location information. In this application, an amount of calculation in a preliminary stage can be reduced, and storage space can be saved.

400

| Obtain location information of a virtual speaker on a preset spherical surface, where the location information includes elevation information and/or azimuth information | 401 |

| Obtain, based on the location information and a preset reference trigonometric function table, a trigonometric function value corresponding to the location information | 402 |

| Obtain an HOA coefficient for the virtual speaker based on the trigonometric function value corresponding to the location information | 403 |

FIG. 4

## Description

This application claims priority to Chinese Patent Application No. 202110246382.6, filed with the China National Intellectual Property Administration on March 5, 2021 and entitled "METHOD AND APPARATUS FOR OBTAINING HOA COEFFICIENT", which is incorporated herein by reference in its entirety.

## TECHNICAL FIELD

This application relates to audio processing technologies, and in particular, to a method and an apparatus for obtaining an HOA coefficient.

## BACKGROUND

A three-dimensional audio technology is an audio technology for obtaining, processing, transmitting, rendering, and replaying sound events and three-dimensional sound field information in the real world through a computer, signal processing, or the like. The three-dimensional audio technology enables sound to have a strong sense of space, envelopment, and immersion, and provides people with "immersive" auditory experience. Currently, a mainstream three-dimensional audio technology is a higher order ambisonics (higher order ambisonics, HOA) technology. The HOA technology has the following features: Recording and encoding are irrelevant to a speaker layout in a replay stage, and data in an HOA format is rotatable. Therefore, the HOA technology has higher flexibility in three-dimensional audio replay, and therefore has gained more extensive attention and research.

In the HOA technology, an HOA signal is converted into an actual speaker signal for replay; or an HOA signal is converted into a virtual speaker signal, and then the virtual speaker signal is mapped to a binaural signal for replay. In the foregoing process, calculation of an HOA coefficient is a key step. In the related technology, an HOA coefficient is calculated based on a P-order spherical harmonic expansion formula.

However, in the foregoing method, an amount of calculation is large, and a requirement for storage space is high.

## SUMMARY

This application provides a method and an apparatus for obtaining an HOA coefficient, to reduce an amount of calculation in a preliminary stage and save storage space.

According to a first aspect, this application provides a method for obtaining an HOA coefficient, including: obtaining location information of a virtual speaker on a preset spherical surface, where the location information includes elevation information and/or azimuth information, the preset spherical surface includes M circles of longitude and N circles of latitude, an intersection between the circle of longitude and the circle of latitude is referred to as a reference point, N reference points located on one circle of longitude are arranged at equal spacings, and M reference points located on one circle of latitude are arranged at equal spacings; obtaining, based on the location information and a preset reference trigonometric function table, a trigonometric function value corresponding to the location information, where the reference trigonometric function table includes an elevation trigonometric function table and/or an azimuth trigonometric function table, the elevation trigonometric function table includes a plurality of trigonometric function values corresponding to elevation information of a plurality of first reference points, the plurality of first reference points are reference points on a first circle of longitude, a quantity of the plurality of first reference points is not less than $\lfloor N/4 \rfloor + 1$, $\lfloor \ \rfloor$ indicates rounding down, the first circle of longitude is one of the M circles of longitude, the azimuth trigonometric function table includes a plurality of trigonometric function values corresponding to azimuth information of a plurality of second reference points, the plurality of second reference points are reference points on a first circle of latitude, a quantity of the plurality of second reference points is not less than $\lfloor M/4 \rfloor + 1$, and the first circle of latitude is one of the N circles of latitude; and obtaining a higher order ambisonics HOA coefficient for the virtual speaker based on the trigonometric function value corresponding to the location information.

In this application, only trigonometric function values (an elevation trigonometric function table) of a quarter of all reference points on a circle of longitude on the preset spherical surface and/or trigonometric function values (an azimuth trigonometric function table) of a quarter of all reference points on a circle of latitude on the preset spherical surface need to be pre-obtained, and trigonometric function values at any angles ranging from 0° to 360° may be obtained based on the trigonometric function table. In this way, an amount of calculation in a preliminary stage can be reduced. In addition, because a quantity of angles in the trigonometric function table is reduced, an amount of data, that needs to be stored, of the trigonometric function table is also correspondingly reduced, so that storage space can be saved.

The preset spherical surface includes the M circles of longitude and the N circles of latitude, the intersection between the circle of longitude and the circle of latitude is referred to as the reference point, N reference points located on one circle of longitude are arranged at equal spacings, and M reference points located on one circle of latitude are arranged at equal spacings. To ensure that the reference points can cover all virtual speakers as much as possible, the following condition may be met: $M \times N \geq K$, where K is a total quantity of virtual speakers. For example, a value of K may be 2048, 1024, or 530. In this application, because azimuth information between every two adjacent circles of longitude is equal, that is, the M circles of longitude are evenly distributed on the spherical surface, N reference points located on one circle of longitude are arranged at equal spacings; and because elevation information between every two adjacent circles of latitude is equal, that is, the N circles of latitude are evenly distributed on the spherical surface, M reference points located on one circle of latitude are arranged at equal spacings. Correspondingly, because N reference points located on one circle of longitude are arranged at equal spacings, elevation information differences between every two adjacent reference points located on one circle of longitude are equal; and because N reference points located on one circle of longitude are arranged at equal spacings, azimuth information differences between every two adjacent reference points located on one circle of longitude are equal.

The virtual speaker may be any virtual speaker disposed for sound rendering. The location information of the virtual speaker on the spherical surface includes elevation (elevation) information and/or azimuth information. An included angle between a horizontal plane (for example, a plane on which the equator is located) and a connection line between a location of the virtual speaker and a center of the earth is the elevation information (or referred to as information about the angle made with the horizon) of the location information of the virtual speaker; and an included angle between a specified initial direction and a projection, on the horizontal plane, of the connection line between the location of the virtual speaker and the center of the earth is the azimuth information of the location information of the virtual speaker. Optionally, the azimuth information in this application may also be referred to as an azimuth (azimuth).

The reference trigonometric function table includes the elevation trigonometric function table and/or the azimuth trigonometric function table.

The elevation trigonometric function table includes the plurality of trigonometric function values corresponding to the elevation information of the plurality of first reference points. The plurality of first reference points are reference points on the first circle of longitude. The quantity of the plurality of first reference points is not less than $\lfloor N/4 \rfloor + 1$, where $\lfloor \ \rfloor$ indicates rounding down. The first circle of longitude is one of the M circles of longitude.

In this application, any one of the M circles of longitude is selected as the first circle of longitude, and reference points (namely, the plurality of first reference points) used for calculating the elevation trigonometric function table are selected from the N reference points on the first circle of longitude. According to a principle of a trigonometric function, an angle range of 0° (0) to 360° ($2\pi$) may be divided into four sub-ranges: 0° (0) to 90° ($\pi/2$), 90° ($\pi/2$) to 180° ($\pi$), 180° ($\pi$) to 270° ($3\pi/2$), and 270° ($3\pi/2$) to 360° ($2\pi$). A trigonometric function value calculated by using any one of the four sub-ranges may be extended to a trigonometric function value within the angle range of 0° (0) to 360° ($2\pi$). Therefore, in this application, during selection of the plurality of first reference points, the quantity of the plurality of first reference points is not less than $\lfloor N/4 \rfloor + 1$. To be specific, at least a quarter of the N reference points on the first circle of longitude are selected as the plurality of first reference points.

Optionally, the elevation information of the plurality of first reference points may belong to one of the four sub-ranges. For example, the elevation information of the plurality of first reference points is within the sub-range of 0° (0) to 90° ($\pi/2$), or the elevation information of the plurality of first reference points is within the sub-range of 90° ($\pi/2$) to 180° ($\pi$), or the elevation information of the plurality of first reference points is within the sub-range of 180° ($\pi$) to 270° ($3\pi/2$), or the elevation information of the plurality of first reference points is within the sub-range of 270° ($3\pi/2$) to 360° ($2\pi$).

Optionally, the elevation information of the plurality of first reference points may belong to at least two of the four sub-ranges. For example, elevation information of a first part of the plurality of first reference points is within the sub-range of 0° (0) to 90° ($\pi/2$), and elevation information of a second part of reference points is within the sub-range of 90° ($\pi/2$) to 180° ($\pi$), where the elevation information of the two parts of reference points does not overlap during calculation of a trigonometric function value; or elevation information of a part of the plurality of first reference points is within the sub-range of 90° ($\pi/2$) to 180° ($\pi$), and elevation information of another part of reference points is within the sub-range of 180° ($\pi$) to 270° ($3\pi/2$), where the elevation information of the two parts of reference points does not overlap during calculation of a trigonometric function value; or elevation information of a part of the plurality of first reference points is within the sub-range of 180° ($\pi$) to 270° ($3\pi/2$), and elevation information of another part of reference points is within the sub-range of 270° ($3\pi/2$) to 360° ($2\pi$), where the elevation information of the two parts of reference points does not overlap during calculation of a trigonometric function value; or elevation information of a first part of the plurality of first reference points is within the sub-range of 0° (0) to 90° ($\pi/2$), elevation information of a second part of reference points is within the sub-range of 90° ($\pi/2$) to 180° ($\pi$), and elevation information of a third part of reference points is within the sub-range of 180° ($\pi$) to 270° ($3\pi/2$), where the elevation information of the three parts of reference points does not overlap during calculation of a trigonometric function value; or elevation information of a first part of the plurality of first reference points is within the sub-range of 90° (π/2) to 180° (π), elevation information of a second part of reference points is within the sub-range of 180° (π) to 270° (3π/2), and elevation information of a third part of reference points is within the sub-range of 270° (3π/2) to 360° (2π), where the elevation information of the three parts of reference points does not overlap during calculation of a trigonometric function value; or elevation information of a first part of the plurality of first reference points is within the sub-range of 0° (0) to 90° (π/2), elevation information of a second part of reference points is within the sub-range of 90° (π/2) to 180° (π), elevation information of a third part of reference points is within the sub-range of 180° (π) to 270° (3π/2), and elevation information of a fourth part of reference points is within the sub-range of 270° (3π/2) to 360° (2π), where the elevation information of the four parts of reference points does not overlap during calculation of a trigonometric function value.

The not overlapping may mean that trigonometric function values calculated by using elevation information belonging to different sub-ranges are not equal. For example, there are a total of four first reference points (n1, n2, n3, and n4), where elevation information of n1 is 0, elevation information of n2 is π/6, elevation information of n3 is π/3, and elevation information of n4 is π/2; or elevation information of n1 is 0, elevation information of n2 is 2/3π, elevation information of n3 is 4/3π, and elevation information of n4 is 2π. It should be noted that, in this application, a sub-range to which the elevation information of the plurality of first reference points belongs is not specifically limited, provided that the trigonometric function values of the elevation information of the plurality of first reference points can cover trigonometric function values at all angles within one of the sub-ranges.

Correspondingly, a value range of the elevation information of the location information is 0 to 2π.

In this application, the plurality of trigonometric functions corresponding to the elevation information of the plurality of first reference points may be sine function values or cosine function values.

Optionally, a sine function value corresponding to elevation information of an $i^{th}$ first reference point meets the following formula (1):

$$\sin\_table\_N(i) = \sin\left(\frac{\pi r_i}{2N'} \times i\right) \tag{1},$$

where i=0, 1, ..., and N', $N'=\lfloor N/4 \rfloor$, and r; indicates a radius of the first circle of longitude.

Optionally, a cosine function value corresponding to elevation information of an $i^{th}$ first reference point meets the following formula (2):

$$\cos\_table\_N(i) = \cos\left(\frac{\pi r_i}{2N'} \times i\right) \tag{2},$$

where i=0, 1, ..., and N', $N'=\lfloor N/4 \rfloor$, and r; indicates a radius of the first circle of longitude.

The azimuth trigonometric function table includes the plurality of trigonometric function values corresponding to the azimuth information of the plurality of second reference points. The plurality of second reference points are reference points on the first circle of latitude. The quantity of the plurality of second reference points is not less than $\lfloor M/4 \rfloor +1$, where ⌊ ⌋ indicates rounding down. The first circle of latitude is one of the N circles of latitude.

In this application, any one of the N circles of latitude is selected as the first circle of latitude, and reference points (namely, the plurality of second reference points) used for calculating the azimuth trigonometric function table are selected from the M reference points on the first circle of latitude. Similarly, according to a principle of a trigonometric function, an angle range of 0° (0) to 360° (2π) may be divided into four sub-ranges: 0° (0) to 90° (π/2), 90° (π/2) to 180° (π), 180° (π) to 270° (3π/2), and 270° (3π/2) to 360° (2π). A trigonometric function value calculated by using any one of the four sub-ranges may be extended to a trigonometric function value within the angle range of 0° (0) to 360° (2π). Therefore, in this application, during selection of the plurality of second reference points, the quantity of the plurality of second reference points is not less than $\lfloor M/4 \rfloor +1$. To be specific, at least a quarter of the M reference points on the first circle of latitude are selected as the plurality of second reference points.

Optionally, the azimuth information of the plurality of second reference points may belong to one of the four sub-ranges. For example, the azimuth information of the plurality of second reference points is within the sub-range of 0° (0) to 90° (π/2), or the azimuth information of the plurality of second reference points is within the sub-range of 90° (π/2) to 180° (π), or the azimuth information of the plurality of second reference points is within the sub-range of 180° (π) to 270° (3π/2), or the azimuth information of the plurality of second reference points is within the sub-range of 270° (3π/2) to 360° (2π).

Optionally, the azimuth information of the plurality of second reference points may belong to at least two of the four sub-ranges. For example, azimuth information of a first part of the plurality of second reference points is within the sub-range of 0° (0) to 90° (π/2), and azimuth information of a second part of reference points is within the sub-range of 90° (π/2) to 180° (π), where the azimuth information of the two parts of reference points does not overlap during calculation of a trigonometric function value; or azimuth information of a first part of the plurality of second reference points is within the sub-range of 90° (π/2) to 180° (π), and azimuth information of a second part of reference points is within the sub-range of 180° (π) to 270° (3π/2), where the azimuth information of the two parts of reference points does not overlap during calculation of a trigonometric function value; or azimuth information of a first part of the plurality of second reference points is within the sub-range of 180° (π) to 270° (3π/2), and azimuth information of a second part of reference points is within the sub-range of 270° (3π/2) to 360° (2π), where the azimuth information of the two parts of reference points does not overlap during calculation of a trigonometric function value; or azimuth information of a first part of the plurality of second reference points is within the sub-range of 0° (0) to 90° (π/2), azimuth information of a second part of reference points is within the sub-range of 90° (π/2) to 180° (π), and azimuth information of a third part of reference points is within the sub-range of 180° (π) to 270° (3π/2), where the azimuth information of the three parts of reference points does not overlap during calculation of a trigonometric function value; or azimuth information of a first part of the plurality of second reference points is within the sub-range of 90° (π/2) to 180° (π), azimuth information of a second part of reference points is within the sub-range of 180° (π) to 270° (3π/2), and azimuth information of a third part of reference points is within the sub-range of 270° (3π/2) to 360° (2π), where the azimuth information of the three parts of reference points does not overlap during calculation of a trigonometric function value; or azimuth information of a first part of the plurality of second reference points is within the sub-range of 0° (0) to 90° (π/2), azimuth information of a second part of reference points is within the sub-range of 90° (π/2) to 180° (π), azimuth information of a third part of reference points is within the sub-range of 180° (π) to 270° (3π/2), and azimuth information of a fourth part of reference points is within the sub-range of 270° (3π/2) to 360° (2π), where the azimuth information of the four parts of reference points does not overlap during calculation of a trigonometric function value.

The not overlapping may mean that trigonometric function values calculated by using azimuth information belonging to different sub-ranges are not equal. For example, there are a total of four second reference points (n1, n2, n3, and n4), where azimuth information of n1 is 0, azimuth information of n2 is π/6, azimuth information of n3 is π/3, and azimuth information of n4 is π/2; or azimuth information of n1 is 0, azimuth information of n2 is 2/3π, azimuth information of n3 is 4/3π, and azimuth information of n4 is 2π. It should be noted that, in this application, a sub-range to which the azimuth information of the plurality of second reference points belongs is not specifically limited, provided that the trigonometric function values of the azimuth information of the plurality of second reference points can cover trigonometric function values at all angles within one of the sub-ranges.

Correspondingly, a value range of the azimuth information of the location information is 0 to 2π.

In this application, the plurality of trigonometric functions corresponding to the azimuth information of the plurality of second reference points may be sine function values or cosine function values.

Optionally, a sine function value corresponding to azimuth information of an i$^{th}$ second reference point meets the following formula (3):

$$\sin\_table\_M(j) = \sin\left(\frac{\pi r_j}{2M'} \times j\right) \tag{3},$$

where j=0, 1, ..., and M', $M'=\lfloor M/4 \rfloor$, and r$_j$ indicates a radius of the first circle of latitude.

Optionally, a cosine function value corresponding to azimuth information of an i$^{th}$ second reference point meets the following formula (4):

$$\cos\_table\_M(j) = \cos\left(\frac{\pi r_j}{2M'} \times j\right) \tag{4},$$

where j=0, 1, ..., and M', $M'=\lfloor M/4 \rfloor$, and r$_j$ indicates a radius of the first circle of latitude.

It should be noted that the elevation trigonometric function table and the azimuth trigonometric function table may be calculated and stored in advance, or may be calculated and stored in real time based on values of M and N. Optionally, because both an encoder and a decoder perform framing, during calculation of the HOA coefficient, when a value of M of a current audio frame is equal to a value of M of a previous audio frame, an azimuth trigonometric function table may not need to be recalculated during processing of the current frame, and an azimuth trigonometric function table of the previous audio frame may be directly used; and when a value of N of the current audio frame is equal to a value of N of the previous audio frame, an elevation trigonometric function table may not need to be recalculated during processing of the current frame, and an elevation trigonometric function table of the previous audio frame may be directly used.

In this application, a trigonometric function value corresponding to the elevation information of the location information of the virtual speaker on the preset spherical surface may be obtained based on the elevation information of the location information and the elevation trigonometric function table, and/or a trigonometric function value corresponding to the azimuth information of the location information of the virtual speaker on the preset spherical surface may be obtained based on the azimuth information of the location information and the azimuth trigonometric function table.

It can be learned that, for the location information of the virtual speaker on the preset spherical surface, the trigonometric function value corresponding to the location information may be obtained based on specific content included in the location information and specific content of the preset reference trigonometric function table. To be specific, the location information includes the elevation information, and the trigonometric function value corresponding to the elevation information of the location information may be obtained based on the elevation information and the reference trigonometric function table (if the elevation trigonometric function table exists, the elevation trigonometric function table is used; or if no elevation trigonometric function table exists, the azimuth trigonometric function table is used); and the location information includes the azimuth information, and the trigonometric function value corresponding to the azimuth information of the location information may be obtained based on the azimuth information and the reference trigonometric function table (if the azimuth trigonometric function table exists, the azimuth trigonometric function table is used; or if no azimuth trigonometric function table exists, the elevation trigonometric function table is used).

In this application, the trigonometric function value corresponding to the elevation information of the location information may be obtained by using the following several methods:

1. When the elevation information of the location information is equal to elevation information of a reference point of the plurality of first reference points, a trigonometric function value that is in the elevation trigonometric function table and that corresponds to the elevation information of the reference point is used as the trigonometric function value corresponding to the elevation information of the location information.

That the elevation information of the location information is equal to elevation information of a reference point of the plurality of first reference points indicates that elevation information corresponding to a location of the virtual speaker on the preset spherical surface is exactly equal to an angle in the elevation trigonometric function table, to be specific, the location of the virtual speaker on the preset spherical surface coincides with a location of a reference point selected for obtaining the elevation trigonometric function table. Therefore, the trigonometric function value of the elevation information may be directly queried from the elevation trigonometric function table.

2. When the elevation information of the location information is equal to elevation information of a reference point of N reference points other than the plurality of first reference points, the elevation information of the location information is converted into elevation information of a reference point of the plurality of first reference points, and a trigonometric function value that is in the elevation trigonometric function table and that corresponds to the elevation information of the reference point is used as the trigonometric function value corresponding to the elevation information of the location information.

That the elevation information of the location information is equal to elevation information of a reference point of N reference points other than the plurality of first reference points indicates that elevation information corresponding to a location of the virtual speaker on the preset spherical surface does not belong to an angle in the elevation trigonometric function table, and is equal to elevation information of another reference point on the first circle of longitude, to be specific, the location of the virtual speaker on the preset spherical surface coincides with a location of a reference point, where the reference point is not used for obtaining the elevation trigonometric function table, but elevation information of the reference point has a trigonometric function correspondence with an angle in the trigonometric function table. Therefore, the elevation information of the location information may be converted into elevation information of a reference point of the plurality of first reference points according to a principle of a trigonometric function; and then a trigonometric function value corresponding to the elevation information of the reference point of the plurality of first reference points is obtained through table lookup, and the trigonometric function value corresponding to the elevation information of the reference point of the plurality of first reference points is used as the trigonometric function value corresponding to the elevation information of the location information.

3. When the elevation information of the location information is not equal to elevation information of any reference point, elevation information of a reference point corresponding to the location information is obtained based on the elevation information of the location information. When the elevation information of the reference point corresponding to the location information is equal to elevation information of a reference point of the plurality of first reference points, a trigonometric function value that is in the elevation trigonometric function table and that corresponds to the elevation information of the reference point is used as the trigonometric function value corresponding to the elevation information of the location information. When the elevation information of the reference point corresponding to the location information is equal to elevation information of a reference point of N reference points other than the plurality of first reference points, the elevation information of the reference point corresponding to the location information is converted into elevation information of a reference point of the plurality of first reference points, and a trigonometric function value that is in the elevation trigonometric function table and that corresponds to the elevation information of the reference point is used as the trigonometric function value corresponding to the elevation information of the location information.

That the elevation information of the location information is not equal to elevation information of any reference point indicates that a location of the virtual speaker on the preset spherical surface is neither on a circle of longitude nor on a circle of latitude. Therefore, the elevation information of the reference point corresponding to the location information is first obtained; and then the trigonometric function value corresponding to the elevation information of the reference point is obtained according to the method 1 or the method 2, and the trigonometric function value corresponding to the elevation information of the reference point is used as the trigonometric function value corresponding to the elevation information of the location information.

Optionally, the location information may be represented by using an index, and the index may include an elevation index and an azimuth index. For example, on any circle of latitude, an azimuth of a reference point that is not distributed on the circle of latitude is set to 0, and then a corresponding azimuth index is obtained through conversion based on a preset conversion formula between an azimuth and an azimuth index. Because azimuth differences between any adjacent reference points on the circle of latitude are equal, azimuths of other reference points on the circle of latitude may be obtained, and azimuth indexes of the other reference points are obtained based on the conversion formula. It should be noted that a specific reference point, on the circle of latitude, whose azimuth is set to 0 is not specifically limited in this application. Similarly, because elevation differences between adjacent reference points along a direction of a circle of longitude meets the foregoing requirement, after a reference point whose elevation is 0 is set, elevations of other reference points may be obtained, and elevation indexes of all reference points on the circle of longitude may be obtained based on a preset conversion formula between an elevation and an elevation index. It should be noted that a specific reference point, on the circle of longitude, whose elevation is set to 0 is not specifically limited in this application. For example, the reference point may be a reference point on the equator, a reference point at the south pole, or a reference point at the north pole.

Optionally, the elevation $\varphi$ and the index $\varphi'$ of the elevation information meet the following formula (5) (to be specific, a conversion formula between an elevation and an elevation index):

$$\varphi' = \text{round}\left(\frac{\varphi}{2\pi r_i \times N}\right) \tag{5},$$

where $r_i$ indicates a radius of the first circle of longitude, and round() indicates rounding.

In this application, the trigonometric function value corresponding to the azimuth information of the location information may be obtained by using the following several methods.

1. When the azimuth information of the location information is equal to azimuth information of a reference point of the plurality of second reference points, a trigonometric function value that is in the azimuth trigonometric function table and that corresponds to the azimuth information of the reference point is used as the trigonometric function value corresponding to the azimuth information of the location information.

That the azimuth information of the location information is equal to azimuth information of a reference point of the plurality of second reference points indicates that azimuth information corresponding to a location of the virtual speaker on the preset spherical surface is exactly equal to an angle in the azimuth trigonometric function table, to be specific, the location of the virtual speaker on the preset spherical surface coincides with a location of a reference point selected for obtaining the azimuth trigonometric function table. Therefore, the trigonometric function value of the azimuth information may be directly queried from the azimuth trigonometric function table.

2. When the azimuth information of the location information is equal to azimuth information of a reference point of M reference points other than the plurality of second reference points, the azimuth information of the location information is converted into azimuth information of a reference point of the plurality of second reference points, and a trigonometric function value that is in the azimuth trigonometric function table and that corresponds to the azimuth information of the reference point is used as the trigonometric function value corresponding to the azimuth information of the location information.

That the azimuth information of the location information is equal to azimuth information of a reference point of M reference points other than the plurality of second reference points indicates that azimuth information corresponding to a location of the virtual speaker on the preset spherical surface does not belong to an angle in the azimuth trigonometric function table, and is equal to azimuth information of another reference point on the first circle of longitude, to be specific, the location of the virtual speaker on the preset spherical surface coincides with a location of a reference point, where the reference point is not used for obtaining the azimuth trigonometric function table, but azimuth information of the reference point has a trigonometric function correspondence with an angle in the trigonometric function table. Therefore, the azimuth information of the location information may be converted into azimuth information of a reference point of the plurality of second reference points according to a principle of a trigonometric function; and then a trigonometric function value corresponding to the azimuth information of the reference point of the plurality of second reference points is obtained through table lookup, and the trigonometric function value corresponding to the azimuth information of the reference point of the plurality of second reference points is used as the trigonometric function value corresponding to the azimuth information of the location information.

3. When the azimuth information of the location information is not equal to azimuth information of any reference point, azimuth information of a reference point corresponding to the location information is obtained based on the azimuth information of the location information. When the azimuth information of the reference point corresponding to the location information is equal to azimuth information of a reference point of the plurality of second reference points, a trigonometric function value that is in the azimuth trigonometric function table and that corresponds to the azimuth information of the reference point is used as the trigonometric function value corresponding to the azimuth information of the location information. When the azimuth information of the reference point corresponding to the location information is equal to azimuth information of a reference point of M reference points other than the plurality of second reference points, the azimuth information of the reference point corresponding to the location information is converted into azimuth information of a reference point of the plurality of second reference points, and a trigonometric function value that is in the azimuth trigonometric function table and that corresponds to the azimuth information of the reference point is used as the trigonometric function value corresponding to the azimuth information of the location information.

That the azimuth information of the location information is not equal to azimuth information of any reference point indicates that a location of the virtual speaker on the preset spherical surface is neither on a circle of longitude nor on a circle of latitude. Therefore, the azimuth information of the reference point corresponding to the location information is first obtained; and then the trigonometric function value corresponding to the azimuth information of the reference point is obtained according to the method 1 or the method 2, and the trigonometric function value corresponding to the azimuth information of the reference point is used as the trigonometric function value corresponding to the azimuth information of the location information.

Optionally, the azimuth $\theta$ and the index $\theta'$ of the azimuth information meet the following formula (6) (to be specific, a conversion formula between an azimuth and an azimuth index):

$$\theta' = \mathrm{round}\left(\frac{\theta}{2\pi r_j \times M}\right) \tag{6},$$

where $r_j$ indicates a radius of the first circle of latitude, and round() indicates rounding.

In this application, only trigonometric function values (an elevation trigonometric function table) of a quarter of all reference points on a circle of longitude on the preset spherical surface and/or trigonometric function values (an azimuth trigonometric function table) of a quarter of all reference points on a circle of latitude on the preset spherical surface need to be pre-obtained, and trigonometric function values at any angles ranging from 0° to 360° may be obtained based on the trigonometric function table. In this way, an amount of calculation in a preliminary stage can be reduced. In addition, because a quantity of angles in the trigonometric function table is reduced, an amount of data, that needs to be stored, of the trigonometric function table is also correspondingly reduced, so that storage space can be saved.

According to a second aspect, this application provides an apparatus for obtaining an HOA coefficient, including: an obtaining module, configured to obtain location information of a virtual speaker on a preset spherical surface, where the location information includes elevation information and/or azimuth information, the preset spherical surface includes M circles of longitude and N circles of latitude, an intersection between the circle of longitude and the circle of latitude is referred to as a reference point, N reference points located on one circle of longitude are arranged at equal spacings, and M reference points located on one circle of latitude are arranged at equal spacings; and a calculation module, configured to: obtain, based on the location information and a preset reference trigonometric function table, a trigonometric function value corresponding to the location information, where the reference trigonometric function table includes an elevation trigonometric function table and/or an azimuth trigonometric function table, the elevation trigonometric function table includes a plurality of trigonometric function values corresponding to elevation indexes of a plurality of first reference points, the plurality of first reference points are reference points on a first circle of longitude, a quantity of the plurality of first reference points is not less than $\lfloor N/4 \rfloor + 1$, $\lfloor \ \rfloor$ indicates rounding down, the first circle of longitude is one of the M circles of longitude, the azimuth trigonometric function table includes a plurality of trigonometric function values corresponding to azimuth indexes of a plurality of second reference points, the plurality of second reference points are reference points on a first circle of latitude, a quantity of the plurality of second reference points is not less than $\lfloor M/4 \rfloor + 1$, and the first circle of latitude is one of the N circles of latitude; and obtain a higher order ambisonics HOA coefficient for the virtual speaker based on the trigonometric function value corresponding to the location information.

In a possible implementation, the calculation module is specifically configured to: obtain, based on the elevation information of the location information and the elevation trigonometric function table, a trigonometric function value corresponding to the elevation information of the location information; and/or obtain, based on the azimuth information of the location information and the azimuth trigonometric function table, a trigonometric function value corresponding to the azimuth information of the location information.

In a possible implementation, the calculation module is specifically configured to: when the elevation information of the location information corresponds to an elevation index of a reference point of the plurality of first reference points, use, as the trigonometric function value corresponding to the elevation information of the location information, a trigonometric function value that is in the elevation trigonometric function table and that corresponds to the elevation index of the reference point; or when the elevation information of the location information corresponds to an elevation index of a reference point of N reference points other than the plurality of first reference points, convert the elevation index of the reference point of the N reference points other than the plurality of first reference points into an elevation index of a reference point of the plurality of first reference points, and use, as the trigonometric function value corresponding to the elevation information of the location information, a trigonometric function value that is in the elevation trigonometric function table and that corresponds to the elevation index of the reference point; or when the elevation information of the location information does not correspond to an elevation index of any reference point, obtain, based on the elevation information of the location information, elevation information of a reference point corresponding to the elevation information of the location information; and when the elevation information of the reference point corresponding to the elevation information of the location information corresponds to an elevation index of a reference point of the plurality of first reference points, use, as the trigonometric function value corresponding to the elevation information of the location information, a trigonometric function value that is in the elevation trigonometric function table and that corresponds to the elevation index of the reference point; or when the elevation information of the reference point corresponding to the elevation information of the location information corresponds to an elevation index of a reference point of N reference points other than the plurality of first reference points, convert the elevation index of the reference point of the N reference points other than the plurality of first reference points into an elevation index of a reference point of the plurality of first reference points, and use, as the trigonometric function value corresponding to the elevation information of the location information, a trigonometric function value that is in the elevation trigonometric function table and that corresponds to the elevation index of the reference point.

In a possible implementation, the calculation module is specifically configured to: when the azimuth information of the location information corresponds to an azimuth index of a reference point of the plurality of second reference points, use, as the trigonometric function value corresponding to the azimuth information of the location information, a trigonometric function value that is in the azimuth trigonometric function table and that corresponds to the azimuth index of the reference point; or when the azimuth information of the location information corresponds to an azimuth index of a reference point of M reference points other than the plurality of second reference points, convert the azimuth index of the reference point of the M reference points other than the plurality of second reference points into an azimuth index of a reference point of the plurality of second reference points, and use, as the trigonometric function value corresponding to the azimuth information of the location information, a trigonometric function value that is in the azimuth trigonometric function table and that corresponds to the azimuth index of the reference point; or when the azimuth information of the location information does not correspond to an azimuth index of any reference point, obtain, based on the azimuth information of the location information, azimuth information of a reference point corresponding to the azimuth information of the location information; and when the azimuth information of the reference point corresponding to the azimuth information of the location information corresponds to an azimuth index of a reference point of the plurality of second reference points, use, as the trigonometric function value corresponding to the azimuth information of the location information, a trigonometric function value that is in the azimuth trigonometric function table and that corresponds to the azimuth index of the reference point; or when the azimuth information of the reference point corresponding to the azimuth information of the location information corresponds to an azimuth index of a reference point of M reference points other than the plurality of second reference points, convert the azimuth index of the reference point of the M reference points other than the plurality of second reference points into an azimuth index of a reference point of the plurality of second reference points, and use, as the trigonometric function value corresponding to the azimuth information of the location information, a trigonometric function value that is in the azimuth trigonometric function table and that corresponds to the azimuth index of the reference point.

In a possible implementation, the elevation information of the location information includes an elevation of the location information or an elevation index of the location information, and the azimuth information of the location information includes an azimuth of the location information or an azimuth index of the location information.

In a possible implementation, the trigonometric function value is a sine function value or a cosine function value.

In a possible implementation, when the plurality of trigonometric functions corresponding to the elevation indexes of the plurality of first reference points are sine function values, a sine function value corresponding to an elevation index

of an i<sup>th</sup> first reference point meets the following formula (1):

$$\sin\_table\_N(i) = \sin\left(\frac{\pi r_i}{2N'} \times i\right) \qquad (1),$$

where

i=0, 1, ..., and N', $N'=\lfloor N/4 \rfloor$ , and r<sub>i</sub> indicates a radius of the first circle of longitude; or

when the plurality of trigonometric functions corresponding to the elevation indexes of the plurality of first reference points are cosine function values, a cosine function value corresponding to an elevation index of an i<sup>th</sup> first reference point meets the following formula (2):

$$\cos\_table\_N(i) = \cos\left(\frac{\pi r_i}{2N'} \times i\right) \qquad (2),$$

where

i=0, 1, ..., and N', $N'=\lfloor N/4 \rfloor$ , and r<sub>i</sub> indicates a radius of the first circle of longitude.

In a possible implementation, when the plurality of trigonometric functions corresponding to the azimuth indexes of the plurality of second reference points are sine function values, a sine function value corresponding to an azimuth index of a j<sup>th</sup> second reference point meets the following formula (3):

$$\sin\_table\_M(j) = \sin\left(\frac{\pi r_j}{2M'} \times j\right) \qquad (3),$$

where

j=0, 1, ..., and M', $M'=\lfloor M/4 \rfloor$ , and r<sub>j</sub> indicates a radius of the first circle of latitude; or

when the plurality of trigonometric functions corresponding to the azimuth indexes of the plurality of second reference points are cosine function values, a cosine function value corresponding to an azimuth index of a j<sup>th</sup> second reference point meets the following formula (4):

$$\cos\_table\_M(j) = \cos\left(\frac{\pi r_j}{2M'} \times j\right) \qquad (4),$$

where

j=0, 1, ..., and M', $M'=\lfloor M/4 \rfloor$ , and r<sub>j</sub> indicates a radius of the first circle of latitude.

In a possible implementation, the elevation φ and the elevation index φ' meet the following formula (5):

$$\varphi' = \text{round}\left(\frac{\varphi}{2\pi r_i \times N}\right) \qquad (5),$$

where r<sub>i</sub> indicates a radius of the first circle of longitude, and round() indicates rounding.

In a possible implementation, the azimuth θ and the azimuth index θ' meet the following formula (6):

$$\theta' = \text{round}\left(\frac{\theta}{2\pi r_j \times M}\right) \qquad (6),$$

where r<sub>j</sub> indicates a radius of the first circle of latitude, and round() indicates rounding.

In the elevation trigonometric function table in which a location of a reference point is represented in a form of an elevation index, assuming that N=1024, the elevation trigonometric function table may include trigonometric function values, for example, sin[0] to sin[256], that respectively correspond to elevation indexes of 257 reference points.

Similarly, in the azimuth trigonometric function table in which a location of a reference point is represented in a form of an azimuth index, assuming that M=1024, the azimuth trigonometric function table may also include trigonometric function values, for example, sin[0] to sin[256], that respectively correspond to azimuth indexes of 257 reference points.

In a possible implementation, when M≠N, the trigonometric function value corresponding to the elevation information of the location information meets the following formulas:

$$\sin(\varphi)=\text{sin\_table\_N}(\varphi') \qquad\qquad \varphi'<\lfloor N/4\rfloor$$

$$\sin(\varphi)=\text{sin\_table\_N}(N/2-\varphi') \qquad\qquad \lfloor N/4\rfloor\leq\varphi'<\lfloor N/2\rfloor$$

$$\sin(\varphi)=-\text{sin\_table\_N}(\varphi'-N/2) \qquad\qquad \lfloor N/2\rfloor\leq\varphi'<\lfloor 3N/4\rfloor$$

$$\sin(\varphi)=-\text{sin\_table\_N}(N-\varphi') \qquad\qquad \lfloor 3N/4\rfloor\leq\varphi'<N$$

$$\cos(\varphi)=\text{sin\_table\_N}(N/4-\varphi') \qquad\qquad \varphi'<\lfloor N/4\rfloor$$

$$\cos(\varphi)=-\text{sin\_table\_N}(\varphi'-N/4) \qquad\qquad \lfloor N/4\rfloor\leq\varphi'<\lfloor N/2\rfloor$$

$$\cos(\varphi)=-\text{sin\_table\_N}(3N/4-\varphi') \qquad\qquad \lfloor N/2\rfloor\leq\varphi'<\lfloor 3N/4\rfloor$$

$$\cos(\varphi)=\text{sin\_table\_N}(\varphi'-3N/4) \qquad\qquad \lfloor 3N/4\rfloor\leq\varphi'<N,$$

where

$\varphi$ indicates the elevation information of the location information, or $\varphi$ indicates the elevation information of the reference point corresponding to the elevation information of the location information, and sin_table_N() indicates the elevation trigonometric function table; and

when M≠N, the trigonometric function value corresponding to the azimuth information of the location information meets the following formulas:

$$\sin(\theta)=\text{sin\_table\_M}(\theta') \qquad\qquad \theta'<\lfloor M/4\rfloor$$

$$\sin(\theta)=\text{sin\_table\_M}(M/2-\theta') \qquad\qquad \lfloor M/4\rfloor\leq\theta'<\lfloor M/2\rfloor$$

$$\sin(\theta)=-\text{sin\_table\_M}(\theta'-M/2) \qquad\qquad \lfloor M/2\rfloor\leq\theta'<\lfloor 3M/4\rfloor$$

$$\sin(\theta)=-\text{sin\_table\_M}(M-\theta') \qquad\qquad \lfloor 3M/4\rfloor\leq\theta'<M$$

$$\cos(\theta)=\text{sin\_table\_M}(M/4-\theta') \qquad\qquad \theta'<\lfloor M/4\rfloor$$

$$\cos(\theta)=-\text{sin\_table\_M}(\theta'-M/4) \qquad\qquad \lfloor M/4\rfloor\leq\theta'<\lfloor M/2\rfloor$$

$$\cos(\theta)=-\text{sin\_table\_M}(3M/4-\theta') \qquad\qquad \lfloor M/2\rfloor\leq\theta'<\lfloor 3M/4\rfloor$$

$$\cos(\theta)=\text{sin\_table\_M}(\theta'-3M/4) \qquad\qquad \lfloor 3M/4\rfloor\leq\theta'<M,$$

where

$\theta$ indicates the azimuth information of the location information, or $\theta$ indicates the azimuth information of the reference point corresponding to the azimuth information of the location information, and sin_table_M() indicates the azimuth trigonometric function table;

or

when M=N, the trigonometric function value corresponding to the elevation information of the location information meets the following formulas:

$$\sin(\varphi)=\text{sin\_table}(\varphi') \qquad \varphi'<\lfloor N/4\rfloor$$

$$\sin(\varphi)=\text{sin\_table}(N/2-\varphi') \qquad \lfloor N/4\rfloor\leq\varphi'<\lfloor N/2\rfloor$$

$$\sin(\varphi)=-\text{sin\_table}(\varphi'-N/2) \qquad \lfloor N/2\rfloor\leq\varphi'<\lfloor 3N/4\rfloor$$

$$\sin(\varphi)=-\text{sin\_table}(N-\varphi') \qquad \lfloor 3N/4\rfloor\leq\varphi'<N$$

$$\cos(\varphi)=\text{sin\_table}(N/4-\varphi') \qquad \varphi'<\lfloor N/4\rfloor$$

$$\cos(\varphi)=-\text{sin\_table}(\varphi'-N/4) \qquad \lfloor N/4\rfloor\leq\varphi'<\lfloor N/2\rfloor$$

$$\cos(\varphi)=-\text{sin\_table}(3N/4-\varphi') \qquad \lfloor N/2\rfloor\leq\varphi'<\lfloor 3N/4\rfloor$$

$$\cos(\varphi)=\text{sin\_table}(\varphi'-3N/4) \qquad \lfloor 3N/4\rfloor\leq\varphi'<N,$$

where

$\varphi$ indicates the elevation information of the location information, or $\varphi$ indicates the elevation information of the reference point corresponding to the elevation information of the location information, and sin_table_N() indicates the elevation trigonometric function table; and

when M=N, the trigonometric function value corresponding to the azimuth information of the location information meets the following formulas:

$$\sin(\theta)=\text{sin\_table}(\theta') \qquad \theta'<\lfloor N/4\rfloor$$

$$\sin(\theta)=\text{sin\_table}(N/2-\theta') \qquad \lfloor N/4\rfloor\leq\theta'<\lfloor N/2\rfloor$$

$$\sin(\theta)=-\text{sin\_table}(\theta'-N/2) \qquad \lfloor N/2\rfloor\leq\theta'<\lfloor 3N/4\rfloor$$

$$\sin(\theta)=-\text{sin\_table}(N-\theta') \qquad \lfloor 3N/4\rfloor\leq\theta'<N$$

$$\cos(\theta)=\text{sin\_table}(N/4-\theta') \qquad \theta'<\lfloor N/4\rfloor$$

$$\cos(\theta)=-\text{sin\_table}(\theta'-N/4) \qquad \lfloor N/4\rfloor\leq\theta'<\lfloor N/2\rfloor$$

$$\cos(\theta)=-\sin\_table(3N/4-\theta') \qquad\qquad \lfloor N/2\rfloor\leq\theta'<\lfloor3N/4\rfloor$$

$$\cos(\theta)=\sin\_table(\theta'-3N/4) \qquad\qquad \lfloor3N/4\rfloor\leq\theta'<N,$$

where
$\theta$ indicates the azimuth information of the location information, or $\theta$ indicates the azimuth information of the reference point corresponding to the azimuth information of the location information, and sin table_N() indicates the elevation trigonometric function table;
or
when $M\neq N$, $M=K1\times N$, and $K1\geq2$, the trigonometric function value corresponding to the azimuth information of the location information meets the following formulas:

$$\sin(\theta)=\sin\_table\_M(\theta') \qquad\qquad \theta'<\lfloor M/4\rfloor$$

$$\sin(\theta)=\sin\_table\_M(M/2-\theta') \qquad\qquad \lfloor M/4\rfloor\leq\theta'<\lfloor M/2\rfloor$$

$$\sin(\theta)=-\sin\_table\_M(\theta'-M/2) \qquad\qquad \lfloor M/2\rfloor\leq\theta'<\lfloor3M/4\rfloor$$

$$\sin(\theta)=-\sin\_table\_M(M-\theta') \qquad\qquad \lfloor3M/4\rfloor\leq\theta'<M$$

$$\cos(\theta)=\sin\_table\_M(M/4-\theta') \qquad\qquad \theta'<\lfloor M/4\rfloor$$

$$\cos(\theta)=-\sin\_table\_M(\theta'-M/4) \qquad\qquad \lfloor M/4\rfloor\leq\theta'<\lfloor M/2\rfloor$$

$$\cos(\theta)=-\sin\_table\_M(3M/4-\theta') \qquad\qquad \lfloor M/2\rfloor\leq\theta'<\lfloor3M/4\rfloor$$

$$\cos(\theta)=\sin\_table\_M(\theta'-3M/4) \qquad\qquad \lfloor3M/4\rfloor\leq\theta'<M,$$

where
$\theta$ indicates the azimuth information of the location information, or $\theta$ indicates the azimuth information of the reference point corresponding to the azimuth information of the location information, and sin_table_M() indicates the azimuth trigonometric function table; and
when $M\neq N$, $M=K1\times N$, and $K1\geq2$, the trigonometric function value corresponding to the elevation information of the location information meets the following formulas:

$$\sin(\varphi)=\sin\_table\_M(K1\times\varphi') \qquad\qquad K1\times\varphi'<\lfloor M/4\rfloor$$

$$\sin(\varphi)=\sin\_table\_M(M/2-K1\times\varphi') \qquad\qquad \lfloor M/4\rfloor\leq K1\times\varphi'<\lfloor M/2\rfloor$$

$$\sin(\varphi)=-\sin\_table\_M(K1\times\varphi'-M/2) \qquad\qquad \lfloor M/2\rfloor\leq K1\times\varphi'<\lfloor3M/4\rfloor$$

$$\sin(\varphi)=-\sin\_table\_M(M-K1\times\varphi') \qquad\qquad \lfloor3M/4\rfloor\leq K1\times\varphi'<M$$

$$\cos(\varphi)=\text{sin\_table\_M}(M/4-K1\times\varphi') \qquad K1\times\varphi'<\lfloor M/4\rfloor$$

$$\cos(\varphi)=-\text{sin\_table\_M}(K1\times\varphi'-M/4) \qquad \lfloor M/4\rfloor\leq K1\times\varphi'<\lfloor M/2\rfloor$$

$$\cos(\varphi)=-\text{sin\_table\_M}(3M/4-K1\times\varphi') \qquad \lfloor M/2\rfloor\leq K1\times\varphi'<\lfloor 3M/4\rfloor$$

$$\cos(\varphi)=\text{sin\_table\_M}(K1\times\varphi'-3M/4) \qquad \lfloor 3M/4\rfloor\leq K1\times\varphi'<M,$$

where
$\varphi$ indicates the elevation information of the location information, or $\varphi$ indicates the elevation information of the reference point corresponding to the elevation information of the location information, and sin_table_M() indicates the azimuth trigonometric function table;
or
when $M\neq N$, $N=K2\times M$, and $K2\geq 2$, the trigonometric function value corresponding to the elevation information of the location information meets the following formulas:

$$\sin(\varphi)=\text{sin\_table\_N}(\varphi') \qquad \varphi'<\lfloor N/4\rfloor$$

$$\sin(\varphi)=\text{sin\_table\_N}(N/2-\varphi') \qquad \lfloor N/4\rfloor\leq\varphi'<\lfloor N/2\rfloor$$

$$\sin(\varphi)=-\text{sin\_table\_N}(\varphi'-N/2) \qquad \lfloor N/2\rfloor\leq\varphi'<\lfloor 3N/4\rfloor$$

$$\sin(\varphi)=-\text{sin\_table\_N}(N-\varphi') \qquad \lfloor 3N/4\rfloor\leq\varphi'<N$$

$$\cos(\varphi)=\text{sin\_table\_N}(N/4-\varphi') \qquad \varphi'<\lfloor N/4\rfloor$$

$$\cos(\varphi)=-\text{sin\_table\_N}(\varphi'-N/4) \qquad \lfloor N/4\rfloor\leq\varphi'<\lfloor N/2\rfloor$$

$$\cos(\varphi)=-\text{sin\_table\_N}(3N/4-\varphi') \qquad \lfloor N/2\rfloor\leq\varphi'<\lfloor 3N/4\rfloor$$

$$\cos(\varphi)=\text{sin\_table\_N}(\varphi'-3N/4) \qquad \lfloor 3N/4\rfloor\leq\varphi'<N,$$

where
$\varphi$ indicates the elevation information of the location information, or $\varphi$ indicates the elevation information of the reference point corresponding to the elevation information of the location information, and sin_table_N() indicates the elevation trigonometric function table; and
when $M\neq N$, $N=K2\times M$, and $K2\geq 2$, the trigonometric function value corresponding to the azimuth information of the location information meets the following formulas:

$$\sin(\theta)=\text{sin\_table\_N}(K2\times\theta') \qquad K2\times\theta'<\lfloor N/4\rfloor$$

$$\sin(\theta)=\text{sin\_table\_N}(N/2-K2\times\theta') \qquad \lfloor N/4\rfloor\leq K2\times\theta'<\lfloor N/2\rfloor$$

$$\sin(\theta)=-\sin\_table\_N(K2\times\theta'-N/2) \qquad \lfloor N/2\rfloor\leq K2\times\theta'<\lfloor 3N/4\rfloor$$

$$\sin(\theta)=-\sin\_table\_N(N-K2\times\theta') \qquad \lfloor 3N/4\rfloor\leq K2\times\theta'<N$$

$$\cos(\theta)=\sin\_table\_N(N/4-K2\times\theta') \qquad K2\times\theta'<\lfloor N/4\rfloor$$

$$\cos(\theta)=-\sin\_table\_N(K2\times\theta'-N/4) \qquad \lfloor N/4\rfloor\leq K2\times\theta'<\lfloor N/2\rfloor$$

$$\cos(\theta)=-\sin\_table\_N(3N/4-K2\times\theta') \qquad \lfloor N/2\rfloor\leq K2\times\theta'<\lfloor 3N/4\rfloor$$

$$\cos(\theta)=\sin\_table\_N(K2\times\theta'-3N/4) \qquad \lfloor 3N/4\rfloor\leq K2\times\theta'<N,$$

where
$\theta$ indicates the azimuth information of the location information, or $\theta$ indicates the azimuth information of the reference point corresponding to the azimuth information of the location information, and sin table_N() indicates the elevation trigonometric function table;
or
when M≠N, the trigonometric function value corresponding to the elevation information of the location information meets the following formulas:

$$\sin(\theta)=\cos\_table\_N(N/4-\theta') \qquad \theta'<\lfloor N/4\rfloor$$

$$\sin(\theta)=\cos\_table\_N(\theta'-N/4) \qquad \lfloor N/4\rfloor\leq\theta'<\lfloor N/2\rfloor$$

$$\sin(\theta)=-\cos\_table\_N(3N/4-\theta') \qquad \lfloor N/2\rfloor\leq\theta'<\lfloor 3N/4\rfloor$$

$$\sin(\theta)=-\cos\_table\_N(\theta'-3N/4) \qquad \lfloor 3N/4\rfloor\leq\theta'<N$$

$$\cos(\theta)=\cos\_table\_N(\theta') \qquad \theta'<\lfloor N/4\rfloor$$

$$\cos(\theta)=-\cos\_table\_N(N/2-\theta') \qquad \lfloor N/4\rfloor\leq\theta'<\lfloor N/2\rfloor$$

$$\cos(\theta)=-\cos\_table\_N(\theta'-N/2) \qquad \lfloor N/2\rfloor\leq\theta'<\lfloor 3N/4\rfloor$$

$$\cos(\theta)=\cos\_table\_N(N-\theta') \qquad \lfloor 3N/4\rfloor\leq\theta'<N,$$

where
$\varphi$ indicates the elevation information of the location information, or $\varphi$ indicates the elevation information of the reference point corresponding to the elevation information of the location information, and cos_table_N() indicates the elevation trigonometric function table; and
when M≠N, the trigonometric function value corresponding to the azimuth information of the location information meets the following formulas:

$$\sin(\theta)=\cos\_table\_M(M/4-\theta') \qquad \theta'<\lfloor M/4\rfloor$$

$$\sin(\theta)=\cos\_table\_M(\theta'-M/4) \qquad \lfloor M/4\rfloor\leq\theta'<\lfloor M/2\rfloor$$

$$\sin(\theta)=-\cos\_table\_M(3M/4-\theta') \qquad \lfloor M/2\rfloor\leq\theta'<\lfloor 3M/4\rfloor$$

$$\sin(\theta)=-\cos\_table\_M(\theta'-3M/4) \qquad \lfloor 3M/4\rfloor\leq\theta'<M$$

$$\cos(\theta)=\cos\_table\_M(\theta') \qquad \theta'<\lfloor M/4\rfloor$$

$$\cos(\theta)=-\cos\_table\_M(M/2-\theta') \qquad \lfloor M/4\rfloor\leq\theta'<\lfloor M/2\rfloor$$

$$\cos(\theta)=-\cos\_table\_M(\theta'-M/2) \qquad \lfloor M/2\rfloor\leq\theta'<\lfloor 3M/4\rfloor$$

$$\cos(\theta)=\cos\_table\_M(M-\theta') \qquad \lfloor 3M/4\rfloor\leq\theta'<M,$$

where

$\theta$ indicates the azimuth information of the location information, or $\theta$ indicates the azimuth information of the reference point corresponding to the azimuth information of the location information, and cos_table_M() indicates the azimuth trigonometric function table.

According to a third aspect, this application provides an audio processing device, including: one or more processors; and a memory, configured to store one or more programs, where when the one or more programs are executed by the one or more processors, the one or more processors are enabled to implement the method according to any one of the implementations of the first aspect.

According to a fourth aspect, this application provides a computer-readable storage medium, including a computer program. When the computer program is executed on a computer, the computer is enabled to perform the method according to any one of the implementations of the first aspect.

## BRIEF DESCRIPTION OF DRAWINGS

FIG. 1 is a diagram of an example structure of an audio play system according to this application;
FIG. 2 is a diagram of an example structure of an audio decoding system 10 according to this application;
FIG. 3 is a diagram of an example structure of an HOA encoding apparatus according to this application;
FIG. 4 is an example flowchart of a method for obtaining an HOA coefficient according to this application;
FIG. 5 is an example schematic diagram of a preset spherical surface according to this application;
FIG. 6 is an example schematic diagram of location information according to this application; and
FIG. 7 is a diagram of an example structure of an apparatus for obtaining an HOA coefficient according to this application.

## DESCRIPTION OF EMBODIMENTS

To make objectives, technical solutions, and advantages of this application clearer, the following clearly and completely describes technical solutions in this application with reference to accompanying drawings in this application. Clearly, described embodiments are merely some but not all of embodiments of this application. All other embodiments obtained by a person of ordinary skill in the art based on embodiments of this application without creative efforts shall fall within the protection scope of this application.

In embodiments of the specification, claims, and accompanying drawings of this application, the terms "first", "second", and the like are merely intended for distinguishing and description, and shall not be understood as an indication or implication of relative importance or an indication or implication of an order. In addition, the terms "include", "comprise", and any variant thereof are intended to cover non-exclusive inclusion, for example, inclusion of a series of steps or units. A method, a system, a product, or a device is not necessarily limited to clearly listed steps or units, but may include other steps or units that are not clearly listed and that are inherent to the process, the method, the product, or the device.

It should be understood that, in this application, "at least one" means one or more, and "a plurality of" means two or more. The term "and/or" describes an association relationship between associated objects, and indicates that three relationships may exist. For example, "A and/or B" may indicate the following three cases: Only A exists, only B exists, and both A and B exist, where A and B may be singular or plural. The character "/" usually indicates an "or" relationship between the associated objects. "At least one of the following items" or a similar expression thereof indicates any combination of the items, including one of the items or any combination of a plurality of the items. For example, at least one of a, b, or c may indicate a, b, c, "a and b", "a and c", "b and c", or "a, b, and c", where a, b, and c may be singular or plural. Two values connected by the character "~" usually indicate a value range, and the value range includes the two values connected by the character "~".

Related terms in this application are described below.

Audio frame: Audio data is in a stream form. In actual application, to facilitate audio processing and transmission, audio data within specific duration is usually selected as a frame of audio. The duration is referred to as "sampling time", and a value of the duration may be determined according to a requirement of a codec and a specific application. For example, the duration ranges from 2.5 ms to 60 ms, where ms is milliseconds.

Audio signal: An audio signal is a frequency and amplitude change information carrier of a regular sound wave with voice, music, and sound effect. Audio is a continuously changing analog signal, and may be represented by a continuous curve and referred to as a sound wave. A digital signal generated based on audio through analog-to-digital conversion or by a computer is an audio signal. A sound wave has three important parameters: a frequency, an amplitude, and a phase. This determines features of an audio signal.

The following describes a system architecture to which this application is applied.

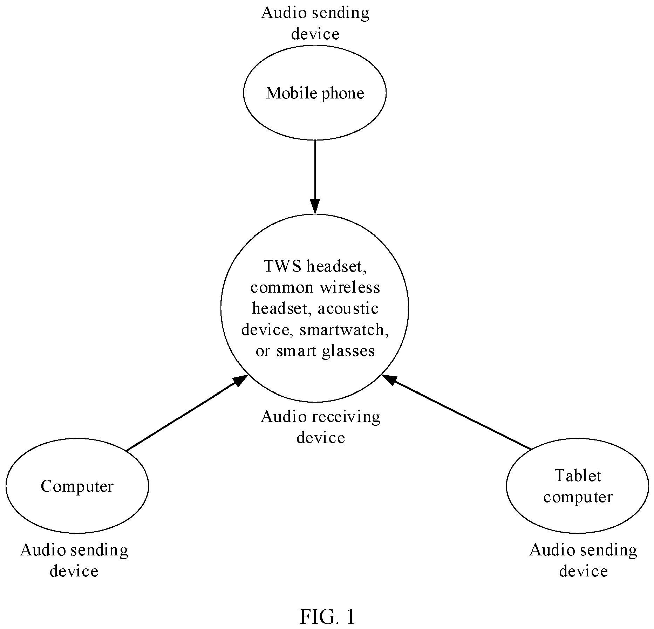

FIG. 1 is a diagram of an example structure of an audio play system according to this application. As shown in FIG. 1, the audio play system includes an audio sending device and an audio receiving device. The audio sending device includes a device that can encode audio and send an audio bitstream, for example, a mobile phone, a computer (a notebook computer, a desktop computer, or the like), or a tablet computer (a handheld tablet computer, a vehicle-mounted tablet computer, or the like). The audio receiving device includes a device that can receive an audio bitstream, decode the audio bitstream, and play audio, for example, a TWS headset, a common wireless headset, an acoustic device, a smartwatch, or smart glasses.

A Bluetooth connection may be established between the audio sending device and the audio receiving device, and voice and music can be transmitted between the audio sending device and the audio receiving device. General examples of the audio sending device and the audio receiving device are a mobile phone and a TWS headset, a wireless head-mounted headset, or a wireless neckband headset; or a mobile phone and another terminal device (for example, a smart speaker, a smartwatch, smart glasses, or a vehicle-mounted speaker). Optionally, examples of the audio sending device and the audio receiving device may alternatively be a tablet computer, a notebook computer, or a desktop computer, and a TWS headset, a wireless head-mounted headset, a wireless neckband headset, or another terminal device (for example, a smart speaker, a smartwatch, smart glasses, or a vehicle-mounted speaker).

It should be noted that, in addition to the Bluetooth connection, the audio sending device and the audio receiving device may alternatively be connected in another communication mode, for example, a Wi-Fi connection, a wired connection, or another wireless connection. This is not specifically limited in this application.

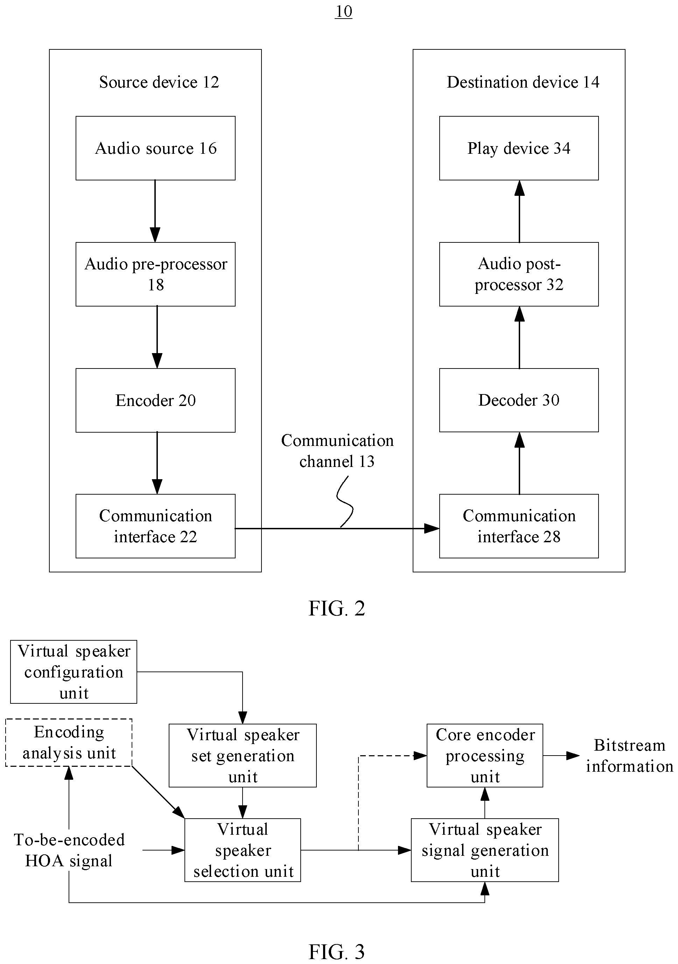

FIG. 2 is a diagram of an example structure of an audio decoding system 10 according to this application. As shown in FIG. 2, the audio decoding system 10 may include a source device 12 and a destination device 14. The source device 12 may be the audio sending device in FIG. 1, and the destination device 14 may be the audio receiving device in FIG. 1. The source device 12 generates encoded bitstream information. Therefore, the source device 12 may also be referred to as an audio encoding device. The destination device 14 may decode the encoded bitstream generated by the source device 12. Therefore, the destination device 14 may also be referred to as an audio decoding device. In this application, the source device 12 and the audio encoding device may be collectively referred to as the audio sending device, and the destination device 14 and the audio decoding device may be collectively referred to as the audio receiving device.

The source device 12 includes an encoder 20, and optionally, may include an audio source 16, an audio pre-processor 18, and a communication interface 22.

The audio source 16 may include or may be any type of audio capture device, for example, an audio capture device for capturing real-world sound; and/or any type of audio generation device, for example, a computer audio processor, or any type of device for obtaining and/or providing real-world audio, computer animation audio (for example, screen content or audio in virtual reality (virtual reality, VR); and/or any combination thereof (for example, audio in augmented reality (augmented reality, AR), audio in mixed reality (mixed reality, MR), and/or audio in extended reality (extended reality, XR)). The audio source 16 may be a microphone for capturing audio or a memory for storing audio. The audio source 16 may further include any type of (internal or external) interface for storing previously captured or generated audio and/or obtaining or receiving audio. When the audio source 16 is a microphone, the audio source 16 may be, for example, a local audio capture apparatus or an audio capture apparatus integrated in the source device. When the audio source 16 is a memory, the audio source 16 may be, for example, a local memory or a memory integrated in the source device. When the audio source 16 includes an interface, the interface may be, for example, an external interface for receiving audio from an external audio source. The external audio source is, for example, an external audio capture device, such as a speaker, a microphone, an external memory, or an external audio generation device. The external audio generation device is, for example, an external computer audio processor, a computer, or a server. The interface may be any type of interface, for example, a wired or wireless interface or an optical interface, according to any proprietary or standardized interface protocol.

In this application, the audio source 16 obtains a current-scene audio signal. The current-scene audio signal is an audio signal obtained by capturing a sound field at a location of a microphone in space, and the current-scene audio signal may also be referred to as a raw-scene audio signal. For example, the current-scene audio signal may be an audio signal obtained by using a higher order ambisonics (higher order ambisonics, HOA) technology. The audio source 16 obtains a to-be-encoded HOA signal. For example, the HOA signal may be obtained by using an actual capture device, or the HOA signal may be obtained through synthesis of an artificial audio object. Optionally, the to-be-encoded HOA signal may be a time-domain HOA signal or a frequency-domain HOA signal.

The audio pre-processor 18 is configured to receive a raw audio signal and pre-process the raw audio signal to obtain a pre-processed audio signal. For example, the pre-processing performed by the audio pre-processor 18 may include shaping or denoising.

The encoder 20 is configured to receive the pre-processed audio signal and process the pre-processed audio signal to provide encoded bitstream information.

The communication interface 22 of the source device 12 may be configured to receive bitstream information and send the bitstream to the destination device 14 through a communication channel 13. The communication channel 13 is, for example, a direct wired or wireless connection, any type of network such as a wired or wireless network or any combination thereof, or any type of private network or public network or any combination thereof.

The destination device 14 includes a decoder 30, and optionally, may include a communication interface 28, an audio post-processor 32, and a play device 34.

The communication interface 28 of the destination device 14 is configured to directly receive bitstream information from the source device 12, and provide the bitstream information for the decoder 30. The communication interface 22 and the communication interface 28 may be configured to send or receive bitstream information through the communication channel 13 between the source device 12 and the destination device 14.

The communication interface 22 and the communication interface 28 each may be configured as a unidirectional communication interface indicated by an arrow, in FIG. 2, that corresponds to the communication channel 13 and that is directed from the source device 12 to the destination device 14, or a bidirectional communication interface, and may be configured to: send and receive messages or the like to establish a connection, determine and exchange any other information related to a communication link and/or transmission of data such as encoded audio data, and the like.

The decoder 30 is configured to receive bitstream information and decode the bitstream information to obtain decoded audio data.

The audio post-processor 32 is configured to post-process the decoded audio data to obtain post-processed audio data. The post-processing performed by the audio post-processor 32 may include, for example, trimming or resampling.

The play device 34 is configured to receive the post-processed audio data, to play audio to a user or a listener. The play device 34 may be or include any type of player for playing reconstructed audio, for example, an integrated or external speaker. For example, the speaker may include a loudspeaker or an acoustic device.

FIG. 3 is a diagram of an example structure of an HOA encoding apparatus according to this application. As shown in FIG. 3, the HOA encoding apparatus may be used in the encoder 20 in the audio decoding system 10. The HOA encoding apparatus includes a virtual speaker configuration unit, an encoding analysis unit, a virtual speaker set generation unit, a virtual speaker selection unit, a virtual speaker signal generation unit, and a core encoder processing unit.

The virtual speaker configuration unit is configured to configure a virtual speaker based on encoder configuration information, to obtain a virtual speaker configuration parameter. The encoder configuration information includes but is not limited to an HOA order, an encoding bit rate, user-defined information, and the like. The virtual speaker configuration parameter includes but is not limited to a quantity of virtual speakers, an HOA order of the virtual speaker, and the like.

The virtual speaker configuration parameter output by the virtual speaker configuration unit is input for the virtual speaker set generation unit.

The encoding analysis unit is configured to perform encoding analysis on a to-be-encoded HOA signal, for example, analyze sound field distribution of the to-be-encoded HOA signal, including features such as a quantity of sound sources, directivity, and dispersity of the to-be-encoded HOA signal. The sound field distribution is used as one of determining conditions for determining how to select a target virtual speaker.

Alternatively, in this application, the HOA encoding apparatus may not include the encoding analysis unit. To be specific, the HOA encoding apparatus may not analyze an input signal. In this case, how to select a target virtual speaker is determined by using a default configuration.

The HOA encoding apparatus obtains the to-be-encoded HOA signal. For example, an HOA signal recorded from an actual capture device or an HOA signal obtained through synthesis of an artificial audio object may be used as input for the encoder, and the to-be-encoded HOA signal input to the encoder may be a time-domain HOA signal or a frequency-domain HOA signal.

The virtual speaker set generation unit is configured to generate a virtual speaker set. The virtual speaker set may include a plurality of virtual speakers, and the virtual speaker in the virtual speaker set may also be referred to as a "candidate virtual speaker".

The virtual speaker set generation unit generates an HOA coefficient for a specified candidate virtual speaker. Coordinates (namely, location information) of the candidate virtual speaker and an HOA order of the candidate virtual speaker that are provided by the virtual speaker configuration unit are used to generate the HOA coefficient for the candidate virtual speaker. A method for determining the coordinates of the candidate virtual speaker includes but is not limited to generating K virtual speakers according to an equidistance rule, generating K nonuniformly distributed candidate virtual speakers according to an auditory perception principle, and generating coordinates of uniformly distributed candidate virtual speakers based on a quantity of candidate virtual speakers.

Then the HOA coefficient for the candidate virtual speaker is generated.

Herein, an HOA coefficient for each virtual speaker is obtained and represented by using a method for obtaining an HOA coefficient in this application, to obtain the virtual speaker set.

The HOA coefficient for the candidate virtual speaker that is output by the virtual speaker set generation unit is input for the virtual speaker selection unit.

The virtual speaker selection unit is configured to select a target virtual speaker from the plurality of candidate virtual speakers in the virtual speaker set based on the to-be-encoded HOA signal. The target virtual speaker may be referred to as a "virtual speaker matching the to-be-encoded HOA signal", or a matching virtual speaker for short.

The virtual speaker selection unit selects a specified matching virtual speaker based on the to-be-encoded HOA signal and the HOA coefficient for the candidate virtual speaker that is output by the virtual speaker set generation unit.

The following describes a method for selecting a matching virtual speaker by using an example. In a possible implementation, an inner product is calculated, through matching, between the HOA coefficient for the candidate virtual speaker and the to-be-encoded HOA signal; a candidate virtual speaker corresponding to a largest absolute value of an inner product is selected as a target virtual speaker, namely, a matching virtual speaker; a projection of the to-be-encoded HOA signal on the candidate virtual speaker is superposed on a linear combination of the HOA coefficient for the candidate virtual speaker; then a projection vector is subtracted from the to-be-encoded HOA signal to obtain a difference, and the foregoing process is repeatedly performed on the difference to implement iterative calculation, where one matching virtual speaker is generated in each iteration; and coordinates of the matching virtual speaker and an HOA coefficient for the matching virtual speaker are output. It can be understood that a plurality of matching virtual speakers are selected, and one matching virtual speaker is generated in each iteration.

(Alternatively, another implementation method may be used.)

The coordinates of the target virtual speaker and the HOA coefficient for the target virtual speaker that are output by the virtual speaker selection unit are input for the virtual speaker signal generation unit.

The virtual speaker signal generation unit is configured to generate a virtual speaker signal based on the to-be-encoded HOA signal and attribute information of the target virtual speaker. When the attribute information is location information, the HOA coefficient for the target virtual speaker is determined based on the location information of the target virtual speaker. When the attribute information includes the HOA coefficient, the HOA coefficient for the target virtual speaker is obtained from the attribute information.

The virtual speaker signal generation unit calculates the virtual speaker signal by using the to-be-encoded HOA signal and the HOA coefficient for the target virtual speaker.

The HOA coefficient for the virtual speaker is represented by a matrix A, and the to-be-encoded HOA signal may be obtained through linear combination by using the matrix A. Further, a theoretical optimal solution w, namely, the virtual speaker signal, may be obtained by using a least square method. For example, the following calculation formula may be used:

$$w = A^{-1}X,$$

where

$A^{-1}$ indicates an inverse matrix of the matrix A, a size of the matrix A is (M×C), C is a quantity of target virtual speakers, M is a quantity of channels of an *N*-order HOA coefficient, $M=(N+1)^2$, and a indicates the HOA coefficient for the target virtual speaker, for example:

$$A = \begin{bmatrix} a_{11} & \cdot & \cdot & \cdot & a_{1C} \\ \cdot & \cdot & & & \cdot \\ \cdot & & \cdot & & \cdot \\ \cdot & & & \cdot & \cdot \\ a_{M1} & \cdot & \cdot & \cdot & a_{MC} \end{bmatrix};$$

and

X indicates the to-be-encoded HOA signal, a size of the matrix X is (M×L), M is a quantity of channels of an N-order HOA coefficient, L is a quantity of time-domain or frequency-domain sampling points, and x indicates a coefficient for the to-be-encoded HOA signal, for example:

$$X = \begin{bmatrix} x_{11} & \cdot & \cdot & \cdot & x_{1L} \\ \cdot & \cdot & & & \cdot \\ \cdot & & \cdot & & \cdot \\ \cdot & & & \cdot & \cdot \\ x_{M1} & \cdot & \cdot & \cdot & x_{ML} \end{bmatrix}$$

The virtual speaker signal output by the virtual speaker signal generation unit in input for the core encoder processing unit.

The core encoder processing unit is configured to perform core encoder processing on the virtual speaker signal to obtain a transmission bitstream.

The core encoder processing includes but is not limited to transformation, quantization, a psychoacoustic model, bitstream generation, and the like. Processing may be performed on a frequency-domain transmission channel or a time-domain transmission channel. This is not limited herein.

Based on the descriptions of the foregoing embodiments, this application provides a method for obtaining an HOA coefficient.

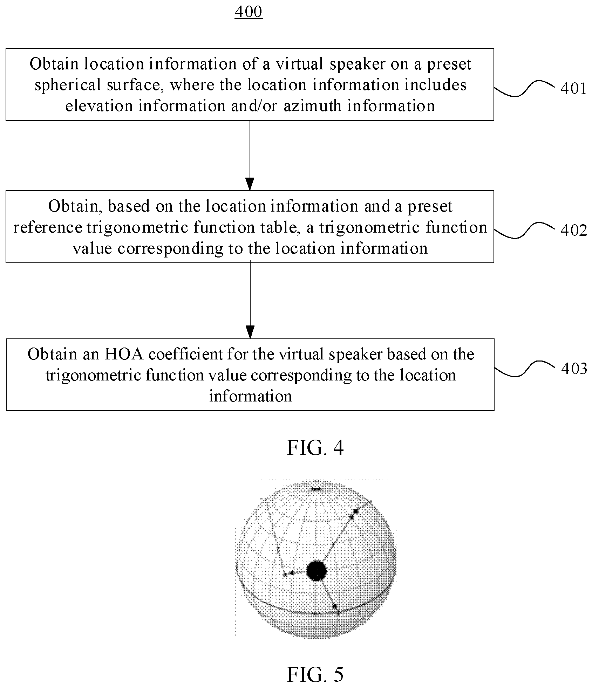

FIG. 4 is an example flowchart of a method for obtaining an HOA coefficient according to this application. The process 400 may be performed by the encoder 20 or the decoder 30 in the foregoing embodiments. To be specific, the encoder 20 in the audio sending device implements audio encoding, and then sends bitstream information to the audio receiving device. The decoder 30 in the audio receiving device decodes the bitstream information to obtain a target audio frame, and then performs rendering based on the target audio frame to obtain a sound field audio signal corresponding to one or more virtual speakers. The process 400 is described as a series of steps or operations. It should be understood that the steps or the operations of the process 400 may be performed in various sequences and/or simultaneously, and are not limited to an execution sequence shown in FIG. 4. As shown in FIG. 4, the method includes the following steps.

Step 401: Obtain location information of a virtual speaker on a preset spherical surface, where the location information includes elevation information and/or azimuth information.

The preset spherical surface includes M circles of longitude and N circles of latitude. M and N may be the same or different. Both M and N are positive integers. For example, N is 512, 768, or 1024, and M is 512, 768, or 1024. An intersection between the circle of longitude and the circle of latitude is referred to as a reference point. N reference points located on one circle of longitude are arranged at equal spacings, and M reference points located on one circle of latitude are arranged at equal spacings. To ensure that the reference points can cover all virtual speakers as much as possible, the following condition may be met: M×N≥K, where K is a total quantity of virtual speakers. For example, a value of K may be 2048, 1669, 1024, or 530. For example, FIG. 5 is an example schematic diagram of a preset spherical surface according to this application. As shown in FIG. 5, it is assumed that a spatial sound field is a spherical space with a rendering center as a sphere center. A virtual speaker may be deployed on a spherical surface of the spherical space. The spherical surface is divided by M circles of longitude and N circles of latitude. A plane on which any circle of longitude is located includes the spherical center. Therefore, radii of the M circles of longitude are equal to a radius of the spherical space. A radius of only the equator among the circles of latitude is equal to the radius of the spherical space, and another circle of latitude farther away from the equator has a smaller radius. In this application, because azimuth differences between every two adjacent circles of longitude are equal, that is, the M circles of longitude are evenly distributed on the spherical surface, M reference points located on one circle of latitude are arranged at equal spacings; and because elevation differences between every two adjacent circles of latitude are also equal, that is, the N circles of latitude are evenly distributed on the spherical surface, N reference points located on one circle of longitude are arranged at equal spacings. Correspondingly, because N reference points located on one circle of longitude are arranged at equal spacings, elevation differences between all adjacent reference points located on one circle of longitude are equal; and because M reference points located on one circle of latitude are arranged at equal spacings, azimuth differences between all adjacent reference points located on one circle of latitude are equal.

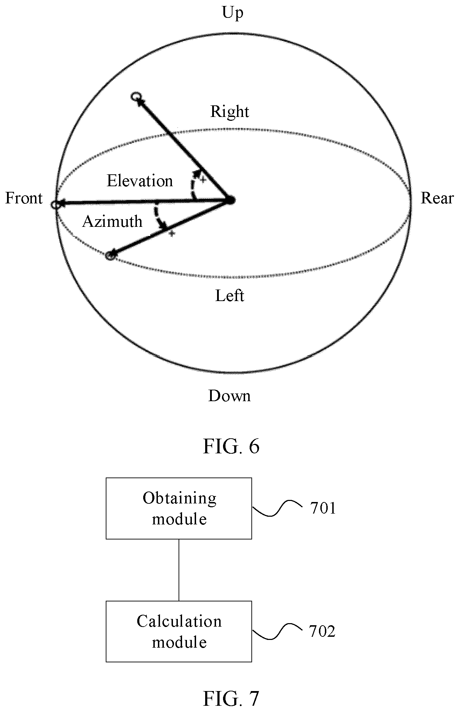

The virtual speaker may be any virtual speaker disposed for sound rendering. The location information of the virtual speaker on the spherical surface includes elevation information and/or azimuth information. For example, FIG. 6 is an example schematic diagram of location information according to this application. As shown in FIG. 6, an included angle between a preset horizontal plane (for example, a plane on which the equator is located, a plane on which the south pole is located, or plane on which the north pole is located, where the plane on which the south pole is located is perpendicular to a connection line between the south pole and the north pole, and the plane on which the north pole is located is perpendicular to the connection line between the south pole and the north pole) and a connection line between a location of the virtual speaker and a center of the earth is the elevation information of the virtual speaker; and an included angle between a specified initial direction and a projection, on the horizontal plane, of the connection line between the location of the virtual speaker and the center of the earth is the azimuth information of the location information of the virtual speaker.

Optionally, the elevation information of the location information of the virtual speaker may be represented by an elevation or an elevation index, and similarly, the azimuth information of the location information of the virtual speaker may be represented by an azimuth or an azimuth index.

For example, there are N reference points on a circle of longitude, the N reference points are arranged at equal spacings, and a difference between elevation information of two adjacent reference points is 2n/N. Therefore, elevation information of each of the N reference points may be represented by an elevation index of the reference point, that is, elevation information of the N reference points may be represented as 0 to N-1. If the location of the virtual speaker is exactly at a reference point, the elevation information of the virtual speaker may be represented by the foregoing elevation index. Similarly, there are M reference points on a circle of latitude, the M reference points are arranged at equal spacings, and a difference between azimuth information of two adjacent reference points is $2\pi/M$. Therefore, azimuth information of each of the M reference points may be represented by an azimuth index of the reference point, that is, azimuth information of the M reference points may be represented as 0 to M-1. If the location of the virtual speaker is exactly at a reference point, the azimuth information of the virtual speaker may be represented by the foregoing azimuth index. It can be learned that an elevation index and an elevation of a reference point are in a one-to-one correspondence, and an azimuth index and an azimuth of a reference point are in a one-to-one correspondence. However, if the location of the virtual speaker is not at a location of a reference point, a specific reference point whose elevation index and/or azimuth index are to be used to represent the location information of the virtual speaker cannot be determined. Therefore, the location information of the virtual speaker may be represented by an elevation and/or an azimuth. It should be understood that, even if the location of the virtual speaker is exactly at a reference point, the location information of the virtual speaker may also be represented by an elevation and/or an azimuth. This is not specifically limited herein.

Step 402: Obtain, based on the location information and a preset reference trigonometric function table, a trigonometric function value corresponding to the location information.

The reference trigonometric function table includes an elevation trigonometric function table and/or an azimuth trigonometric function table.

The elevation trigonometric function table includes a plurality of trigonometric function values corresponding to elevation indexes of a plurality of first reference points. The plurality of first reference points are reference points on a first circle of longitude. A quantity of the plurality of first reference points is not less than $\lfloor N/4 \rfloor + 1$, where $\lfloor \ \rfloor$ indicates rounding down. The first circle of longitude is one of the M circles of longitude.

In this application, any one of the M circles of longitude is selected as the first circle of longitude, and reference points (namely, the plurality of first reference points) used for calculating the elevation trigonometric function table are selected from the N reference points on the first circle of longitude. According to a principle of a trigonometric function, an angle range of 0° (0) to 360° (2π) may be divided into four sub-ranges: 0° (0) to 90° (π/2), 90° (π/2) to 180° (π), 180° (π) to 270° (3π/2), and 270° (3π/2) to 360° (2π). A trigonometric function value calculated by using any one of the four sub-ranges may be extended to a trigonometric function value within the angle range of 0° (0) to 360° (2π). Therefore, in this application, during selection of the plurality of first reference points, the quantity of the plurality of first reference points is not less than $\lfloor N/4 \rfloor + 1$. To be specific, at least a quarter of the N reference points on the first circle of longitude are selected as the plurality of first reference points. Further, elevations of any two reference points of the selected plurality of first reference points do not overlap during calculation of a trigonometric function value.

Optionally, elevations of the plurality of first reference points may belong to one of the four sub-ranges. For example, the elevations of the plurality of first reference points are within the sub-range of 0° (0) to 90° (π/2), or the elevations of the plurality of first reference points are within the sub-range of 90° (π/2) to 180° (π), or the elevations of the plurality of first reference points are within the sub-range of 180° (π) to 270° (3π/2), or the elevations of the plurality of first reference points are within the sub-range of 270° (3π/2) to 360° (2π).

Optionally, the elevations of the plurality of first reference points may belong to at least two of the four sub-ranges. For example, an elevation of a first part of the plurality of first reference points is within the sub-range of 0° (0) to 90° (π/2), and an elevation of a second part of reference points is within the sub-range of 90° (π/2) to 180° (π), where the elevations of the two parts of reference points do not overlap during calculation of a trigonometric function value; or an elevation of a part of the plurality of first reference points is within the sub-range of 90° (π/2) to 180° (π), and an elevation of another part of reference points is within the sub-range of 180° (π) to 270° (3π/2), where the elevations of the two parts of reference points do not overlap during calculation of a trigonometric function value; or an elevation of a part of the plurality of first reference points is within the sub-range of 180° (π) to 270° (3π/2), and an elevation of another part of reference points is within the sub-range of 270° (3π/2) to 360° (2π), where the elevations of the two parts of reference points do not overlap during calculation of a trigonometric function value; or an elevation of a first part of the plurality of first reference points is within the sub-range of 0° (0) to 90° (π/2), an elevation of a second part of reference points is within the sub-range of 90° (π/2) to 180° (π), and an elevation of a third part of reference points is within the sub-range of 180° (π) to 270° (3π/2), where the elevations of the three parts of reference points do not overlap during calculation of a trigonometric function value; or an elevation of a first part of the plurality of first reference points is within the sub-range of 90° (π/2) to 180° (π), an elevation of a second part of reference points is within the sub-range of 180° (π) to 270° (3π/2), and an elevation of a third part of reference points is within the sub-range of 270° (3π/2) to 360° (2π), where the elevations of the three parts of reference points do not overlap during calculation of a trigonometric function value; or an elevation of a first part of the plurality of first reference points is within the sub-range of 0° (0) to 90° (π/2), an elevation of a second part of reference points is within the sub-range of 90° (π/2) to 180° (π), an elevation of a third part of reference points is within the sub-range of 180° (π) to 270° (3π/2), and an elevation of a fourth part of reference points is within the sub-range of 270° (3π/2) to 360° (2π), where the elevations of the four parts of reference points do not overlap during calculation of a trigonometric function value.

The not overlapping may mean that trigonometric function values calculated by using elevations belonging to different sub-ranges are not equal. For example, there are a total of four first reference points (n1, n2, n3, and n4), where an elevation of n1 is 0, an elevation of n2 is π/6, an elevation of n3 is π/3, and an elevation of n4 is π/2; or an elevation of n1 is 0, an elevation of n2 is 2/3π, an elevation of n3 is 4/3π, and an elevation of n4 is 2π. It should be noted that, in this application, a sub-range to which the elevations of the plurality of first reference points belong is not specifically limited, provided that the trigonometric function values of the elevations of the plurality of first reference points can cover trigonometric function values at all angles within one of the sub-ranges.

Correspondingly, a value range of the elevation of the location information is 0 to 2π.

As described above, the plurality of first reference points may alternatively be identified by their respective elevation indexes, and conversion may be performed between an elevation of the first reference point and an elevation difference based on an elevation index and an elevation difference between adjacent circles of latitude.

In this application, the plurality of trigonometric functions corresponding to the elevation indexes of the plurality of first reference points may be sine function values or cosine function values.

Optionally, a sine function value corresponding to an elevation index of an ith first reference point meets the following formula (1):

$$\sin\_\text{table\_N}(i) = \sin\left(\frac{\pi r_i}{2N'} \times i\right) \tag{1},$$

where

i=0, 1, ..., and N', $N' = \lfloor N/4 \rfloor$, and $r_i$ indicates a radius of the first circle of longitude. Optionally, values of i may alternatively be discontinuous within a range of 0 to $\lfloor N/4 \rfloor - 1$. For example, i=0, 2, 4, 5, 9, ..., and N'.

Optionally, a cosine function value corresponding to an elevation index of an ith first reference point meets the following formula (2):

$$\cos\_table\_N(i) = \cos\left(\frac{\pi r_i}{2N'} \times i\right) \tag{2,}$$

where

i=0, 1, ..., and N', $N' = \lfloor N/4 \rfloor$, and r; indicates a radius of the first circle of longitude.

The azimuth trigonometric function table includes a plurality of trigonometric function values corresponding to azimuth indexes of a plurality of second reference points. The plurality of second reference points are reference points on a first circle of latitude. A quantity of the plurality of second reference points is not less than $\lfloor M/4 \rfloor + 1$, where $\lfloor\ \rfloor$ indicates rounding down. The first circle of latitude is one of the N circles of latitude.

In this application, any one of the N circles of latitude is selected as the first circle of latitude, and reference points (namely, the plurality of second reference points) used for calculating the azimuth trigonometric function table are selected from the M reference points on the first circle of latitude. Similarly, according to a principle of a trigonometric function, an angle range of 0° (0) to 360° (2π) may be divided into four sub-ranges: 0° (0) to 90° (π/2), 90° (π/2) to 180° (π), 180° (π) to 270° (3π/2), and 270° (3π/2) to 360° (2π). A trigonometric function value calculated by using any one of the four sub-ranges may be extended to a trigonometric function value within the angle range of 0° (0) to 360° (2π). Therefore, in this application, during selection of the plurality of second reference points, the quantity of the plurality of second reference points is not less than $\lfloor M/4 \rfloor + 1$. To be specific, at least a quarter of the M reference points on the first circle of latitude are selected as the plurality of second reference points. Further, azimuths of any two reference points of the selected plurality of second reference points do not overlap during calculation of a trigonometric function value.

Optionally, azimuths of the plurality of second reference points may belong to one of the four sub-ranges. For example, the azimuths of the plurality of second reference points are within the sub-range of 0° (0) to 90° (π/2), or the azimuths of the plurality of second reference points are within the sub-range of 90° (π/2) to 180° (π), or the azimuths of the plurality of second reference points are within the sub-range of 180° (π) to 270° (3π/2), or the azimuths of the plurality of second reference points are within the sub-range of 270° (3π/2) to 360° (2π).

Optionally, the azimuths of the plurality of second reference points may belong to at least two of the four sub-ranges. For example, an azimuth of a first part of the plurality of second reference points is within the sub-range of 0° (0) to 90° (π/2), and an azimuth of a second part of reference points is within the sub-range of 90° (π/2) to 180° (π), where the azimuths of the two parts of reference points do not overlap during calculation of a trigonometric function value; or an azimuth of a first part of the plurality of second reference points is within the sub-range of 90° (π/2) to 180° (π), and an azimuth of a second part of reference points is within the sub-range of 180° (π) to 270° (3π/2), where the azimuths of the two parts of reference points do not overlap during calculation of a trigonometric function value; or an azimuth of a first part of the plurality of second reference points is within the sub-range of 180° (π) to 270° (3π/2), and an azimuth of a second part of reference points is within the sub-range of 270° (3π/2) to 360° (2π), where the azimuths of the two parts of reference points do not overlap during calculation of a trigonometric function value; or an azimuth of a first part of the plurality of second reference points is within the sub-range of 0° (0) to 90° (π/2), an azimuth of a second part of reference points is within the sub-range of 90° (π/2) to 180° (π), and an azimuth of a third part of reference points is within the sub-range of 180° (π) to 270° (3π/2), where the azimuths of the three parts of reference points do not overlap during calculation of a trigonometric function value; or an azimuth of a first part of the plurality of second reference points is within the sub-range of 90° (π/2) to 180° (π), an azimuth of a second part of reference points is within the sub-range of 180° (π) to 270° (3π/2), and an azimuth of a third part of reference points is within the sub-range of 270° (3π/2) to 360° (2π), where the azimuths of the three parts of reference points do not overlap during calculation of a trigonometric function value; or an azimuth of a first part of the plurality of second reference points is within the sub-range of 0° (0) to 90° (π/2), an azimuth of a second part of reference points is within the sub-range of 90° (π/2) to 180° (π), an azimuth of a third part of reference points is within the sub-range of 180° (π) to 270° (3π/2), and an azimuth of a fourth part of reference points is within the sub-range of 270° (3π/2) to 360° (2π), where the azimuths of the four parts of reference points do not overlap during calculation of a trigonometric function value.

The not overlapping may mean that trigonometric function values calculated by using azimuths belonging to different sub-ranges are not equal. For example, there are a total of four second reference points (n1, n2, n3, and n4), where an azimuth of n1 is 0, an azimuth of n2 is π/6, an azimuth of n3 is π/3, and an azimuth of n4 is π/2; or an azimuth of n1 is 0, an azimuth of n2 is 2/3π, an azimuth of n3 is 4/3π, and an azimuth of n4 is 2π. It should be noted that, in this application, a sub-range to which the azimuths of the plurality of second reference points belong is not specifically limited, provided that the trigonometric function values of the azimuths of the plurality of second reference points can cover trigonometric function values at all angles within one of the sub-ranges.

Correspondingly, a value range of the azimuth of the location information is 0 to $2\pi$.

As described above, the plurality of second reference points may alternatively be identified by their respective azimuth indexes, and conversion may be performed between an azimuth of the second reference point and an azimuth difference based on an azimuth index and an azimuth difference between adjacent circles of longitude.

In this application, the plurality of trigonometric functions corresponding to the azimuth indexes of the plurality of second reference points may be sine function values or cosine function values.

Optionally, a sine function value corresponding to an azimuth index of an $i^{th}$ second reference point meets the following formula (3):

$$\sin\_table\_M(j) = \sin\left(\frac{\pi r_j}{2M'} \times j\right) \tag{3},$$

where

j=0, 1, ..., and M', $M'=\lfloor M/4 \rfloor$, and $r_j$ indicates a radius of the first circle of latitude. Optionally, values of j may alternatively be discontinuous within a range of 0 to $\lfloor N/4 \rfloor - 1$. For example, i=1, 3, 5, 8, 9, 10, ..., and M'.

Optionally, a cosine function value corresponding to an azimuth index of an $i^{th}$ second reference point meets the following formula (4):

$$\cos\_table\_M(j) = \cos\left(\frac{\pi r_j}{2M'} \times j\right) \tag{4},$$

where

j=0, 1, ..., and M', $M'=\lfloor M/4 \rfloor$, and $r_j$ indicates a radius of the first circle of latitude.

It should be noted that the elevation trigonometric function table and the azimuth trigonometric function table may be calculated and stored in advance, or may be calculated and stored in real time based on values of M and N. Optionally, because both an encoder and a decoder perform framing, during calculation of the HOA coefficient, when a value of M of a current audio frame is equal to a value of M of a previous audio frame, an azimuth trigonometric function table may not need to be recalculated during processing of the current frame, and an azimuth trigonometric function table of the previous audio frame may be directly used; and when a value of N of the current audio frame is equal to a value of N of the previous audio frame, an elevation trigonometric function table may not need to be recalculated during processing of the current frame, and an elevation trigonometric function table of the previous audio frame may be directly used.

In this application, a trigonometric function value corresponding to the elevation information of the location information of the virtual speaker on the preset spherical surface may be obtained based on the elevation information of the location information and the elevation trigonometric function table, and/or a trigonometric function value corresponding to the azimuth information of the location information of the virtual speaker on the preset spherical surface may be obtained based on the azimuth information of the location information and the azimuth trigonometric function table.

It can be learned that, for the location information of the virtual speaker on the preset spherical surface, the trigonometric function value corresponding to the location information may be obtained based on specific content included in the location information and specific content of the preset reference trigonometric function table. To be specific, the location information includes the elevation information, and the trigonometric function value corresponding to the elevation information of the location information may be obtained based on the elevation information and the reference trigonometric function table (if the elevation trigonometric function table exists, the elevation trigonometric function table is used; or if no elevation trigonometric function table exists, the azimuth trigonometric function table is used); and the location information includes the azimuth information, and the trigonometric function value corresponding to the azimuth information of the location information may be obtained based on the azimuth information and the reference trigonometric function table (if the azimuth trigonometric function table exists, the azimuth trigonometric function table is used; or if no azimuth trigonometric function table exists, the elevation trigonometric function table is used).

In this application, the trigonometric function value corresponding to the elevation information of the location information may be obtained by using the following several methods.

1. When the elevation information of the location information corresponds to an elevation index of a reference point of the plurality of first reference points, a trigonometric function value that is in the elevation trigonometric function table and that corresponds to the elevation index of the reference point is used as the trigonometric function value corresponding to the elevation information of the location information.

That the elevation information of the location information corresponds to an elevation index of a reference point of the plurality of first reference points indicates that the elevation corresponding to the location of the virtual speaker on the preset spherical surface is exactly equal to an elevation corresponding to an elevation index in the elevation trigonometric function table, or the elevation index corresponding to the location of the virtual speaker on the preset spherical surface is exactly equal to an elevation index in the elevation trigonometric function table, to be specific, the location of the virtual speaker on the preset spherical surface coincides with a location of a reference point selected for obtaining the elevation trigonometric function table. Therefore, the trigonometric function value of the elevation information may be directly queried from the elevation trigonometric function table.

2. When the elevation information of the location information corresponds to an elevation index of a reference point of N reference points other than the plurality of first reference points, the elevation index of the reference point of the N reference points other than the plurality of first reference points is converted into an elevation index of a reference point of the plurality of first reference points, and a trigonometric function value that is in the elevation trigonometric function table and that corresponds to the elevation index of the reference point is used as the trigonometric function value corresponding to the elevation information of the location information.

That the elevation information of the location information corresponds to an elevation index of a reference point of N reference points other than the plurality of first reference points indicates that the elevation information corresponding to the location of the virtual speaker on the preset spherical surface is not equal to an elevation corresponding to any elevation index in the elevation trigonometric function table, but is equal to an angle corresponding to an elevation index of another reference point on the first circle of longitude, or the elevation index corresponding to the location of the virtual speaker on the preset spherical surface is equal to an elevation index of another reference point on the first circle of longitude, to be specific, the location of the virtual speaker on the preset spherical surface coincides with a location of a reference point, where the reference point is not used for obtaining the elevation trigonometric function table, but an elevation index of the reference point has a trigonometric function correspondence with an elevation index in the trigonometric function table. Therefore, an elevation index of a reference point of N reference points other than the plurality of first reference points may be converted into an elevation index of a reference point of the plurality of first reference points according to a principle of a trigonometric function; and then a trigonometric function value corresponding to the elevation index of the reference point of the plurality of first reference points is obtained through table lookup, and the trigonometric function value corresponding to the elevation index of the reference point of the plurality of first reference points is used as the trigonometric function value corresponding to the elevation information of the location information.

3. When the elevation information of the location information does not correspond to an elevation index of any reference point, elevation information of a reference point corresponding to the elevation information of the location information is obtained based on the elevation information of the location information; and when the elevation information of the reference point corresponding to the elevation information of the location information corresponds to an elevation index of a reference point of the plurality of first reference points, a trigonometric function value that is in the elevation trigonometric function table and that corresponds to the elevation index of the reference point is used as the trigonometric function value corresponding to the elevation information of the location information; or when the elevation information of the reference point corresponding to the elevation information of the location information corresponds to an elevation index of a reference point of N reference points other than the plurality of first reference points, the elevation index of the reference point of the N reference points other than the plurality of first reference points is converted into an elevation index of a reference point of the plurality of first reference points, and a trigonometric function value that is in the elevation trigonometric function table and that corresponds to the elevation index of the reference point is used as the trigonometric function value corresponding to the elevation information of the location information.

That the elevation information of the location information does not correspond to an elevation index of any reference point indicates that the location of the virtual speaker on the preset spherical surface is neither on a circle of longitude nor on a circle of latitude. Therefore, the elevation information of the reference point corresponding to the elevation information of the location information is first obtained; and then the trigonometric function value corresponding to the elevation information of the reference point is obtained according to the method 1 or the method 2, and the trigonometric function value corresponding to the elevation information of the reference point is used as the trigonometric function value corresponding to the elevation information of the location information.

Optionally, the elevation $\varphi$ and the elevation index $\varphi'$ meet the following formula (5):

$$\varphi' = \text{round}\left(\frac{\varphi}{2\pi r_i \times N}\right) \qquad (5),$$

where

$r_i$ indicates a radius of the first circle of longitude, and round() indicates rounding.

In this application, the trigonometric function value corresponding to the azimuth information of the location information may be obtained by using the following several methods.

1. When the azimuth information of the location information corresponds to an azimuth index of a reference point of the plurality of second reference points, a trigonometric function value that is in the azimuth trigonometric function table and that corresponds to the azimuth index of the reference point is used as the trigonometric function value corresponding to the azimuth information of the location information.

That the azimuth information of the location information corresponds to an azimuth index of a reference point of the plurality of second reference points indicates that the azimuth corresponding to the location of the virtual speaker on the preset spherical surface is exactly equal to an azimuth corresponding to an azimuth index in the azimuth trigonometric function table, or the azimuth index corresponding to the location of the virtual speaker on the preset spherical surface is exactly equal to an azimuth index in the azimuth trigonometric function table, to be specific, the location of the virtual speaker on the preset spherical surface coincides with a location of a reference point selected for obtaining the azimuth trigonometric function table. Therefore, the trigonometric function value of the azimuth information may be directly queried from the azimuth trigonometric function table.

2. When the azimuth information of the location information corresponds to an azimuth index of a reference point of M reference points other than the plurality of second reference points, the azimuth index of the reference point of the M reference points other than the plurality of second reference points is converted into an azimuth index of a reference point of the plurality of second reference points, and a trigonometric function value that is in the azimuth trigonometric function table and that corresponds to the azimuth index of the reference point is used as the trigonometric function value corresponding to the azimuth information of the location information.

That the azimuth information of the location information corresponds to an azimuth index of a reference point of M reference points other than the plurality of second reference points indicates that the azimuth information corresponding to the location of the virtual speaker on the preset spherical surface is not equal to an elevation corresponding to any elevation index in the azimuth trigonometric function table, but is equal to an angle corresponding to an azimuth index of another reference point on the first circle of latitude, or the azimuth index corresponding to the location of the virtual speaker on the preset spherical surface is equal to an azimuth index of another reference point on the first circle of latitude, to be specific, the location of the virtual speaker on the preset spherical surface coincides with a location of a reference point, where the reference point is not used for obtaining the azimuth trigonometric function table, but an azimuth index of the reference point has a trigonometric function correspondence with an azimuth index in the trigonometric function table. Therefore, an azimuth index of a reference point of M reference points other than the plurality of second reference points may be converted into an azimuth index of a reference point of the plurality of second reference points according to a principle of a trigonometric function; and then a trigonometric function value corresponding to the azimuth index of the reference point of the plurality of second reference points is obtained through table lookup, and the trigonometric function value corresponding to the azimuth index of the reference point of the plurality of second reference points is used as the trigonometric function value corresponding to the azimuth information of the location information.

3. When the azimuth information of the location information does not correspond to an azimuth index of any reference point, azimuth information of a reference point corresponding to the azimuth information of the location information is obtained based on the azimuth information of the location information; and when the azimuth information of the reference point corresponding to the azimuth information of the location information corresponds to an azimuth index of a reference point of the plurality of second reference points, a trigonometric function value that is in the azimuth trigonometric function table and that corresponds to the azimuth index of the reference point is used as the trigonometric function value corresponding to the azimuth information of the location information; or when the azimuth information of the reference point corresponding to the azimuth information of the location information corresponds to an azimuth index of a reference point of M reference points other than the plurality of second reference points, the azimuth index of the reference point of the M reference points other than the plurality of second reference points is converted into an azimuth index of a reference point of the plurality of second reference points, and a trigonometric function value that is in the azimuth trigonometric function table and that corresponds to the azimuth index of the reference point is used as the trigonometric function value corresponding to the azimuth information of the location information.

That the azimuth information of the location information does not correspond to an azimuth index of any reference point indicates that the location of the virtual speaker on the preset spherical surface is neither on a circle of longitude nor on a circle of latitude. Therefore, the azimuth information of the reference point corresponding to the azimuth information of the location information is first obtained; and then the trigonometric function value corresponding to the azimuth information of the reference point is obtained according to the method 1 or the method 2, and the trigonometric function value corresponding to the azimuth information of the reference point is used as the trigonometric function value corresponding to the azimuth information of the location information.

Optionally, the azimuth θ and the azimuth index θ' meet the following formula (6):

$$\theta' = \text{round}\left(\frac{\theta}{2\pi r_j \times M}\right) \tag{6},$$

where

$r_j$ indicates a radius of the first circle of latitude, and round() indicates rounding.

Step 403: Obtain an HOA coefficient for the virtual speaker based on the trigonometric function value corresponding to the location information.

The following describes a process of generating the HOA coefficient for the virtual speaker.

When a sound wave is transmitted in an ideal medium, a wave velocity of the sound wave is as follows: k=w/c, where the angular frequency w is equal to 2πf, f indicates a frequency of the sound wave, and c indicates a sound velocity. Therefore, sound pressure p meets the following formula (7):

$$\nabla^2 p + k^2 p = 0 \tag{7},$$

where

$\nabla^2$ is a Laplace operator.

The following formula (8) may be obtained for the sound pressure p by solving the formula (7) in spherical coordinates:

$$p(r, \theta, \varphi, k) = s \sum_{m=0}^{\infty} (2m + 1) j^m j_m^{kr}(kr) \sum_{0 \le n \le m, \sigma = \pm 1} Y_{m,n}^{\sigma}(\theta_s, \varphi_s) Y_{m,n}^{\sigma}(\theta, \varphi) \tag{8},$$

where

r indicates a radius of a sphere, θ indicates an azimuth, φ indicates an elevation, k indicates a wave velocity, s indicates an amplitude of an ideal planar wave, m indicates a sequence number of an HOA order, $j^m j_m^{kr}(kr)$ indicates a spherical Bessel function, also referred to as a radial basis function, where the 1st j is an imaginary unit, $(2m + 1) j^m j_m^{kr}(kr)$ does not change with an angle, $Y_{m,n}^{\sigma}(\theta, \varphi)$ is a spherical harmonic function corresponding to θ and φ, and $Y_{m,n}^{\sigma}(\theta_s, \varphi_s)$ is a spherical harmonic function in a sound source direction.

An ambisonics (Ambisonics) coefficient is as follows: $B_{m,n}^{\sigma} = s \cdot Y_{m,n}^{\sigma}(\theta_s, \varphi_s)$ (9)

Therefore, a general expansion form (10) for the sound pressure p may be obtained:

$$p(r, \theta, \varphi, k) = \sum_{m=0}^{\infty} j^m j_m^{kr}(kr) \sum_{0 \le n \le m, \sigma = \pm 1} B_{m,n}^{\sigma} Y_{m,n}^{\sigma}(\theta, \varphi) \tag{10}$$

The formula (9) may indicate that a sound field may be expanded on a spherical surface based on a spherical harmonic function, and the sound field is represented by an ambisonics coefficient.

Correspondingly, if the ambisonics coefficient is known, the sound field may be reconstructed. The formula (9) is truncated to an N$^{th}$ item, and the ambisonics coefficient is used as an approximate description of the sound field, and therefore is referred to as an N$^{th}$-order HOA coefficient. The HOA coefficient is also referred to as an ambisonics coefficient. The N$^{th}$-order ambisonics coefficient has a total of (N+1)$^2$ channels. Optionally, an HOA order may range from a 2$^{nd}$ order to a 10$^{th}$ order. A spatial sound field at a moment corresponding to a sampling point of an HOA signal can be reconstructed by superposing spherical harmonic functions based on a coefficient corresponding to the sampling point. The HOA coefficient for the virtual speaker may be generated according to this principle. $\theta_s$ and $\varphi_s$ in the formula (9) are respectively set to the location information, namely, the azimuth and the elevation, of the virtual speaker. The HOA coefficient, also referred to as an ambisonics coefficient, for the virtual speaker may be obtained based on the formula (9). For example, for a 3$^{rd}$-order HOA signal, assuming that s=1, a 16-channel HOA coefficient corresponding to the 3$^{rd}$-order HOA signal may be obtained based on the spherical harmonic function $Y_{m,n}^{\sigma}(\theta_s, \varphi_s)$. A calculation formula for the 16-channel HOA coefficient corresponding to the 3$^{rd}$-order HOA signal is specifically shown in Table 1.

**Table 1**

| l | m | Expression in polar coordinates |
|---|---|---|
| 0 | 0 | $\dfrac{1}{2\sqrt{\pi}}$ |
| 1 | 0 | $\dfrac{1}{2}\sqrt{\dfrac{3}{\pi}}\cos\theta$ |
|  | +1 | $\dfrac{1}{2}\sqrt{\dfrac{3}{\pi}}\sin\theta\cos\varphi$ |
|  | -1 | $\dfrac{1}{2}\sqrt{\dfrac{3}{\pi}}\sin\theta\sin\varphi$ |
| 2 | 0 | $\dfrac{1}{4}\sqrt{\dfrac{5}{\pi}}(3cos^2\theta - 1)$ |
|  | +1 | $\dfrac{1}{2}\sqrt{\dfrac{15}{\pi}}\sin\theta\cos\theta\cos\varphi$ |
|  | -1 | $\dfrac{1}{2}\sqrt{\dfrac{15}{\pi}}\sin\theta\cos\theta\sin\varphi$ |
|  | +2 | $\dfrac{1}{4}\sqrt{\dfrac{15}{\pi}}sin^2\theta\cos 2\varphi$ |
|  | -2 | $\dfrac{1}{4}\sqrt{\dfrac{15}{\pi}}sin^2\theta\sin 2\varphi$ |

(continued)

| l | m | Expression in polar coordinates |
|---|---|---|
| 3 | 0 | $\frac{1}{4}\sqrt{\frac{7}{\pi}}(5cos^3\theta - 3\cos\theta)$ |
| | +1 | $\frac{1}{4}\sqrt{\frac{21}{2\pi}}(5cos^2\theta - 1)\sin\theta\cos\varphi$ |
| | -1 | $\frac{1}{4}\sqrt{\frac{21}{2\pi}}(5cos^2\theta - 1)\sin\theta\sin\varphi$ |
| | +2 | $\frac{1}{4}\sqrt{\frac{105}{\pi}}\cos\theta\,sin^2\theta\cos 2\varphi$ |
| | -2 | $\frac{1}{4}\sqrt{\frac{105}{\pi}}\cos\theta\,sin^2\theta\sin 2\varphi$ |
| | +3 | $\frac{1}{4}\sqrt{\frac{35}{2\pi}}sin^3\theta\cos 3\varphi$ |
| | -3 | $\frac{1}{4}\sqrt{\frac{35}{2\pi}}sin^3\theta\sin 3\varphi$ |

In Table 1, θ indicates the azimuth information of the location information of the virtual speaker on the preset spherical surface, φ indicates the elevation information of the location information of the virtual speaker on the preset spherical surface, l indicates an HOA order, l=0, 1, ..., and N, m indicates a direction parameter at each order, and m=-l, ..., and l. Based on the expression in the polar coordinates in Table 1, a 16-channel HOA coefficient corresponding to a 3rd-order HOA signal of the virtual speaker may be obtained based on the location information of the virtual speaker. In addition, the method of the present invention may also be used to obtain an HOA coefficient of any order that is obtained through expansion of a spherical harmonic function.

In this application, only trigonometric function values (an elevation trigonometric function table) of a quarter of all reference points on a circle of longitude on the preset spherical surface and/or trigonometric function values (an azimuth trigonometric function table) of a quarter of all reference points on a circle of latitude on the preset spherical surface need to be pre-obtained, and trigonometric function values at any angles ranging from 0° to 360° may be obtained based on the trigonometric function table. Other trigonometric functions such as a power trigonometric function and a multiple-angle trigonometric function in Table 1 may be expanded in the conventional technology, to obtain a general expansion form including a sin trigonometric function and a cos trigonometric function, and then other corresponding trigonometric function values may be obtained by using the method of the present invention. In this way, an amount of calculation in a preliminary stage can be reduced. In addition, because a quantity of angles in the trigonometric function table is reduced, an amount of data, that needs to be stored, of the trigonometric function table is also correspondingly reduced, so that storage space can be saved.

Several specific embodiments are used below as examples to describe a method for obtaining trigonometric function values respectively corresponding to elevation information and azimuth information of location information, φ indicates the elevation information of the location information, or indicates elevation information of a reference point corresponding to the location information, φ' indicates an elevation index. θ indicates the azimuth information of the location information, or indicates azimuth information of a reference point corresponding to the location information. θ' indicates an azimuth index.

It should be noted that, in this application, the elevation information and the azimuth information may be represented by index numbers. For example, there are N reference points on a circle of longitude, the N reference points are arranged at equal spacings, and a difference between elevation information of two adjacent reference points is $2\pi/N$. Therefore, elevation information of each of the N reference points may be represented by an index number of the reference point, that is, elevation information of the N reference points may be represented as 0 to N-1. If a quantity of a plurality of first reference points is $\lfloor N/4 \rfloor + 1$, elevation information of the plurality of first reference points may be represented as 0 to [N/4]. Similarly, there are M reference points on a circle of latitude, the M reference points are arranged at equal spacings, and a difference between azimuth information of two adjacent reference points is $2\pi/M$. Therefore, azimuth information of each of the M reference points may be represented by an index number of the reference point, that is, azimuth information of the M reference points may be represented as 0 to M-1. If a quantity of a plurality of second reference points is $\lfloor M/4 \rfloor + 1$, azimuth information of the plurality of second reference points may be represented as 0 to $\lfloor M/4 \rfloor$ In this application, a relationship between the elevation φ and the elevation index φ' may be obtained by using the formula (5), and a relationship between the azimuth θ and the azimuth index θ' may be obtained by using the formula (6).

**Embodiment 1**

M≠N, and an elevation sine function table sin_table_N and an azimuth sine function table sin_table_M are preset by using the method in step 402.

A sine function value and a cosine function value corresponding to elevation information of location information may be obtained according to the following rules:

$$\sin(\varphi)=\text{sin\_table\_N}(\varphi') \qquad\qquad \varphi'<\lfloor N/4 \rfloor$$

$$\sin(\varphi)=\text{sin\_table\_N}(N/2-\varphi') \qquad\qquad \lfloor N/4 \rfloor \leq \varphi' < \lfloor N/2 \rfloor$$

$$\sin(\varphi)=-\text{sin\_table\_N}(\varphi'-N/2) \qquad\qquad \lfloor N/2 \rfloor \leq \varphi' < \lfloor 3N/4 \rfloor$$

$$\sin(\varphi)=-\text{sin\_table\_N}(N-\varphi') \qquad\qquad \lfloor 3N/4 \rfloor \leq \varphi' < N$$

$$\cos(\varphi)=\text{sin\_table\_N}(N/4-\varphi') \qquad\qquad \varphi'<\lfloor N/4 \rfloor$$

$$\cos(\varphi)=-\text{sin\_table\_N}(\varphi'-N/4) \qquad\qquad \lfloor N/4 \rfloor \leq \varphi' < \lfloor N/2 \rfloor$$

$$\cos(\varphi)=-\text{sin\_table\_N}(3N/4-\varphi') \qquad\qquad \lfloor N/2 \rfloor \leq \varphi' < \lfloor 3N/4 \rfloor$$

$$\cos(\varphi)=\text{sin\_table\_N}(\varphi'-3N/4) \qquad\qquad \lfloor 3N/4 \rfloor \leq \varphi' < N$$

A sine function value and a cosine function value corresponding to azimuth information of the location information may be obtained according to the following rules:

$$\sin(\theta)=\text{sin\_table\_M}(\theta') \qquad\qquad \theta'<\lfloor M/4 \rfloor$$

$$\sin(\theta)=\text{sin\_table\_M}(M/2-\theta') \qquad\qquad \lfloor M/4 \rfloor \leq \theta' < \lfloor M/2 \rfloor$$

$$\sin(\theta)=-\text{sin\_table\_M}(\theta'-M/2) \qquad\qquad \lfloor M/2 \rfloor \leq \theta' < \lfloor 3M/4 \rfloor$$

$$\sin(\theta) = -\sin\_table\_M(M-\theta') \qquad \lfloor 3M/4 \rfloor \le \theta' < M$$

$$\cos(\theta) = \sin\_table\_M(M/4-\theta') \qquad \theta' < \lfloor M/4 \rfloor$$

$$\cos(\theta) = -\sin\_table\_M(\theta'-M/4) \qquad \lfloor M/4 \rfloor \le \theta' < \lfloor M/2 \rfloor$$

$$\cos(\theta) = -\sin\_table\_M(3M/4-\theta') \qquad \lfloor M/2 \rfloor \le \theta' < \lfloor 3M/4 \rfloor$$

$$\cos(\theta) = \sin\_table\_M(\theta'-3M/4) \qquad \lfloor 3M/4 \rfloor \le \theta' < M$$

**Embodiment 2**

M=N, and an elevation sine function table sin_table_N is preset by using the method in step 402. Because M is equal to N, an azimuth sine function table sin_table_M is the same as the elevation sine function table sin_table_N. In this embodiment, only one trigonometric function table, for example, sin table, may be obtained. This can further reduce an amount of calculation and an amount of storage for a trigonometric function table, and save storage space.

A sine function value and a cosine function value corresponding to elevation information of location information may be obtained according to the following rules:

$$\sin(\varphi) = \sin\_table(\varphi') \qquad \varphi' < \lfloor N/4 \rfloor$$

$$\sin(\varphi) = \sin\_table(N/2-\varphi') \qquad \lfloor N/4 \rfloor \le \varphi' < \lfloor N/2 \rfloor$$

$$\sin(\varphi) = -\sin\_table(\varphi'-N/2) \qquad \lfloor N/2 \rfloor \le \varphi' < \lfloor 3N/4 \rfloor$$

$$\sin(\varphi) = -\sin\_table(N-\varphi') \qquad \lfloor 3N/4 \rfloor \le \varphi' < N$$

$$\cos(\varphi) = \sin\_table(N/4-\varphi') \qquad \varphi' < \lfloor N/4 \rfloor$$

$$\cos(\varphi) = -\sin\_table(\varphi'-N/4) \qquad \lfloor N/4 \rfloor \le \varphi' < \lfloor N/2 \rfloor$$

$$\cos(\varphi) = -\sin\_table(3N/4-\varphi') \qquad \lfloor N/2 \rfloor \le \varphi' < \lfloor 3N/4 \rfloor$$

$$\cos(\varphi) = \sin\_table(\varphi'-3N/4) \qquad \lfloor 3N/4 \rfloor \le \varphi' < N$$

A sine function value and a cosine function value corresponding to azimuth information of the location information may be obtained according to the following rules:

$$\sin(\theta) = \sin\_table(\theta') \qquad \theta' < \lfloor N/4 \rfloor$$

$$\sin(\theta) = \sin\_table(N/2-\theta') \qquad \lfloor N/4 \rfloor \le \theta' < \lfloor N/2 \rfloor$$

EP 4 294 047 A1

$$\sin(\theta)=-\sin\_table(\theta'-N/2) \qquad\qquad \lfloor N/2\rfloor\leq\theta'<\lfloor 3N/4\rfloor$$

$$\sin(\theta)=-\sin\_table(N-\theta') \qquad\qquad \lfloor 3N/4\rfloor\leq\theta'<N$$

$$\cos(\theta)=\sin\_table(N/4-\theta') \qquad\qquad \theta'<\lfloor N/4\rfloor$$

$$\cos(\theta)=-\sin\_table(\theta'-N/4) \qquad\qquad \lfloor N/4\rfloor\leq\theta'<\lfloor N/2\rfloor$$

$$\cos(\theta)=-\sin\_table(3N/4-\theta') \qquad\qquad \lfloor N/2\rfloor\leq\theta'<\lfloor 3N/4\rfloor$$

$$\cos(\theta)=\sin\_table(\theta'-3N/4) \qquad\qquad \lfloor 3N/4\rfloor\leq\theta'<N$$

**Embodiment** 3

$M\neq N$, $M=K1\times N$, $K1\geq 2$, and an azimuth sine function table sin_table_M is preset by using the method in step 402. Because M and N have a multiple relationship, an elevation sine function table sin_table_N may be obtained based on the multiple relationship in combination with a principle of a trigonometric function. Therefore, in this embodiment, only one trigonometric function table, for example, sin table M, may be obtained. This can further reduce an amount of calculation and an amount of storage for a trigonometric function table, and save storage space.

A sine function value and a cosine function value corresponding to azimuth information of location information may be obtained according to the following rules:

$$\sin(\theta)=\sin\_table\_M(\theta') \qquad\qquad \theta'<\lfloor M/4\rfloor$$

$$\sin(\theta)=\sin\_table\_M(M/2-\theta') \qquad\qquad \lfloor M/4\rfloor\leq\theta'<\lfloor M/2\rfloor$$

$$\sin(\theta)=-\sin\_table\_M(\theta'-M/2) \qquad\qquad \lfloor M/2\rfloor\leq\theta'<\lfloor 3M/4\rfloor$$

$$\sin(\theta)=-\sin\_table\_M(M-\theta') \qquad\qquad \lfloor 3M/4\rfloor\leq\theta'<M$$

$$\cos(\theta)=\sin\_table\_M(M/4-\theta') \qquad\qquad \theta'<\lfloor M/4\rfloor$$

$$\cos(\theta)=-\sin\_table\_M(\theta'-M/4) \qquad\qquad \lfloor M/4\rfloor\leq\theta'<\lfloor M/2\rfloor$$

$$\cos(\theta)=-\sin\_table\_M(3M/4-\theta') \qquad\qquad \lfloor M/2\rfloor\leq\theta'<\lfloor 3M/4\rfloor$$

$$\cos(\theta)=\sin\_table\_M(\theta'-3M/4) \qquad\qquad \lfloor 3M/4\rfloor\leq\theta'<M$$

A sine function value and a cosine function value corresponding to elevation information of the location information may be obtained according to the following rules:

$$\sin(\varphi)=\sin\_table\_M(K1\times\varphi') \qquad\qquad K1\times\varphi'<\lfloor M/4\rfloor$$

32

$$\sin(\varphi)=\sin\_table\_M(M/2-K1\times\varphi') \qquad \lfloor M/4 \rfloor \leq K1\times\varphi' < \lfloor M/2 \rfloor$$

$$\sin(\varphi)=-\sin\_table\_M(K1\times\varphi'-M/2) \qquad \lfloor M/2 \rfloor \leq K1\times\varphi' < \lfloor 3M/4 \rfloor$$

$$\sin(\varphi)=-\sin\_table\_M(M-K1\times\varphi') \qquad \lfloor 3M/4 \rfloor \leq K1\times\varphi' < M$$

$$\cos(\varphi)=\sin\_table\_M(M/4-K1\times\varphi') \qquad K1\times\varphi' < \lfloor M/4 \rfloor$$

$$\cos(\varphi)=-\sin\_table\_M(K1\times\varphi'-M/4) \qquad \lfloor M/4 \rfloor \leq K1\times\varphi' < \lfloor M/2 \rfloor$$

$$\cos(\varphi)=-\sin\_table\_M(3M/4-K1\times\varphi') \qquad \lfloor M/2 \rfloor \leq K1\times\varphi' < \lfloor 3M/4 \rfloor$$

$$\cos(\varphi)=\sin\_table\_M(K1\times\varphi'-3M/4) \qquad \lfloor 3M/4 \rfloor \leq K1\times\varphi' < M$$

**Embodiment 4**

$M\neq N$, $N=K2\times M$, $K2\geq 2$, and an elevation sine function table sin_table N is preset by using the method in step 402. Because M and N have a multiple relationship, an azimuth sine function table sin_table_M may be obtained based on the multiple relationship in combination with a principle of a trigonometric function. Therefore, in this embodiment, only one trigonometric function table, for example, sin table N, may be obtained. This can further reduce an amount of calculation and an amount of storage for a trigonometric function table, and save storage space.

A sine function value and a cosine function value corresponding to elevation information of location information may be obtained according to the following rules:

$$\sin(\varphi)=\sin\_table\_N(\varphi') \qquad \varphi' < \lfloor N/4 \rfloor$$

$$\sin(\varphi)=\sin\_table\_N(N/2-\varphi') \qquad \lfloor N/4 \rfloor \leq \varphi' < \lfloor N/2 \rfloor$$

$$\sin(\varphi)=-\sin\_table\_N(\varphi'-N/2) \qquad \lfloor N/2 \rfloor \leq \varphi' < \lfloor 3N/4 \rfloor$$

$$\sin(\varphi)=-\sin\_table\_N(N-\varphi') \qquad \lfloor 3N/4 \rfloor \leq \varphi' < N$$

$$\cos(\varphi)=\sin\_table\_N(N/4-\varphi') \qquad \varphi' < \lfloor N/4 \rfloor$$

$$\cos(\varphi)=-\sin\_table\_N(\varphi'-N/4) \qquad \lfloor N/4 \rfloor \leq \varphi' < \lfloor N/2 \rfloor$$

$$\cos(\varphi)=-\sin\_table\_N(3N/4-\varphi') \qquad \lfloor N/2 \rfloor \leq \varphi' < \lfloor 3N/4 \rfloor$$

$$\cos(\varphi)=\sin\_table\_N(\varphi'-3N/4) \qquad \lfloor 3N/4 \rfloor \leq \varphi' < N$$

A sine function value and a cosine function value corresponding to azimuth information of the location information may be obtained according to the following rules:

$$\sin(\theta)=\sin\_table\_N(K2\times\theta') \qquad\qquad K2\times\theta'<\lfloor N/4\rfloor$$

$$\sin(\theta)=\sin\_table\_N(N/2-K2\times\theta') \qquad\qquad \lfloor N/4\rfloor\leq K2\times\theta'<\lfloor N/2\rfloor$$

$$\sin(\theta)=-\sin\_table\_N(K2\times\theta'-N/2) \qquad\qquad \lfloor N/2\rfloor\leq K2\times\theta'<\lfloor 3N/4\rfloor$$

$$\sin(\theta)=-\sin\_table\_N(N-K2\times\theta') \qquad\qquad \lfloor 3N/4\rfloor\leq K2\times\theta'<N$$

$$\cos(\theta)=\sin\_table\_N(N/4-K2\times\theta') \qquad\qquad K2\times\theta'<\lfloor N/4\rfloor$$

$$\cos(\theta)=-\sin\_table\_N(K2\times\theta'-N/4) \qquad\qquad \lfloor N/4\rfloor\leq K2\times\theta'<\lfloor N/2\rfloor$$

$$\cos(\theta)=-\sin\_table\_N(3N/4-K2\times\theta') \qquad\qquad \lfloor N/2\rfloor\leq K2\times\theta'<\lfloor 3N/4\rfloor$$

$$\cos(\theta)=\sin\_table\_N(K2\times\theta'-3N/4) \qquad\qquad \lfloor 3N/4\rfloor\leq K2\times\theta'<N$$

**Embodiment 5**

M≠N, and an elevation cosine function table cos_table_N and an azimuth cosine function table cos_table_M are preset by using the method in step 402.

A sine function value and a cosine function value corresponding to elevation information of location information may be obtained according to the following rules:

$$\sin(\theta)=\cos\_table\_N(N/4-\theta') \qquad\qquad \theta'<\lfloor N/4\rfloor$$

$$\sin(\theta)=\cos\_table\_N(\theta'-N/4) \qquad\qquad \lfloor N/4\rfloor\leq\theta'<\lfloor N/2\rfloor$$

$$\sin(\theta)=-\cos\_table\_N(3N/4-\theta') \qquad\qquad \lfloor N/2\rfloor\leq\theta'<\lfloor 3N/4\rfloor$$

$$\sin(\theta)=-\cos\_table\_N(\theta'-3N/4) \qquad\qquad \lfloor 3N/4\rfloor\leq\theta'<N$$

$$\cos(\theta)=\cos\_table\_N(\theta') \qquad\qquad \theta'<\lfloor N/4\rfloor$$

$$\cos(\theta)=-\cos\_table\_N(N/2-\theta') \qquad\qquad \lfloor N/4\rfloor\leq\theta'<\lfloor N/2\rfloor$$

$$\cos(\theta)=-\cos\_table\_N(\theta'-N/2) \qquad\qquad \lfloor N/2\rfloor\leq\theta'<\lfloor 3N/4\rfloor$$

$$\cos(\theta)=\cos\_table\_N(N-\theta') \qquad\qquad \lfloor 3N/4\rfloor\leq\theta'<N$$

A sine function value and a cosine function value corresponding to azimuth information of the location information may be obtained according to the following rules:

$$\sin(\theta)=\cos\_table\_M(M/4-\theta') \qquad\qquad \theta'<\lfloor M/4\rfloor$$

$$\sin(\theta)=\cos\_table\_M(\theta'-M/4) \qquad\qquad \lfloor M/4\rfloor\leq\theta'<\lfloor M/2\rfloor$$

$$\sin(\theta)=-\cos\_table\_M(3M/4-\theta') \qquad\qquad \lfloor M/2\rfloor\leq\theta'<\lfloor 3M/4\rfloor$$

$$\sin(\theta)=-\cos\_table\_M(\theta'-3M/4) \qquad\qquad \lfloor 3M/4\rfloor\leq\theta'<M$$

$$\cos(\theta)=\cos\_table\_M(\theta') \qquad\qquad \theta'<\lfloor M/4\rfloor$$

$$\cos(\theta)=-\cos\_table\_M(M/2-\theta') \qquad\qquad \lfloor M/4\rfloor\leq\theta'<\lfloor M/2\rfloor$$

$$\cos(\theta)=-\cos\_table\_M(\theta'-M/2) \qquad\qquad \lfloor M/2\rfloor\leq\theta'<\lfloor 3M/4\rfloor$$

$$\cos(\theta)=\cos\_table\_M(M-\theta') \qquad\qquad \lfloor 3M/4\rfloor\leq\theta'<M$$

FIG. 7 is a diagram of an example structure of an apparatus for obtaining an HOA coefficient according to this application. As shown in FIG. 7, the apparatus may be used in the encoder 20 or the decoder 30 in the foregoing embodiments. The apparatus for obtaining an HOA coefficient in this embodiment may include an obtaining module 701 and a calculation module 702.

The obtaining module 701 is configured to obtain location information of a virtual speaker on a preset spherical surface, where the location information includes elevation information and/or azimuth information, the preset spherical surface includes M circles of longitude and N circles of latitude, an intersection between the circle of longitude and the circle of latitude is referred to as a reference point, N reference points located on one circle of longitude are arranged at equal spacings, and M reference points located on one circle of latitude are arranged at equal spacings. The calculation module 702 is configured to: obtain, based on the location information and a preset reference trigonometric function table, a trigonometric function value corresponding to the location information, where the reference trigonometric function table includes an elevation trigonometric function table and/or an azimuth trigonometric function table, the elevation trigonometric function table includes a plurality of trigonometric function values corresponding to elevation indexes of a plurality of first reference points, the plurality of first reference points are reference points on a first circle of longitude, a quantity of the plurality of first reference points is not less than $\lfloor N/4\rfloor+1$, $\lfloor\ \rfloor$ indicates rounding down, the first circle of longitude is one of the M circles of longitude, the azimuth trigonometric function table includes a plurality of trigonometric function values corresponding to azimuth indexes of a plurality of second reference points, the plurality of second reference points are reference points on a first circle of latitude, a quantity of the plurality of second reference points is not less than $\lfloor M/4\rfloor+1$, and the first circle of latitude is one of the N circles of latitude; and obtain a higher order ambisonics HOA coefficient for the virtual speaker based on the trigonometric function value corresponding to the location information.

In a possible implementation, the calculation module 702 is specifically configured to: obtain, based on the elevation information of the location information and the elevation trigonometric function table, a trigonometric function value corresponding to the elevation information of the location information; and/or obtain, based on the azimuth information of the location information and the azimuth trigonometric function table, a trigonometric function value corresponding to the azimuth information of the location information.

In a possible implementation, the calculation module is specifically configured to: when the elevation information of the location information corresponds to an elevation index of a reference point of the plurality of first reference points, use, as the trigonometric function value corresponding to the elevation information of the location information, a trigonometric function value that is in the elevation trigonometric function table and that corresponds to the elevation index of the reference point; or when the elevation information of the location information corresponds to an elevation index of a reference point of N reference points other than the plurality of first reference points, convert the elevation index of the reference point of the N reference points other than the plurality of first reference points into an elevation index of a reference point of the plurality of first reference points, and use, as the trigonometric function value corresponding to the elevation information of the location information, a trigonometric function value that is in the elevation trigonometric function table and that corresponds to the elevation index of the reference point; or when the elevation information of the location information does not correspond to an elevation index of any reference point, obtain, based on the elevation information of the location information, elevation information of a reference point corresponding to the elevation information of the location information; and when the elevation information of the reference point corresponding to the elevation information of the location information corresponds to an elevation index of a reference point of the plurality of first reference points, use, as the trigonometric function value corresponding to the elevation information of the location information, a trigonometric function value that is in the elevation trigonometric function table and that corresponds to the elevation index of the reference point; or when the elevation information of the reference point corresponding to the elevation information of the location information corresponds to an elevation index of a reference point of N reference points other than the plurality of first reference points, convert the elevation index of the reference point of the N reference points other than the plurality of first reference points into an elevation index of a reference point of the plurality of first reference points, and use, as the trigonometric function value corresponding to the elevation information of the location information, a trigonometric function value that is in the elevation trigonometric function table and that corresponds to the elevation index of the reference point.

In a possible implementation, the calculation module is specifically configured to: when the azimuth information of the location information corresponds to an azimuth index of a reference point of the plurality of second reference points, use, as the trigonometric function value corresponding to the azimuth information of the location information, a trigonometric function value that is in the azimuth trigonometric function table and that corresponds to the azimuth index of the reference point; or when the azimuth information of the location information corresponds to an azimuth index of a reference point of M reference points other than the plurality of second reference points, convert the azimuth index of the reference point of the M reference points other than the plurality of second reference points into an azimuth index of a reference point of the plurality of second reference points, and use, as the trigonometric function value corresponding to the azimuth information of the location information, a trigonometric function value that is in the azimuth trigonometric function table and that corresponds to the azimuth index of the reference point; or when the azimuth information of the location information does not correspond to an azimuth index of any reference point, obtain, based on the azimuth information of the location information, azimuth information of a reference point corresponding to the azimuth information of the location information; and when the azimuth information of the reference point corresponding to the azimuth information of the location information corresponds to an azimuth index of a reference point of the plurality of second reference points, use, as the trigonometric function value corresponding to the azimuth information of the location information, a trigonometric function value that is in the azimuth trigonometric function table and that corresponds to the azimuth index of the reference point; or when the azimuth information of the reference point corresponding to the azimuth information of the location information corresponds to an azimuth index of a reference point of M reference points other than the plurality of second reference points, convert the azimuth index of the reference point of the M reference points other than the plurality of second reference points into an azimuth index of a reference point of the plurality of second reference points, and use, as the trigonometric function value corresponding to the azimuth information of the location information, a trigonometric function value that is in the azimuth trigonometric function table and that corresponds to the azimuth index of the reference point.

In a possible implementation, the elevation information of the location information includes an elevation of the location information or an elevation index of the location information, and the azimuth information of the location information includes an azimuth of the location information or an azimuth index of the location information.

In a possible implementation, the trigonometric function value is a sine function value or a cosine function value.

In a possible implementation, when the plurality of trigonometric functions corresponding to the elevation indexes of the plurality of first reference points are sine function values, a sine function value corresponding to an elevation index of an ith first reference point meets the following formula (1):

$$\sin\_\text{table\_N}(i) = \sin\left(\frac{\pi r_i}{2N'} \times i\right) \tag{1},$$

where

i=0, 1, ..., and N', $N'=\lfloor N/4 \rfloor$, and r; indicates a radius of the first circle of longitude; or

when the plurality of trigonometric functions corresponding to the elevation indexes of the plurality of first reference points are cosine function values, a cosine function value corresponding to an elevation index of an ith first reference point meets the following formula (2):

$$\cos\_table\_N(i) = \cos\left(\frac{\pi r_i}{2N'} \times i\right) \qquad (2),$$

where

i=0, 1, ..., and N', $N'=\lfloor N/4 \rfloor$ , and r; indicates a radius of the first circle of longitude.

In a possible implementation, when the plurality of trigonometric functions corresponding to the azimuth indexes of the plurality of second reference points are sine function values, a sine function value corresponding to an azimuth index of a $j^{th}$ second reference point meets the following formula (3):

$$\sin\_table\_M(j) = \sin\left(\frac{\pi r_j}{2M'} \times j\right) \qquad (3),$$

where

j=0, 1, ..., and M', $M'=\lfloor M/4 \rfloor$ , and $r_j$ indicates a radius of the first circle of latitude; or

when the plurality of trigonometric functions corresponding to the azimuth indexes of the plurality of second reference points are cosine function values, a cosine function value corresponding to an azimuth index of a $j^{th}$ second reference point meets the following formula (4):

$$\cos\_table\_M(j) = \cos\left(\frac{\pi r_j}{2M'} \times j\right) \qquad (4),$$

where

j=0, 1, ..., and M', $M'=\lfloor M/4 \rfloor$ , and $r_j$ indicates a radius of the first circle of latitude.

In a possible implementation, the elevation φ and the elevation index φ' meet the following formula (5):

$$\varphi' = \mathrm{round}\left(\frac{\varphi}{2\pi r_i \times N}\right) \qquad (5),$$

where
$r_i$ indicates a radius of the first circle of longitude, and round() indicates rounding.
In a possible implementation, the azimuth θ and the azimuth index θ' meet the following formula (6):

$$\theta' = \mathrm{round}\left(\frac{\theta}{2\pi r_j \times M}\right) \qquad (6),$$

where
$r_j$ indicates a radius of the first circle of latitude, and round() indicates rounding.
In a possible implementation, when M≠N, the trigonometric function value corresponding to the elevation information of the location information meets the following formulas:

$$\sin(\varphi)=\sin\_table\_N(\varphi') \qquad\qquad \varphi'<\lfloor N/4 \rfloor$$

$$\sin(\varphi)=\sin\_table\_N(N/2-\varphi') \qquad\qquad \lfloor N/4 \rfloor \leq \varphi' < \lfloor N/2 \rfloor$$

$$\sin(\varphi)=-\sin\_table\_N(\varphi'-N/2) \qquad\qquad \lfloor N/2 \rfloor \leq \varphi' < \lfloor 3N/4 \rfloor$$

$$\sin(\varphi)=-\sin\_table\_N(N-\varphi') \qquad\qquad \lfloor 3N/4 \rfloor \leq \varphi' < N$$

$$\cos(\varphi)=\text{sin\_table\_N}(N/4-\varphi') \qquad\qquad \varphi'<\lfloor N/4\rfloor$$

$$\cos(\varphi)=-\text{sin\_table\_N}(\varphi'-N/4) \qquad\qquad \lfloor N/4\rfloor\le\varphi'<\lfloor N/2\rfloor$$

$$\cos(\varphi)=-\text{sin\_table\_N}(3N/4-\varphi') \qquad\qquad \lfloor N/2\rfloor\le\varphi'<\lfloor 3N/4\rfloor$$

$$\cos(\varphi)=\text{sin\_table\_N}(\varphi'-3N/4) \qquad\qquad \lfloor 3N/4\rfloor\le\varphi'<N,$$

where

$\varphi$ indicates the elevation information of the location information, or $\varphi$ indicates the elevation information of the reference point corresponding to the elevation information of the location information, and sin_table_N() indicates the elevation trigonometric function table; and
when M≠N, the trigonometric function value corresponding to the azimuth information of the location information meets the following formulas:

$$\sin(\theta)=\text{sin\_table\_M}(\theta') \qquad\qquad \theta'<\lfloor M/4\rfloor$$

$$\sin(\theta)=\text{sin\_table\_M}(M/2-\theta') \qquad\qquad \lfloor M/4\rfloor\le\theta'<\lfloor M/2\rfloor$$

$$\sin(\theta)=-\text{sin\_table\_M}(\theta'-M/2) \qquad\qquad \lfloor M/2\rfloor\le\theta'<\lfloor 3M/4\rfloor$$

$$\sin(\theta)=-\text{sin\_table\_M}(M-\theta') \qquad\qquad \lfloor 3M/4\rfloor\le\theta'<M$$

$$\cos(\theta)=\text{sin\_table\_M}(M/4-\theta') \qquad\qquad \theta'<\lfloor M/4\rfloor$$

$$\cos(\theta)=-\text{sin\_table\_M}(\theta'-M/4) \qquad\qquad \lfloor M/4\rfloor\le\theta'<\lfloor M/2\rfloor$$

$$\cos(\theta)=-\text{sin\_table\_M}(3M/4-\theta') \qquad\qquad \lfloor M/2\rfloor\le\theta'<\lfloor 3M/4\rfloor$$

$$\cos(\theta)=\text{sin\_table\_M}(\theta'-3M/4) \qquad\qquad \lfloor 3M/4\rfloor\le\theta'<M,$$

where
$\theta$ indicates the azimuth information of the location information, or $\theta$ indicates the azimuth information of the reference point corresponding to the azimuth information of the location information, and sin_table_M() indicates the azimuth trigonometric function table.

Alternatively, when M=N, the trigonometric function value corresponding to the elevation information of the location information meets the following formulas:

$$\sin(\varphi)=\text{sin\_table}(\varphi') \qquad\qquad \varphi'<\lfloor N/4\rfloor$$

$$\sin(\varphi)=\text{sin\_table}(N/2-\varphi') \qquad\qquad \lfloor N/4\rfloor\le\varphi'<\lfloor N/2\rfloor$$

$$\sin(\varphi) = -\sin\_table(\varphi'-N/2) \qquad\qquad \lfloor N/2\rfloor \leq \varphi' < \lfloor 3N/4\rfloor$$

$$\sin(\varphi) = -\sin\_table(N-\varphi') \qquad\qquad \lfloor 3N/4\rfloor \leq \varphi' < N$$

$$\cos(\varphi) = \sin\_table(N/4-\varphi') \qquad\qquad \varphi' < \lfloor N/4\rfloor$$

$$\cos(\varphi) = -\sin\_table(\varphi'-N/4) \qquad\qquad \lfloor N/4\rfloor \leq \varphi' < \lfloor N/2\rfloor$$

$$\cos(\varphi) = -\sin\_table(3N/4-\varphi') \qquad\qquad \lfloor N/2\rfloor \leq \varphi' < \lfloor 3N/4\rfloor$$

$$\cos(\varphi) = \sin\_table(\varphi'-3N/4) \qquad\qquad \lfloor 3N/4\rfloor \leq \varphi' < N,$$

where

$\varphi$ indicates the elevation information of the location information, or $\varphi$ indicates the elevation information of the reference point corresponding to the elevation information of the location information, and sin_table_N() indicates the elevation trigonometric function table; and
when M=N, the trigonometric function value corresponding to the azimuth information of the location information meets the following formulas:

$$\sin(\theta) = \sin\_table(\theta') \qquad\qquad \theta' < \lfloor N/4\rfloor$$

$$\sin(\theta) = \sin\_table(N/2-\theta') \qquad\qquad \lfloor N/4\rfloor \leq \theta' < \lfloor N/2\rfloor$$

$$\sin(\theta) = -\sin\_table(\theta'-N/2) \qquad\qquad \lfloor N/2\rfloor \leq \theta' < \lfloor 3N/4\rfloor$$

$$\sin(\theta) = -\sin\_table(N-\theta') \qquad\qquad \lfloor 3N/4\rfloor \leq \theta' < N$$

$$\cos(\theta) = \sin\_table(N/4-\theta') \qquad\qquad \theta' < \lfloor N/4\rfloor$$

$$\cos(\theta) = -\sin\_table(\theta'-N/4) \qquad\qquad \lfloor N/4\rfloor \leq \theta' < \lfloor N/2\rfloor$$

$$\cos(\theta) = -\sin\_table(3N/4-\theta') \qquad\qquad \lfloor N/2\rfloor \leq \theta' < \lfloor 3N/4\rfloor$$

$$\cos(\theta) = \sin\_table(\theta'-3N/4) \qquad\qquad \lfloor 3N/4\rfloor \leq \theta' < N,$$

where
$\theta$ indicates the azimuth information of the location information, or $\theta$ indicates the azimuth information of the reference point corresponding to the azimuth information of the location information, and sin_table_N() indicates the elevation trigonometric function table;

Alternatively, when M≠N, M=K1×N, and K1≥2, the trigonometric function value corresponding to the azimuth information of the location information meets the following formulas:

$$\sin(\theta)=\text{sin\_table\_M}(\theta') \qquad \theta'<\lfloor M/4\rfloor$$

$$\sin(\theta)=\text{sin\_table\_M}(M/2-\theta') \qquad \lfloor M/4\rfloor\leq\theta'<\lfloor M/2\rfloor$$

$$\sin(\theta)=-\text{sin\_table\_M}(\theta'-M/2) \qquad \lfloor M/2\rfloor\leq\theta'<\lfloor 3M/4\rfloor$$

$$\sin(\theta)=-\text{sin\_table\_M}(M-\theta') \qquad \lfloor 3M/4\rfloor\leq\theta'<M$$

$$\cos(\theta)=\text{sin\_table\_M}(M/4-\theta') \qquad \theta'<\lfloor M/4\rfloor$$

$$\cos(\theta)=-\text{sin\_table\_M}(\theta'-M/4) \qquad \lfloor M/4\rfloor\leq\theta'<\lfloor M/2\rfloor$$

$$\cos(\theta)=-\text{sin\_table\_M}(3M/4-\theta') \qquad \lfloor M/2\rfloor\leq\theta'<\lfloor 3M/4\rfloor$$

$$\cos(\theta)=\text{sin\_table\_M}(\theta'-3M/4) \qquad \lfloor 3M/4\rfloor\leq\theta'<M,$$

where

$\theta$ indicates the azimuth information of the location information, or $\theta$ indicates the azimuth information of the reference point corresponding to the azimuth information of the location information, and sin_table_M() indicates the azimuth trigonometric function table; and

when $M\neq N$, $M=K1\times N$, and $K1\geq 2$, the trigonometric function value corresponding to the elevation information of the location information meets the following formulas:

$$\sin(\varphi)=\text{sin\_table\_M}(K1\times\varphi') \qquad K1\times\varphi'<\lfloor M/4\rfloor$$

$$\sin(\varphi)=\text{sin\_table\_M}(M/2-K1\times\varphi') \qquad \lfloor M/4\rfloor\leq K1\times\varphi'<\lfloor M/2\rfloor$$

$$\sin(\varphi)=-\text{sin\_table\_M}(K1\times\varphi'-M/2) \qquad \lfloor M/2\rfloor\leq K1\times\varphi'<\lfloor 3M/4\rfloor$$

$$\sin(\varphi)=-\text{sin\_table\_M}(M-K1\times\varphi') \qquad \lfloor 3M/4\rfloor\leq K1\times\varphi'<M$$

$$\cos(\varphi)=\text{sin\_table\_M}(M/4-K1\times\varphi') \qquad K1\times\varphi'<\lfloor M/4\rfloor$$

$$\cos(\varphi)=-\text{sin\_table\_M}(K1\times\varphi'-M/4) \qquad \lfloor M/4\rfloor\leq K1\times\varphi'<\lfloor M/2\rfloor$$

$$\cos(\varphi)=-\text{sin\_table\_M}(3M/4-K1\times\varphi') \qquad \lfloor M/2\rfloor\leq K1\times\varphi'<\lfloor 3M/4\rfloor$$

$$\cos(\varphi)=\text{sin\_table\_M}(K1\times\varphi'-3M/4) \qquad \lfloor 3M/4\rfloor\leq K1\times\varphi'<M,$$

where
$\varphi$ indicates the elevation information of the location information, or $\varphi$ indicates the elevation information of the reference point corresponding to the elevation information of the location information, and sin_table_M() indicates the azimuth trigonometric function table.

Alternatively, when M≠N, N=K2×M, and K2≥2, the trigonometric function value corresponding to the elevation information of the location information meets the following formulas:

$$\sin(\varphi)=\text{sin\_table\_N}(\varphi') \qquad \varphi'<\lfloor N/4 \rfloor$$

$$\sin(\varphi)=\text{sin\_table\_N}(N/2-\varphi') \qquad \lfloor N/4 \rfloor \le \varphi'<\lfloor N/2 \rfloor$$

$$\sin(\varphi)=-\text{sin\_table\_N}(\varphi'-N/2) \qquad \lfloor N/2 \rfloor \le \varphi'<\lfloor 3N/4 \rfloor$$

$$\sin(\varphi)=-\text{sin\_table\_N}(N-\varphi') \qquad \lfloor 3N/4 \rfloor \le \varphi'<N$$

$$\cos(\varphi)=\text{sin\_table\_N}(N/4-\varphi') \qquad \varphi'<\lfloor N/4 \rfloor$$

$$\cos(\varphi)=-\text{sin\_table\_N}(\varphi'-N/4) \qquad \lfloor N/4 \rfloor \le \varphi'<\lfloor N/2 \rfloor$$

$$\cos(\varphi)=-\text{sin\_table\_N}(3N/4-\varphi') \qquad \lfloor N/2 \rfloor \le \varphi'<\lfloor 3N/4 \rfloor$$

$$\cos(\varphi)=\text{sin\_table\_N}(\varphi'-3N/4) \qquad \lfloor 3N/4 \rfloor \le \varphi'<N,$$

where

$\varphi$ indicates the elevation information of the location information, or $\varphi$ indicates the elevation information of the reference point corresponding to the elevation information of the location information, and sin_table_N() indicates the elevation trigonometric function table; and
when M≠N, N=K2×M, and K2≥2, the trigonometric function value corresponding to the azimuth information of the location information meets the following formulas:

$$\sin(\theta)=\text{sin\_table\_N}(K2\times\theta') \qquad K2\times\theta'<\lfloor N/4 \rfloor$$

$$\sin(\theta)=\text{sin\_table\_N}(N/2-K2\times\theta') \qquad \lfloor N/4 \rfloor \le K2\times\theta'<\lfloor N/2 \rfloor$$

$$\sin(\theta)=-\text{sin\_table\_N}(K2\times\theta'-N/2) \qquad \lfloor N/2 \rfloor \le K2\times\theta'<\lfloor 3N/4 \rfloor$$

$$\sin(\theta)=-\text{sin\_table\_N}(N-K2\times\theta') \qquad \lfloor 3N/4 \rfloor \le K2\times\theta'<N$$

$$\cos(\theta)=\text{sin\_table\_N}(N/4-K2\times\theta') \qquad K2\times\theta'<\lfloor N/4 \rfloor$$

$$\cos(\theta)=-\text{sin\_table\_N}(K2\times\theta'-N/4) \qquad \lfloor N/4 \rfloor \le K2\times\theta'<\lfloor N/2 \rfloor$$

$$\cos(\theta)=-\text{sin\_table\_N}(3N/4-K2\times\theta') \qquad \lfloor N/2 \rfloor \le K2\times\theta'<\lfloor 3N/4 \rfloor$$

$$\cos(\theta)=\sin\_table\_N(K2\times\theta'-3N/4) \qquad \lfloor 3N/4\rfloor \leq K2\times\theta'<N,$$

where
$\theta$ indicates the azimuth information of the location information, or $\theta$ indicates the azimuth information of the reference point corresponding to the azimuth information of the location information, and sin_table_N() indicates the elevation trigonometric function table.

Alternatively, when M≠N, the trigonometric function value corresponding to the elevation information of the location information meets the following formulas:

$$\sin(\theta)=\cos\_table\_N(N/4-\theta') \qquad \theta'<\lfloor N/4\rfloor$$

$$\sin(\theta)=\cos\_table\_N(\theta'-N/4) \qquad \lfloor N/4\rfloor \leq \theta'<\lfloor N/2\rfloor$$

$$\sin(\theta)=-\cos\_table\_N(3N/4-\theta') \qquad \lfloor N/2\rfloor \leq \theta'<\lfloor 3N/4\rfloor$$

$$\sin(\theta)=-\cos\_table\_N(\theta'-3N/4) \qquad \lfloor 3N/4\rfloor \leq \theta'<N$$

$$\cos(\theta)=\cos\_table\_N(\theta') \qquad \theta'<\lfloor N/4\rfloor$$

$$\cos(\theta)=-\cos\_table\_N(N/2-\theta') \qquad \lfloor N/4\rfloor \leq \theta'<\lfloor N/2\rfloor$$

$$\cos(\theta)=-\cos\_table\_N(\theta'-N/2) \qquad \lfloor N/2\rfloor \leq \theta'<\lfloor 3N/4\rfloor$$

$$\cos(\theta)=\cos\_table\_N(N-\theta') \qquad \lfloor 3N/4\rfloor \leq \theta'<N,$$

where

$\varphi$ indicates the elevation information of the location information, or $\varphi$ indicates the elevation information of the reference point corresponding to the elevation information of the location information, and cos_table_N() indicates the elevation trigonometric function table; and
when M≠N, the trigonometric function value corresponding to the azimuth information of the location information meets the following formulas:

$$\sin(\theta)=\cos\_table\_M(M/4-\theta') \qquad \theta'<\lfloor M/4\rfloor$$

$$\sin(\theta)=\cos\_table\_M(\theta'-M/4) \qquad \lfloor M/4\rfloor \leq \theta'<\lfloor M/2\rfloor$$

$$\sin(\theta)=-\cos\_table\_M(3M/4-\theta') \qquad \lfloor M/2\rfloor \leq \theta'<\lfloor 3M/4\rfloor$$

$$\sin(\theta)=-\cos\_table\_M(\theta'-3M/4) \qquad \lfloor 3M/4\rfloor \leq \theta'<M$$

$$\cos(\theta)=\cos\_table\_M(\theta') \qquad \theta'<\lfloor M/4\rfloor$$

$$\cos(\theta)=-\cos\_table\_M(M/2-\theta') \qquad \lfloor M/4 \rfloor \leq \theta' < \lfloor M/2 \rfloor$$

$$\cos(\theta)=-\cos\_table\_M(\theta'-M/2) \qquad \lfloor M/2 \rfloor \leq \theta' < \lfloor 3M/4 \rfloor$$

$$\cos(\theta)=\cos\_table\_M(M-\theta') \qquad \lfloor 3M/4 \rfloor \leq \theta' < M,$$

where

$\theta$ indicates the azimuth information of the location information, or $\theta$ indicates the azimuth information of the reference point corresponding to the azimuth information of the location information, and cos_table_M() indicates the azimuth trigonometric function table.

The apparatus in this embodiment may be configured to perform the technical solution in the method embodiment shown in FIG. 4. Implementation principles and technical effect thereof are similar. Details are not described herein again.

During implementation, the steps in the foregoing method embodiments may be performed by an integrated logic circuit of hardware in a processor or through instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in this application may be directly performed by a hardware encoding processor, or may be performed by a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in a memory, and a processor reads information in the memory and performs the steps in the foregoing methods based on hardware of the processor.

The memory mentioned in the foregoing embodiments may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and serves as an external cache. By way of example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and the method described in this specification includes but is not limited to these memories and any memory of another proper type.

A person of ordinary skill in the art may be aware that, in combination with examples described in embodiments disclosed in this specification, units and algorithm steps can be implemented by electronic hardware or a combination of computer software and electronic hardware. Whether the functions are performed by hardware or software depends on particular applications and design constraints of technical solutions. A person skilled in the art may use different methods to implement the described functions for each particular application, but it should not be considered that the implementation goes beyond the scope of this application.

A person skilled in the art can clearly understand that, for ease and brevity of description, for a detailed operating process of the foregoing system, apparatus, and unit, reference may be made to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts shown as units may or may not be physical units, that is, may be located in one place, or may be distributed on a plurality of network units. Some or all of the units may be selected according to actual requirements to achieve objectives of solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, technical solutions of this application essentially, or a part contributing to the conventional technology, or some of technical solutions may be implemented in a form of a software product. The computer software product is stored in a storage medium, and includes several instructions for instructing a computer device (a personal computer, a server, a network device, or the like) to perform all or some of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for obtaining a higher order ambisonics HOA coefficient, comprising:

    obtaining location information of a virtual speaker on a preset spherical surface, wherein the location information comprises elevation information and/or azimuth information, the preset spherical surface comprises M circles of longitude and N circles of latitude, and an intersection between the circle of longitude and the circle of latitude is referred to as a reference point;

    obtaining, based on the location information and a preset reference trigonometric function table, a trigonometric function value corresponding to the location information, wherein the reference trigonometric function table comprises an elevation trigonometric function table and/or an azimuth trigonometric function table, the elevation trigonometric function table comprises a plurality of trigonometric function values corresponding to elevation indexes of a plurality of first reference points, the plurality of first reference points are reference points on a first circle of longitude, a quantity of the plurality of first reference points is not less than $\lfloor N/4 \rfloor + 1$, $\lfloor \ \rfloor$ indicates rounding down, the first circle of longitude is one of the M circles of longitude, the azimuth trigonometric function table comprises a plurality of trigonometric function values corresponding to azimuth indexes of a plurality of second reference points, the plurality of second reference points are reference points on a first circle of latitude, a quantity of the plurality of second reference points is not less than $\lfloor M/4 \rfloor + 1$, and the first circle of latitude is one of the N circles of latitude; and

    obtaining an HOA coefficient for the virtual speaker based on the trigonometric function value corresponding to the location information.

2. The method according to claim 1, wherein the obtaining, based on the location information and a preset reference trigonometric function table, a trigonometric function value corresponding to the location information comprises:

    obtaining, based on the elevation information of the location information and the elevation trigonometric function table, a trigonometric function value corresponding to the elevation information of the location information; and/or
    obtaining, based on the azimuth information of the location information and the azimuth trigonometric function table, a trigonometric function value corresponding to the azimuth information of the location information.

3. The method according to claim 2, wherein the obtaining, based on the elevation information of the location information and the elevation trigonometric function table, a trigonometric function value corresponding to the elevation information of the location information comprises:

    when the elevation information of the location information corresponds to an elevation index of a reference point of the plurality of first reference points, using, as the trigonometric function value corresponding to the elevation information of the location information, a trigonometric function value that is in the elevation trigonometric function table and that corresponds to the elevation index of the reference point; or

when the elevation information of the location information corresponds to an elevation index of a reference point of N reference points other than the plurality of first reference points, converting the elevation index of the reference point of the N reference points other than the plurality of first reference points into an elevation index of a reference point of the plurality of first reference points, and using, as the trigonometric function value corresponding to the elevation information of the location information, a trigonometric function value that is in the elevation trigonometric function table and that corresponds to the elevation index of the reference point; or when the elevation information of the location information does not correspond to an elevation index of any reference point, obtaining, based on the elevation information of the location information, elevation information of a reference point corresponding to the elevation information of the location information; and when the elevation information of the reference point corresponding to the elevation information of the location information corresponds to an elevation index of a reference point of the plurality of first reference points, using, as the trigonometric function value corresponding to the elevation information of the location information, a trigonometric function value that is in the elevation trigonometric function table and that corresponds to the elevation index of the reference point; or when the elevation information of the reference point corresponding to the elevation information of the location information corresponds to an elevation index of a reference point of N reference points other than the plurality of first reference points, converting the elevation index of the reference point of the N reference points other than the plurality of first reference points into an elevation index of a reference point of the plurality of first reference points, and using, as the trigonometric function value corresponding to the elevation information of the location information, a trigonometric function value that is in the elevation trigonometric function table and that corresponds to the elevation index of the reference point.

4. The method according to claim 2, wherein the obtaining, based on the azimuth information of the location information and the azimuth trigonometric function table, a trigonometric function value corresponding to the azimuth information of the location information comprises:

when the azimuth information of the location information corresponds to an azimuth index of a reference point of the plurality of second reference points, using, as the trigonometric function value corresponding to the azimuth information of the location information, a trigonometric function value that is in the azimuth trigonometric function table and that corresponds to the azimuth index of the reference point; or

when the azimuth information of the location information corresponds to an azimuth index of a reference point of M reference points other than the plurality of second reference points, converting the azimuth index of the reference point of the M reference points other than the plurality of second reference points into an azimuth index of a reference point of the plurality of second reference points, and using, as the trigonometric function value corresponding to the azimuth information of the location information, a trigonometric function value that is in the azimuth trigonometric function table and that corresponds to the azimuth index of the reference point; or when the azimuth information of the location information does not correspond to an azimuth index of any reference point, obtaining, based on the azimuth information of the location information, azimuth information of a reference point corresponding to the azimuth information of the location information; and when the azimuth information of the reference point corresponding to the azimuth information of the location information corresponds to an azimuth index of a reference point of the plurality of second reference points, using, as the trigonometric function value corresponding to the azimuth information of the location information, a trigonometric function value that is in the azimuth trigonometric function table and that corresponds to the azimuth index of the reference point; or when the azimuth information of the reference point corresponding to the azimuth information of the location information corresponds to an azimuth index of a reference point of M reference points other than the plurality of second reference points, converting the azimuth index of the reference point of the M reference points other than the plurality of second reference points into an azimuth index of a reference point of the plurality of second reference points, and using, as the trigonometric function value corresponding to the azimuth information of the location information, a trigonometric function value that is in the azimuth trigonometric function table and that corresponds to the azimuth index of the reference point.

5. The method according to any one of claims 2 to 4, wherein the elevation information of the location information comprises an elevation of the location information or an elevation index of the location information, and the azimuth information of the location information comprises an azimuth of the location information or an azimuth index of the location information.

6. The method according to any one of claims 1 to 5, wherein the trigonometric function value is a sine function value or a cosine function value.

7. The method according to any one of claims 1 to 6, wherein when the plurality of trigonometric functions corresponding to the elevation indexes of the plurality of first reference points are sine function values, a sine function value corresponding to an elevation index of an $i^{th}$ first reference point meets the following formula (1):

$$\sin\_\text{table\_N}(i) = \sin\left(\frac{\pi r_i}{2N'} \times i\right) \tag{1},$$

wherein

i=0, 1, ..., and N', $N'=\lfloor N/4 \rfloor$, and r; indicates a radius of the first circle of longitude; or
when the plurality of trigonometric functions corresponding to the elevation indexes of the plurality of first reference points are cosine function values, a cosine function value corresponding to an elevation index of an $i^{th}$ first reference point meets the following formula (2):

$$\cos\_\text{table\_N}(i) = \cos\left(\frac{\pi r_i}{2N'} \times i\right) \tag{2},$$

wherein
i=0, 1, ..., and N', $N'=\lfloor N/4 \rfloor$, and r; indicates a radius of the first circle of longitude.

8. The method according to any one of claims 1 to 7, wherein when the plurality of trigonometric functions corresponding to the azimuth indexes of the plurality of second reference points are sine function values, a sine function value corresponding to an azimuth index of a $j^{th}$ second reference point meets the following formula (3):

$$\sin\_\text{table\_M}(j) = \sin\left(\frac{\pi r_j}{2M'} \times j\right) \tag{3},$$

wherein

j=0, 1, ..., and M', $M'=\lfloor M/4 \rfloor$, and $r_j$ indicates a radius of the first circle of latitude;
or
when the plurality of trigonometric functions corresponding to the azimuth indexes of the plurality of second reference points are cosine function values, a cosine function value corresponding to an azimuth index of a $j^{th}$ second reference point meets the following formula (4):

$$\cos\_\text{table\_M}(j) = \cos\left(\frac{\pi r_j}{2M'} \times j\right) \tag{4},$$

wherein
j=0, 1, ..., and M', $M'=\lfloor M/4 \rfloor$, and $r_j$ indicates a radius of the first circle of latitude.

9. The method according to any one of claims 2 to 5, wherein the elevation φ and the elevation index φ' meet the following formula (5):

$$\varphi' = \text{round}\left(\frac{\varphi}{2\pi r_i \times N}\right) \tag{5},$$

wherein
$r_i$ indicates a radius of the first circle of longitude, and round() indicates rounding.

10. The method according to any one of claims 2 to 5, wherein the azimuth θ and the azimuth index θ' meet the following formula (6):

$$\theta' = \text{round}\left(\frac{\theta}{2\pi r_j \times M}\right) \tag{6},$$

wherein

$r_j$ indicates a radius of the first circle of latitude, and round() indicates rounding.

11. The method according to claim 9 or 10, wherein when M≠N, the trigonometric function value corresponding to the elevation information of the location information meets the following formulas:

| | |
|---|---|
| $\sin(\varphi)=\sin\_table\_N(\varphi')$ | $\varphi'<\lfloor N/4\rfloor$ |
| $\sin(\varphi)=\sin\_table\_N(N/2-\varphi')$ | $\lfloor N/4\rfloor\leq\varphi'<\lfloor N/2\rfloor$ |
| $\sin(\varphi)=-\sin\_table\_N(\varphi'-N/2)$ | $\lfloor N/2\rfloor\leq\varphi'<\lfloor 3N/4\rfloor$ |
| $\sin(\varphi)=-\sin\_table\_N(N-\varphi')$ | $\lfloor 3N/4\rfloor\leq\varphi'<N$ |
| $\cos(\varphi)=\sin\_table\_N(N/4-\varphi')$ | $\varphi'<\lfloor N/4\rfloor$ |
| $\cos(\varphi)=-\sin\_table\_N(\varphi'-N/4)$ | $\lfloor N/4\rfloor\leq\varphi'<\lfloor N/2\rfloor$ |
| $\cos(\varphi)=-\sin\_table\_N(3N/4-\varphi')$ | $\lfloor N/2\rfloor\leq\varphi'<\lfloor 3N/4\rfloor$ |
| $\cos(\varphi)=\sin\_table\_N(\varphi'-3N/4)$ | $\lfloor 3N/4\rfloor\leq\varphi'<N,$ |

wherein

$\varphi$ indicates the elevation information of the location information, or $\varphi$ indicates the elevation information of the reference point corresponding to the elevation information of the location information, and sin_table_N() indicates the elevation trigonometric function table; and

when M≠N, the trigonometric function value corresponding to the azimuth information of the location information meets the following formulas:

| | |
|---|---|
| $\sin(\theta)=\sin\_table\_M(\theta')$ | $\theta'<\lfloor M/4\rfloor$ |
| $\sin(\theta)=\sin\_table\_M(M/2-\theta')$ | $\lfloor M/4\rfloor\leq\theta'<\lfloor M/2\rfloor$ |
| $\sin(\theta)=-\sin\_table\_M(\theta'-M/2)$ | $\lfloor M/2\rfloor\leq\theta'<\lfloor 3M/4\rfloor$ |
| $\sin(\theta)=-\sin\_table\_M(M-\theta')$ | $\lfloor 3M/4\rfloor\leq\theta'<M$ |
| $\cos(\theta)=\sin\_table\_M(M/4-\theta')$ | $\theta'<\lfloor M/4\rfloor$ |

$$\cos(\theta)=-\sin\_table\_M(\theta'-M/4) \qquad\qquad \lfloor M/4\rfloor\leq\theta'<\lfloor M/2\rfloor$$

$$\cos(\theta)=-\sin\_table\_M(3M/4-\theta') \qquad\qquad \lfloor M/2\rfloor\leq\theta'<\lfloor 3M/4\rfloor$$

$$\cos(\theta)=\sin\_table\_M(\theta'-3M/4) \qquad\qquad \lfloor 3M/4\rfloor\leq\theta'<M,$$

wherein
$\theta$ indicates the azimuth information of the location information, or $\theta$ indicates the azimuth information of the reference point corresponding to the azimuth information of the location information, and sin_table_M() indicates the azimuth trigonometric function table;
or
when M=N, the trigonometric function value corresponding to the elevation information of the location information meets the following formulas:

$$\sin(\varphi)=\sin\_table(\varphi') \qquad\qquad \varphi'<\lfloor N/4\rfloor$$

$$\sin(\varphi)=\sin\_table(N/2-\varphi') \qquad\qquad \lfloor N/4\rfloor\leq\varphi'<\lfloor N/2\rfloor$$

$$\sin(\varphi)=-\sin\_table(\varphi'-N/2) \qquad\qquad \lfloor N/2\rfloor\leq\varphi'<\lfloor 3N/4\rfloor$$

$$\sin(\varphi)=-\sin\_table(N-\varphi') \qquad\qquad \lfloor 3N/4\rfloor\leq\varphi'<N$$

$$\cos(\varphi)=\sin\_table(N/4-\varphi') \qquad\qquad \varphi'<\lfloor N/4\rfloor$$

$$\cos(\varphi)=-\sin\_table(\varphi'-N/4) \qquad\qquad \lfloor N/4\rfloor\leq\varphi'<\lfloor N/2\rfloor$$

$$\cos(\varphi)=-\sin\_table(3N/4-\varphi') \qquad\qquad \lfloor N/2\rfloor\leq\varphi'<\lfloor 3N/4\rfloor$$

$$\cos(\varphi)=\sin\_table(\varphi'-3N/4) \qquad\qquad \lfloor 3N/4\rfloor\leq\varphi'<N,$$

wherein
$\varphi$ indicates the elevation information of the location information, or $\varphi$ indicates the elevation information of the reference point corresponding to the elevation information of the location information, and sin_table_N() indicates the elevation trigonometric function table; and
when M=N, the trigonometric function value corresponding to the azimuth information of the location information meets the following formulas:

$$\sin(\theta)=\sin\_table(\theta') \qquad\qquad \theta'<\lfloor N/4\rfloor$$

$$\sin(\theta)=\sin\_table(N/2-\theta') \qquad\qquad \lfloor N/4\rfloor\leq\theta'<\lfloor N/2\rfloor$$

$$\sin(\theta)=-\sin\_table(\theta'-N/2) \qquad\qquad \lfloor N/2\rfloor\leq\theta'<\lfloor 3N/4\rfloor$$

$$\sin(\theta)=-\sin\_table(N-\theta') \qquad \lfloor 3N/4 \rfloor \le \theta' < N$$

$$\cos(\theta)=\sin\_table(N/4-\theta') \qquad \theta' < \lfloor N/4 \rfloor$$

$$\cos(\theta)=-\sin\_table(\theta'-N/4) \qquad \lfloor N/4 \rfloor \le \theta' < \lfloor N/2 \rfloor$$

$$\cos(\theta)=-\sin\_table(3N/4-\theta') \qquad \lfloor N/2 \rfloor \le \theta' < \lfloor 3N/4 \rfloor$$

$$\cos(\theta)=\sin\_table(\theta'-3N/4) \qquad \lfloor 3N/4 \rfloor \le \theta' < N,$$

wherein
$\theta$ indicates the azimuth information of the location information, or $\theta$ indicates the azimuth information of the reference point corresponding to the azimuth information of the location information, and sin_table_N() indicates the elevation trigonometric function table;
or
when $M \ne N$, $M=K1 \times N$, and $K1 \ge 2$, the trigonometric function value corresponding to the azimuth information of the location information meets the following formulas:

$$\sin(\theta)=\sin\_table\_M(\theta') \qquad \theta' < \lfloor M/4 \rfloor$$

$$\sin(\theta)=\sin\_table\_M(M/2-\theta') \qquad \lfloor M/4 \rfloor \le \theta' < \lfloor M/2 \rfloor$$

$$\sin(\theta)=-\sin\_table\_M(\theta'-M/2) \qquad \lfloor M/2 \rfloor \le \theta' < \lfloor 3M/4 \rfloor$$

$$\sin(\theta)=-\sin\_table\_M(M-\theta') \qquad \lfloor 3M/4 \rfloor \le \theta' < M$$

$$\cos(\theta)=\sin\_table\_M(M/4-\theta') \qquad \theta' < \lfloor M/4 \rfloor$$

$$\cos(\theta)=-\sin\_table\_M(\theta'-M/4) \qquad \lfloor M/4 \rfloor \le \theta' < \lfloor M/2 \rfloor$$

$$\cos(\theta)=-\sin\_table\_M(3M/4-\theta') \qquad \lfloor M/2 \rfloor \le \theta' < \lfloor 3M/4 \rfloor$$

$$\cos(\theta)=-\sin\_table\_M(\theta'-3M/4) \qquad \lfloor 3M/4 \rfloor \le \theta' < M,$$

wherein
$\theta$ indicates the azimuth information of the location information, or $\theta$ indicates the azimuth information of the reference point corresponding to the azimuth information of the location information, and sin_table_M() indicates the azimuth trigonometric function table; and
when $M \ne N$, $M=K1 \times N$, and $K1 \ge 2$, the trigonometric function value corresponding to the elevation information of the location information meets the following formulas:

$$\sin(\varphi)=\sin\_table\_M(K1 \times \varphi') \qquad K1 \times \varphi' < \lfloor M/4 \rfloor$$

$$\sin(\varphi)=\text{sin\_table\_M}(M/2-K1\times\varphi') \qquad \lfloor M/4\rfloor\leq K1\times\varphi'<\lfloor M/2\rfloor$$

$$\sin(\varphi)=-\text{sin\_table\_M}(K1\times\varphi'-M/2) \qquad \lfloor M/2\rfloor\leq K1\times\varphi'<\lfloor 3M/4\rfloor$$

$$\sin(\varphi)=-\text{sin\_table\_M}(M-K1\times\varphi') \qquad \lfloor 3M/4\rfloor\leq K1\times\varphi'<M$$

$$\cos(\varphi)=\text{sin\_table\_M}(M/4-K1\times\varphi') \qquad K1\times\varphi'<\lfloor M/4\rfloor$$

$$\cos(\varphi)=-\text{sin\_table\_M}(K1\times\varphi'-M/4) \qquad \lfloor M/4\rfloor\leq K1\times\varphi'<\lfloor M/2\rfloor$$

$$\cos(\varphi)=-\text{sin\_table\_M}(3M/4-K1\times\varphi') \qquad \lfloor M/2\rfloor\leq K1\times\varphi'<\lfloor 3M/4\rfloor$$

$$\cos(\varphi)=\text{sin\_table\_M}(K1\times\varphi'-3M/4) \qquad \lfloor 3M/4\rfloor\leq K1\times\varphi'<M,$$

wherein
$\varphi$ indicates the elevation information of the location information, or $\varphi$ indicates the elevation information of the reference point corresponding to the elevation information of the location information, and sin_table_M() indicates the azimuth trigonometric function table;
or
when M≠N, N=K2×M, and K2≥2, the trigonometric function value corresponding to the elevation information of the location information meets the following formulas:

$$\sin(\varphi)=\text{sin\_table\_N}(\varphi') \qquad \varphi'<\lfloor N/4\rfloor$$

$$\sin(\varphi)=\text{sin\_table\_N}(N/2-\varphi') \qquad \lfloor N/4\rfloor\leq\varphi'<\lfloor N/2\rfloor$$

$$\sin(\varphi)=-\text{sin\_table\_N}(\varphi'-N/2) \qquad \lfloor N/2\rfloor\leq\varphi'<\lfloor 3N/4\rfloor$$

$$\sin(\varphi)=-\text{sin\_table\_N}(N-\varphi') \qquad \lfloor 3N/4\rfloor\leq\varphi'<N$$

$$\cos(\varphi)=\text{sin\_table\_N}(N/4-\varphi') \qquad \varphi'<\lfloor N/4\rfloor$$

$$\cos(\varphi)=-\text{sin\_table\_N}(\varphi'-N/4) \qquad \lfloor N/4\rfloor\leq\varphi'<\lfloor N/2\rfloor$$

$$\cos(\varphi)=-\text{sin\_table\_N}(3N/4-\varphi') \qquad \lfloor N/2\rfloor\leq\varphi'<\lfloor 3N/4\rfloor$$

$$\cos(\varphi)=\text{sin\_table\_N}(\varphi'-3N/4) \qquad \lfloor 3N/4\rfloor\leq\varphi'<N,$$

wherein
$\varphi$ indicates the elevation information of the location information, or $\varphi$ indicates the elevation information of the reference point corresponding to the elevation information of the location information, and sin_table_N() indicates the elevation trigonometric function table; and
when M≠N, N=K2×M, and K2≥2, the trigonometric function value corresponding to the azimuth information of the location information meets the following formulas:

$$\sin(\theta)=\text{sin\_table\_N}(K2\times\theta') \qquad K2\times\theta'<\lfloor N/4\rfloor$$

$$\sin(\theta)=\text{sin\_table\_N}(N/2-K2\times\theta') \qquad \lfloor N/4\rfloor\leq K2\times\theta'<\lfloor N/2\rfloor$$

$$\sin(\theta)=-\text{sin\_table\_N}(K2\times\theta'-N/2) \qquad \lfloor N/2\rfloor\leq K2\times\theta'<\lfloor 3N/4\rfloor$$

$$\sin(\theta)=-\text{sin\_table\_N}(N-K2\times\theta') \qquad \lfloor 3N/4\rfloor\leq K2\times\theta'<N$$

$$\cos(\theta)=\text{sin\_table\_N}(N/4-K2\times\theta') \qquad K2\times\theta'<\lfloor N/4\rfloor$$

$$\cos(\theta)=-\text{sin\_table\_N}(K2\times\theta'-N/4) \qquad \lfloor N/4\rfloor\leq K2\times\theta'<\lfloor N/2\rfloor$$

$$\cos(\theta)=-\text{sin\_table\_N}(3N/4-K2\times\theta') \qquad \lfloor N/2\rfloor\leq K2\times\theta'<\lfloor 3N/4\rfloor$$

$$\cos(\theta)=\text{sin\_table\_N}(K2\times\theta'-3N/4) \qquad \lfloor 3N/4\rfloor\leq K2\times\theta'<N,$$

wherein
$\theta$ indicates the azimuth information of the location information, or $\theta$ indicates the azimuth information of the reference point corresponding to the azimuth information of the location information, and sin_table_N() indicates the elevation trigonometric function table;
or
when M≠N, the trigonometric function value corresponding to the elevation information of the location information meets the following formulas:

$$\sin(\theta)=\text{cos\_table\_N}(N/4-\theta') \qquad \theta'<\lfloor N/4\rfloor$$

$$\sin(\theta)=\text{cos\_table\_N}(\theta'-N/4) \qquad \lfloor N/4\rfloor\leq\theta'<\lfloor N/2\rfloor$$

$$\sin(\theta)=-\text{cos\_table\_N}(3N/4-\theta') \qquad \lfloor N/2\rfloor\leq\theta'<\lfloor 3N/4\rfloor$$

$$\sin(\theta)=-\text{cos\_table\_N}(\theta'-3N/4) \qquad \lfloor 3N/4\rfloor\leq\theta'<N$$

$$\cos(\theta)=\text{cos\_table\_N}(\theta') \qquad \theta'<\lfloor N/4\rfloor$$

$$\cos(\theta)=-\text{cos\_table\_N}(N/2-\theta') \qquad \lfloor N/4\rfloor\leq\theta'<\lfloor N/2\rfloor$$

$$\cos(\theta)=-\text{cos\_table\_N}(\theta'-N/2) \qquad \lfloor N/2\rfloor\leq\theta'<\lfloor 3N/4\rfloor$$

$$\cos(\theta)=\text{cos\_table\_N}(N-\theta') \qquad \lfloor 3N/4\rfloor\leq\theta'<N,$$

51

wherein

φ indicates the elevation information of the location information, or φ indicates the elevation information of the reference point corresponding to the elevation information of the location information, and cos_table_N() indicates the elevation trigonometric function table; and

when M≠N, the trigonometric function value corresponding to the azimuth information of the location information meets the following formulas:

$$\sin(\theta)=\cos\_table\_M(M/4-\theta') \qquad \theta'<\lfloor M/4 \rfloor$$

$$\sin(\theta)=\cos\_table\_M(\theta'-M/4) \qquad \lfloor M/4 \rfloor \leq \theta' < \lfloor M/2 \rfloor$$

$$\sin(\theta)=-\cos\_table\_M(3M/4-\theta') \qquad \lfloor M/2 \rfloor \leq \theta' < \lfloor 3M/4 \rfloor$$

$$\sin(\theta)=-\cos\_table\_M(\theta'-3M/4) \qquad \lfloor 3M/4 \rfloor \leq \theta' < M$$

$$\cos(\theta)=\cos\_table\_M(\theta') \qquad \theta'<\lfloor M/4 \rfloor$$

$$\cos(\theta)=-\cos\_table\_M(M/2-\theta') \qquad \lfloor M/4 \rfloor \leq \theta' < \lfloor M/2 \rfloor$$

$$\cos(\theta)=-\cos\_table\_M(\theta'-M/2) \qquad \lfloor M/2 \rfloor \leq \theta' < \lfloor 3M/4 \rfloor$$

$$\cos(\theta)=\cos\_table\_M(M-\theta') \qquad \lfloor 3M/4 \rfloor \leq \theta' < M,$$

wherein

θ indicates the azimuth information of the location information, or θ indicates the azimuth information of the reference point corresponding to the azimuth information of the location information, and cos_table_M() indicates the azimuth trigonometric function table.

12. The method according to any one of claims 1 to 11, wherein N reference points located on one circle of longitude are arranged at equal spacings, and M reference points located on one circle of latitude are arranged at equal spacings.

13. An apparatus for obtaining a higher order ambisonics HOA coefficient, comprising:

an obtaining module, configured to obtain location information of a virtual speaker on a preset spherical surface, wherein the location information comprises elevation information and/or azimuth information, the preset spherical surface comprises M circles of longitude and N circles of latitude, an intersection between the circle of longitude and the circle of latitude is referred to as a reference point, N reference points located on one circle of longitude are arranged at equal spacings, and M reference points located on one circle of latitude are arranged at equal spacings; and

a calculation module, configured to: obtain, based on the location information and a preset reference trigonometric function table, a trigonometric function value corresponding to the location information, wherein the reference trigonometric function table comprises an elevation trigonometric function table and/or an azimuth trigonometric function table, the elevation trigonometric function table comprises a plurality of trigonometric function values corresponding to elevation indexes of a plurality of first reference points, the plurality of first reference points are reference points on a first circle of longitude, a quantity of the plurality of first reference points is not less than $\lfloor N/4 \rfloor+1$, ⌊ ⌋ indicates rounding down, the first circle of longitude is one of the M circles of longitude, the azimuth trigonometric function table comprises a plurality of trigonometric function values corresponding to azimuth indexes of a plurality of second reference points, the plurality of second reference points are reference points on a first circle of latitude, a quantity of the plurality of second reference points is not less than $\lfloor M/4 \rfloor + 1$, and the first circle of latitude is one of the N circles of latitude; and obtain an HOA coefficient for the virtual speaker based on the trigonometric function value corresponding to the location information.

14. The apparatus according to claim 13, wherein the calculation module is specifically configured to: obtain, based on the elevation information of the location information and the elevation trigonometric function table, a trigonometric function value corresponding to the elevation information of the location information; and/or obtain, based on the azimuth information of the location information and the azimuth trigonometric function table, a trigonometric function value corresponding to the azimuth information of the location information.

15. The apparatus according to claim 14, wherein the calculation module is specifically configured to: when the elevation information of the location information corresponds to an elevation index of a reference point of the plurality of first reference points, use, as the trigonometric function value corresponding to the elevation information of the location information, a trigonometric function value that is in the elevation trigonometric function table and that corresponds to the elevation index of the reference point; or when the elevation information of the location information corresponds to an elevation index of a reference point of N reference points other than the plurality of first reference points, convert the elevation index of the reference point of the N reference points other than the plurality of first reference points into an elevation index of a reference point of the plurality of first reference points, and use, as the trigonometric function value corresponding to the elevation information of the location information, a trigonometric function value that is in the elevation trigonometric function table and that corresponds to the elevation index of the reference point; or when the elevation information of the location information does not correspond to an elevation index of any reference point, obtain, based on the elevation information of the location information, elevation information of a reference point corresponding to the elevation information of the location information; and when the elevation information of the reference point corresponding to the elevation information of the location information corresponds to an elevation index of a reference point of the plurality of first reference points, use, as the trigonometric function value corresponding to the elevation information of the location information, a trigonometric function value that is in the elevation trigonometric function table and that corresponds to the elevation index of the reference point; or when the elevation information of the reference point corresponding to the elevation information of the location information corresponds to an elevation index of a reference point of N reference points other than the plurality of first reference points, convert the elevation index of the reference point of the N reference points other than the plurality of first reference points into an elevation index of a reference point of the plurality of first reference points, and use, as the trigonometric function value corresponding to the elevation information of the location information, a trigonometric function value that is in the elevation trigonometric function table and that corresponds to the elevation index of the reference point.

16. The apparatus according to claim 14, wherein the calculation module is specifically configured to: when the azimuth information of the location information corresponds to an azimuth index of a reference point of the plurality of second reference points, use, as the trigonometric function value corresponding to the azimuth information of the location information, a trigonometric function value that is in the azimuth trigonometric function table and that corresponds to the azimuth index of the reference point; or when the azimuth information of the location information corresponds to an azimuth index of a reference point of M reference points other than the plurality of second reference points, convert the azimuth index of the reference point of the M reference points other than the plurality of second reference points into an azimuth index of a reference point of the plurality of second reference points, and use, as the trigonometric function value corresponding to the azimuth information of the location information, a trigonometric function value that is in the azimuth trigonometric function table and that corresponds to the azimuth index of the reference point; or when the azimuth information of the location information does not correspond to an azimuth index of any reference point, obtain, based on the azimuth information of the location information, azimuth information of a reference point corresponding to the azimuth information of the location information; and when the azimuth information of the reference point corresponding to the azimuth information of the location information corresponds to an azimuth index of a reference point of the plurality of second reference points, use, as the trigonometric function value corresponding to the azimuth information of the location information, a trigonometric function value that is in the azimuth trigonometric function table and that corresponds to the azimuth index of the reference point; or when the azimuth information of the reference point corresponding to the azimuth information of the location information corresponds to an azimuth index of a reference point of M reference points other than the plurality of second reference points, convert the azimuth index of the reference point of the M reference points other than the plurality of second reference points into an azimuth index of a reference point of the plurality of second reference points, and use, as the trigonometric function value corresponding to the azimuth information of the location information, a trigonometric function value that is in the azimuth trigonometric function table and that corresponds to the azimuth index of the reference point.

17. The apparatus according to any one of claims 14 to 16, wherein the elevation information of the location information comprises an elevation of the location information or an elevation index of the location information, and the azimuth information of the location information comprises an azimuth of the location information or an azimuth index of the location information.

18. The apparatus according to any one of claims 13 to 17, wherein the trigonometric function value is a sine function value or a cosine function value.

19. The apparatus according to any one of claims 13 to 18, wherein when the plurality of trigonometric functions corresponding to the elevation indexes of the plurality of first reference points are sine function values, a sine function value corresponding to an elevation index of an $i^{th}$ first reference point meets the following formula (1):

$$\sin \_table\_N(i) = \sin\left(\frac{\pi r_i}{2N'} \times i\right) \tag{1},$$

wherein

i=0, 1, ..., and N', $N'=\lfloor N/4 \rfloor$ , and $r_i$ indicates a radius of the first circle of longitude;
or
when a plurality of trigonometric functions corresponding to elevation information of the plurality of first reference points are cosine function values, a cosine function value corresponding to elevation information of an $i^{th}$ first reference point meets the following formula (2):

$$\cos \_table\_N(i) = \cos\left(\frac{\pi r_i}{2N'} \times i\right) \tag{2},$$

wherein i=0, 1, ..., and N', $N'=\lfloor N/4 \rfloor$ , and $r_i$ indicates a radius of the first circle of longitude.

20. The apparatus according to any one of claims 13 to 19, wherein when the plurality of trigonometric functions corresponding to the azimuth indexes of the plurality of second reference points are sine function values, a sine function value corresponding to an azimuth index of a $j^{th}$ second reference point meets the following formula (3):

$$\sin \_table\_M(j) = \sin\left(\frac{\pi r_j}{2M'} \times j\right) \tag{3},$$

wherein

j=0, 1, ..., and M', $M'=\lfloor M/4 \rfloor$ , and $r_j$ indicates a radius of the first circle of latitude;
or
when a plurality of trigonometric functions corresponding to azimuth information of the plurality of second reference points are cosine function values, a cosine function value corresponding to azimuth information of a $j^{th}$ second reference point meets the following formula (4):

$$\cos \_table\_M(j) = \cos\left(\frac{\pi r_j}{2M'} \times j\right) \tag{4},$$

wherein
j=0, 1, ..., and M', $M'=\lfloor M/4 \rfloor$ , and $r_j$ indicates a radius of the first circle of latitude.

21. The apparatus according to any one of claims 14 to 17, wherein the elevation φ and the elevation index φ' meet the following formula (5):

$$\varphi' = \text{round}\left(\frac{\varphi}{2\pi r_i \times N}\right) \tag{5},$$

wherein

$r_i$ indicates a radius of the first circle of longitude, and round() indicates rounding.

22. The apparatus according to any one of claims 14 to 17, wherein the azimuth θ and the azimuth index θ' meet the following formula (6):

$$\theta' = \text{round}\left(\frac{\theta}{2\pi r_j \times M}\right) \tag{6},$$

wherein

$r_j$ indicates a radius of the first circle of latitude, and round() indicates rounding.

23. The apparatus according to claim 21 or 22, wherein when M≠N, the trigonometric function value corresponding to the elevation information of the location information meets the following formulas:

$$\sin(\varphi) = \text{sin\_table\_N}(\varphi') \qquad \qquad \varphi' < \lfloor N/4 \rfloor$$

$$\sin(\varphi) = \text{sin\_table\_N}(N/2 - \varphi') \qquad \qquad \lfloor N/4 \rfloor \le \varphi' < \lfloor N/2 \rfloor$$

$$\sin(\varphi) = -\text{sin\_table\_N}(\varphi' - N/2) \qquad \qquad \lfloor N/2 \rfloor \le \varphi' < \lfloor 3N/4 \rfloor$$

$$\sin(\varphi) = -\text{sin\_table\_N}(N - \varphi') \qquad \qquad \lfloor 3N/4 \rfloor \le \varphi' < N$$

$$\cos(\varphi) = \text{sin\_table\_N}(N/4 - \varphi') \qquad \qquad \varphi' < \lfloor N/4 \rfloor$$

$$\cos(\varphi) = -\text{sin\_table\_N}(\varphi' - N/4) \qquad \qquad \lfloor N/4 \rfloor \le \varphi' < \lfloor N/2 \rfloor$$

$$\cos(\varphi) = -\text{sin\_table\_N}(3N/4 - \varphi') \qquad \qquad \lfloor N/2 \rfloor \le \varphi' < \lfloor 3N/4 \rfloor$$

$$\cos(\varphi) = \text{sin\_table\_N}(\varphi' - 3N/4) \qquad \qquad \lfloor 3N/4 \rfloor \le \varphi' < N,$$

wherein

φ indicates the elevation information of the location information, or φ indicates the elevation information of the reference point corresponding to the elevation information of the location information, and sin_table_N() indicates the elevation trigonometric function table; and

when M≠N, the trigonometric function value corresponding to the azimuth information of the location information meets the following formulas:

$$\sin(\theta) = \text{sin\_table\_M}(\theta') \qquad \qquad \theta' < \lfloor M/4 \rfloor$$

$$\sin(\theta) = \text{sin\_table\_M}(M/2 - \theta') \qquad \qquad \lfloor M/4 \rfloor \le \theta' < \lfloor M/2 \rfloor$$

$$\sin(\theta)=-\text{sin\_table\_M}(\theta'-M/2) \qquad \lfloor M/2 \rfloor \leq \theta' < \lfloor 3M/4 \rfloor$$

$$\sin(\theta)=-\text{sin\_table\_M}(M-\theta') \qquad \lfloor 3M/4 \rfloor \leq \theta' < M$$

$$\cos(\theta)=\text{sin\_table\_M}(M/4-\theta') \qquad \theta' < \lfloor M/4 \rfloor$$

$$\cos(\theta)=-\text{sin\_table\_M}(\theta'-M/4) \qquad \lfloor M/4 \rfloor \leq \theta' < \lfloor M/2 \rfloor$$

$$\cos(\theta)=-\text{sin\_table\_M}(3M/4-\theta') \qquad \lfloor M/2 \rfloor \leq \theta' < \lfloor 3M/4 \rfloor$$

$$\cos(\theta)=\text{sin\_table\_M}(\theta'-3M/4) \qquad \lfloor 3M/4 \rfloor \leq \theta' < M,$$

wherein
θ indicates the azimuth information of the location information, or θ indicates the azimuth information of the reference point corresponding to the azimuth information of the location information, and sin_table_M() indicates the azimuth trigonometric function table;
or
when M=N, the trigonometric function value corresponding to the elevation information of the location information meets the following formulas:

$$\sin(\varphi)=\text{sin\_table}(\varphi') \qquad \varphi' < \lfloor N/4 \rfloor$$

$$\sin(\varphi)=\text{sin\_table}(N/2-\varphi') \qquad \lfloor N/4 \rfloor \leq \varphi' < \lfloor N/2 \rfloor$$

$$\sin(\varphi)=-\text{sin\_table}(\varphi'-N/2) \qquad \lfloor N/2 \rfloor \leq \varphi' < \lfloor 3N/4 \rfloor$$

$$\sin(\varphi)=-\text{sin\_table}(N-\varphi') \qquad \lfloor 3N/4 \rfloor \leq \varphi' < N$$

$$\cos(\varphi)=\text{sin\_table}(N/4-\varphi') \qquad \varphi' < \lfloor N/4 \rfloor$$

$$\cos(\varphi)=-\text{sin\_table}(\varphi'-N/4) \qquad \lfloor N/4 \rfloor \leq \varphi' < \lfloor N/2 \rfloor$$

$$\cos(\varphi)=-\text{sin\_table}(3N/4-\varphi') \qquad \lfloor N/2 \rfloor \leq \varphi' < \lfloor 3N/4 \rfloor$$

$$\cos(\varphi)=\text{sin\_table}(\varphi'-3N/4) \qquad \lfloor 3N/4 \rfloor \leq \varphi' < N,$$

wherein
φ indicates the elevation information of the location information, or φ indicates the elevation information of the reference point corresponding to the elevation information of the location information, and sin_table_N() indicates the elevation trigonometric function table; and
when M=N, the trigonometric function value corresponding to the azimuth information of the location information meets the following formulas:

$$\sin(\theta)=\text{sin\_table}(\theta') \qquad \theta'<\lfloor N/4 \rfloor$$

$$\sin(\theta)=\text{sin\_table}(N/2-\theta') \qquad \lfloor N/4 \rfloor \leq \theta' < \lfloor N/2 \rfloor$$

$$\sin(\theta)=-\text{sin\_table}(\theta'-N/2) \qquad \lfloor N/2 \rfloor \leq \theta' < \lfloor 3N/4 \rfloor$$

$$\sin(\theta)=-\text{sin\_table}(N-\theta') \qquad \lfloor 3N/4 \rfloor \leq \theta' < N$$

$$\cos(\theta)=\text{sin\_table}(N/4-\theta') \qquad \theta'<\lfloor N/4 \rfloor$$

$$\cos(\theta)=-\text{sin\_table}(\theta'-N/4) \qquad \lfloor N/4 \rfloor \leq \theta' < \lfloor N/2 \rfloor$$

$$\cos(\theta)=-\text{sin\_table}(3N/4-\theta') \qquad \lfloor N/2 \rfloor \leq \theta' < \lfloor 3N/4 \rfloor$$

$$\cos(\theta)=\text{sin\_table}(\theta'-3N/4) \qquad \lfloor 3N/4 \rfloor \leq \theta' < N,$$

wherein
$\theta$ indicates the azimuth information of the location information, or $\theta$ indicates the azimuth information of the reference point corresponding to the azimuth information of the location information, sin_table_N() indicates the elevation trigonometric function table, and the elevation trigonometric function table comprises a plurality of sine function values corresponding to the elevation information of the plurality of first reference points;
or
when M≠N, M=K1 ×N, and K1≥2, the trigonometric function value corresponding to the azimuth information of the location information meets the following formulas:

$$\sin(\theta)=\text{sin\_table\_M}(\theta') \qquad \theta'<\lfloor M/4 \rfloor$$

$$\sin(\theta)=\text{sin\_table\_M}(M/2-\theta') \qquad \lfloor M/4 \rfloor \leq \theta' < \lfloor M/2 \rfloor$$

$$\sin(\theta)=-\text{sin\_table\_M}(\theta'-M/2) \qquad \lfloor M/2 \rfloor \leq \theta' < \lfloor 3M/4 \rfloor$$

$$\sin(\theta)=-\text{sin\_table\_M}(M-\theta') \qquad \lfloor 3M/4 \rfloor \leq \theta' < M$$

$$\cos(\theta)=\text{sin\_table\_M}(M/4-\theta') \qquad \theta'<\lfloor M/4 \rfloor$$

$$\cos(\theta)=-\text{sin\_table\_M}(\theta'-M/4) \qquad \lfloor M/4 \rfloor \leq \theta' < \lfloor M/2 \rfloor$$

$$\cos(\theta)=-\text{sin\_table\_M}(3M/4-\theta') \qquad \lfloor M/2 \rfloor \leq \theta' < \lfloor 3M/4 \rfloor$$

$$\cos(\theta)=\text{sin\_table\_M}(\theta'-3M/4) \qquad \lfloor 3M/4 \rfloor \leq \theta' < M,$$

wherein

$\theta$ indicates the azimuth information of the location information, or $\theta$ indicates the azimuth information of the reference point corresponding to the azimuth information of the location information, sin table_M() indicates the azimuth trigonometric function table, and the azimuth trigonometric function table comprises a plurality of sine function values corresponding to the azimuth information of the plurality of second reference points; and when $M \neq N$, $M = K1 \times N$, and $K1 \geq 2$, the trigonometric function value corresponding to the elevation information of the location information meets the following formulas:

$$\sin(\varphi) = \text{sin\_table\_M}(K1 \times \varphi') \qquad\qquad K1 \times \varphi' < \lfloor M/4 \rfloor$$

$$\sin(\varphi) = \text{sin\_table\_M}(M/2 - K1 \times \varphi') \qquad\qquad \lfloor M/4 \rfloor \leq K1 \times \varphi' < \lfloor M/2 \rfloor$$

$$\sin(\varphi) = -\text{sin\_table\_M}(K1 \times \varphi' - M/2) \qquad\qquad \lfloor M/2 \rfloor \leq K1 \times \varphi' < \lfloor 3M/4 \rfloor$$

$$\sin(\varphi) = -\text{sin\_table\_M}(M - K1 \times \varphi') \qquad\qquad \lfloor 3M/4 \rfloor \leq K1 \times \varphi' < M$$

$$\cos(\varphi) = \text{sin\_table\_M}(M/4 - K1 \times \varphi') \qquad\qquad K1 \times \varphi' < \lfloor M/4 \rfloor$$

$$\cos(\varphi) = -\text{sin\_table\_M}(K1 \times \varphi' - M/4) \qquad\qquad \lfloor M/4 \rfloor \leq K1 \times \varphi' < \lfloor M/2 \rfloor$$

$$\cos(\varphi) = -\text{sin\_table\_M}(3M/4 - K1 \times \varphi') \qquad\qquad \lfloor M/2 \rfloor \leq K1 \times \varphi' < \lfloor 3M/4 \rfloor$$

$$\cos(\varphi) = \text{sin\_table\_M}(K1 \times \varphi' - 3M/4) \qquad\qquad \lfloor 3M/4 \rfloor \leq K1 \times \varphi' < M,$$

wherein
$\varphi$ indicates the elevation information of the location information, or $\varphi$ indicates the elevation information of the reference point corresponding to the elevation information of the location information, and sin_table _M() indicates the azimuth trigonometric function table;
or
when $M \neq N$, $N = K2 \times M$, and $K2 \geq 2$, the trigonometric function value corresponding to the elevation information of the location information meets the following formulas:

$$\sin(\varphi) = \text{sin\_table\_N}(\varphi') \qquad\qquad \varphi' < \lfloor N/4 \rfloor$$

$$\sin(\varphi) = \text{sin\_table\_N}(N/2 - \varphi') \qquad\qquad \lfloor N/4 \rfloor \leq \varphi' < \lfloor N/2 \rfloor$$

$$\sin(\varphi) = -\text{sin\_table\_N}(\varphi' - N/2) \qquad\qquad \lfloor N/2 \rfloor \leq \varphi' < \lfloor 3N/4 \rfloor$$

$$\sin(\varphi) = -\text{sin\_table\_N}(N - \varphi') \qquad\qquad \lfloor 3N/4 \rfloor \leq \varphi' < N$$

$$\cos(\varphi) = \text{sin\_table\_N}(N/4 - \varphi') \qquad\qquad \varphi' < \lfloor N/4 \rfloor$$

$$\cos(\varphi) = -\text{sin\_table\_N}(\varphi' - N/4) \qquad\qquad \lfloor N/4 \rfloor \leq \varphi' < \lfloor N/2 \rfloor$$

$$\cos(\varphi)=-\sin\_table\_N(3N/4-\varphi') \qquad \lfloor N/2 \rfloor \le \varphi' < \lfloor 3N/4 \rfloor$$

$$\cos(\varphi)=\sin\_table\_N(\varphi'-3N/4) \qquad \lfloor 3N/4 \rfloor \le \varphi' < N,$$

wherein
$\varphi$ indicates the elevation information of the location information, or $\varphi$ indicates the elevation information of the reference point corresponding to the elevation information of the location information, and sin_table_N() indicates the elevation trigonometric function table; and
when M≠N, N=K2×M, and K2≥2, the trigonometric function value corresponding to the azimuth information of the location information meets the following formulas:

$$\sin(\theta)=\sin\_table\_N(K2 \times \theta') \qquad K2 \times \theta' < \lfloor N/4 \rfloor$$

$$\sin(\theta)=\sin\_table\_N(N/2-K2 \times \theta') \qquad \lfloor N/4 \rfloor \le K2 \times \theta' < \lfloor N/2 \rfloor$$

$$\sin(\theta)=-\sin\_table\_N(K2 \times \theta'-N/2) \qquad \lfloor N/2 \rfloor \le K2 \times \theta' < \lfloor 3N/4 \rfloor$$

$$\sin(\theta)=-\sin\_table\_N(N-K2 \times \theta') \qquad \lfloor 3N/4 \rfloor \le K2 \times \theta' < N$$

$$\cos(\theta)=\sin\_table\_N(N/4-K2 \times \theta') \qquad K2 \times \theta' < \lfloor N/4 \rfloor$$

$$\cos(\theta)=-\sin\_table\_N(K2 \times \theta'-N/4) \qquad \lfloor N/4 \rfloor \le K2 \times \theta' < \lfloor N/2 \rfloor$$

$$\cos(\theta)=-\sin\_table\_N(3N/4-K2 \times \theta') \qquad \lfloor N/2 \rfloor \le K2 \times \theta' < \lfloor 3N/4 \rfloor$$

$$\cos(\theta)=\sin\_table\_N(K2 \times \theta'-3N/4) \qquad \lfloor 3N/4 \rfloor \le K2 \times \theta' < N,$$

wherein
$\theta$ indicates the azimuth information of the location information, or $\theta$ indicates the azimuth information of the reference point corresponding to the azimuth information of the location information, and sin table_N() indicates the elevation trigonometric function table;
or
when M≠N, the trigonometric function value corresponding to the elevation information of the location information meets the following formulas:

$$\sin(\theta)=\cos\_table\_N(N/4-\theta') \qquad \theta' < \lfloor N/4 \rfloor$$

$$\sin(\theta)=\cos\_table\_N(\theta'-N/4) \qquad \lfloor N/4 \rfloor \le \theta' < \lfloor N/2 \rfloor$$

$$\sin(\theta)=-\cos\_table\_N(3N/4-\theta') \qquad \lfloor N/2 \rfloor \le \theta' < \lfloor 3N/4 \rfloor$$

$$\sin(\theta)=-\cos\_table\_N(\theta'-3N/4) \qquad \lfloor 3N/4 \rfloor \le \theta' < N$$

$$\cos(\theta)=\cos\_table\_N(\theta') \qquad\qquad \theta'<\lfloor N/4\rfloor$$

$$\cos(\theta)=-\cos\_table\_N(N/2-\theta') \qquad\qquad \lfloor N/4\rfloor\le\theta'<\lfloor N/2\rfloor$$

$$\cos(\theta)=-\cos\_table\_N(\theta'-N/2) \qquad\qquad \lfloor N/2\rfloor\le\theta'<\lfloor 3N/4\rfloor$$

$$\cos(\theta)=\cos\_table\_N(N-\theta') \qquad\qquad \lfloor 3N/4\rfloor\le\theta'<N,$$

wherein

$\varphi$ indicates the elevation information of the location information, or $\varphi$ indicates the elevation information of the reference point corresponding to the elevation information of the location information, and cos_table_N() indicates the elevation trigonometric function table; and

when M≠N, the trigonometric function value corresponding to the azimuth information of the location information meets the following formulas:

$$\sin(\theta)=\cos\_table\_M(M/4-\theta') \qquad\qquad \theta'<\lfloor M/4\rfloor$$

$$\sin(\theta)=\cos\_table\_M(\theta'-M/4) \qquad\qquad \lfloor M/4\rfloor\le\theta'<\lfloor M/2\rfloor$$

$$\sin(\theta)=-\cos\_table\_M(3M/4-\theta') \qquad\qquad \lfloor M/2\rfloor\le\theta'<\lfloor 3M/4\rfloor$$

$$\sin(\theta)=-\cos\_table\_M(\theta'-3M/4) \qquad\qquad \lfloor 3M/4\rfloor\le\theta'<M$$

$$\cos(\theta)=\cos\_table\_M(\theta') \qquad\qquad \theta'<\lfloor M/4\rfloor$$

$$\cos(\theta)=-\cos\_table\_M(M/2-\theta') \qquad\qquad \lfloor M/4\rfloor\le\theta'<\lfloor M/2\rfloor$$

$$\cos(\theta)=-\cos\_table\_M(\theta'-M/2) \qquad\qquad \lfloor M/2\rfloor\le\theta'<\lfloor 3M/4\rfloor$$

$$\cos(\theta)=\cos\_table\_M(M-\theta') \qquad\qquad \lfloor 3M/4\rfloor\le\theta'<M,$$

wherein

$\theta$ indicates the azimuth information of the location information, or $\theta$ indicates the azimuth information of the reference point corresponding to the azimuth information of the location information, and cos_table_M() indicates the azimuth trigonometric function table.

24. The apparatus according to any one of claims 13 to 23, wherein N reference points located on one circle of longitude are arranged at equal spacings, and M reference points located on one circle of latitude are arranged at equal spacings.

25. An audio processing device, comprising:

one or more processors; and
a memory, configured to store one or more programs, wherein
when the one or more programs are executed by the one or more processors, the one or more processors are enabled to implement the method according to any one of claims 1 to 12.

**26.** A computer-readable storage medium, comprising a computer program, wherein when the computer program is executed on a computer, the computer is enabled to perform the method according to any one of claims 1 to 12.

FIG. 1

10

Source device 12

Audio source 16

↓

Audio pre-processor 18

↓

Encoder 20

↓

Communication interface 22

Destination device 14

Play device 34

↑

Audio post-processor 32

↑

Decoder 30

↑

Communication interface 28

Communication channel 13

FIG. 2

Virtual speaker configuration unit

Encoding analysis unit

Virtual speaker set generation unit

Core encoder processing unit

Bitstream information

To-be-encoded HOA signal

Virtual speaker selection unit

Virtual speaker signal generation unit

FIG. 3

400

| Obtain location information of a virtual speaker on a preset spherical surface, where the location information includes elevation information and/or azimuth information | 401 |

| Obtain, based on the location information and a preset reference trigonometric function table, a trigonometric function value corresponding to the location information | 402 |

| Obtain an HOA coefficient for the virtual speaker based on the trigonometric function value corresponding to the location information | 403 |

FIG. 4

FIG. 5

Up

Right

Elevation

Front

Azimuth

Rear

Left

Down

FIG. 6

Obtaining module — 701

Calculation module — 702

FIG. 7

## INTERNATIONAL SEARCH REPORT

| | International application No. |
|---|---|
| | **PCT/CN2022/078823** |

**A. CLASSIFICATION OF SUBJECT MATTER**

H04R 5/02(2006.01)i

According to International Patent Classification (IPC) or to both national classification and IPC

**B. FIELDS SEARCHED**

Minimum documentation searched (classification system followed by classification symbols)

H04R

Documentation searched other than minimum documentation to the extent that such documents are included in the fields searched

Electronic data base consulted during the international search (name of data base and, where practicable, search terms used)

WPABSC; CNTXT; WPABS; ENTXT; CJFD; DWPI; ENTXTC; VEN: 球面, 三角函数, 系数, HOA, 虚拟扬声器, spherical, angular, function?, weight?, virtual, loudspeaker? , high-order, ambisonics

**C. DOCUMENTS CONSIDERED TO BE RELEVANT**

| Category* | Citation of document, with indication, where appropriate, of the relevant passages | Relevant to claim No. |
|---|---|---|
| A | US 10015618 B1 (GOOGLE INC. et al.) 03 July 2018 (2018-07-03)<br>claims 1-3, and description, column 2, line 52- column 14, line 66 | 1-26 |
| A | US 2014355768 A1 (QUALCOMM INCORPORATED) 04 December 2014 (2014-12-04)<br>entire document | 1-26 |
| A | US 2014358557 A1 (QUALCOMM INCORPORATED) 04 December 2014 (2014-12-04)<br>entire document | 1-26 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **03 May 2022** | **01 June 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/078823**

| Patent document cited in search report | | | Publication date (day/month/year) | Patent family member(s) | | | Publication date (day/month/year) |
|---|---|---|---|---|---|---|---|
| US | 10015618 | B1 | 03 July 2018 | KR | 20200003051 | A | 08 January 2020 |
| | | | | JP | 2020522189 | A | 27 July 2020 |
| | | | | CN | 110583030 | A | 17 December 2019 |
| | | | | WO | 2019027613 | A1 | 07 February 2019 |
| | | | | EP | 3625975 | A1 | 25 March 2020 |
| US | 2014355768 | A1 | 04 December 2014 | EP | 3005357 | A1 | 13 April 2016 |
| | | | | CN | 105247612 | A | 13 January 2016 |
| | | | | WO | 2014194001 | A1 | 04 December 2014 |
| | | | | KR | 20160012215 | A | 02 February 2016 |
| | | | | JP | 2016524726 | A | 18 August 2016 |
| US | 2014358557 | A1 | 04 December 2014 | TW | 201503110 | A | 16 January 2015 |
| | | | | WO | 2014194003 | A1 | 04 December 2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110246382